# EUROPÄISCHE PATENTSCHRIFT

(11) **EP 3 033 501 B1**
(45) Veröffentlichungstag und Bekanntmachung des Hinweises auf die Patenterteilung: **17.05.2023**
(21) Anmeldenummer: 14752274.2
(22) Anmeldetag: 12.08.2014
(51) Int. Cl.: F01L 13/06, F02D 13/04, F02D 13/02, F01L 1/18

(54) **VENTILBETÄTIGUNGSEINRICHTUNG ZUR VERÄNDERUNG DES VENTILHUBS**
VALVE-ACTUATING DEVICE FOR CHANGING THE VALVE STROKE
DISPOSITIF D'ACTIONNEMENT DE SOUPAPE PERMETTANT DE MODIFIER LA COURSE DE SOUPAPE

(30) Priorität: 12.08.2013 DE 102013215946
(43) Veröffentlichungstag der Anmeldung: 22.06.2016
(73) Patentinhaber: AVL List GmbH, 8020 Graz (AT)
(72) Erfinder: TOTH, Gyula, 2142 Nagytarcsa (HU); GROEGER, Michael, AT-8712 Proleb (AT)
(74) Vertreter: Hahner, Ralph
(86) Internationale Anmeldenummer: PCT/EP2014/002214
(87) Internationale Veröffentlichungsnummer: WO 2015/022071

(56) Entgegenhaltungen:
- EP-A1- 0 167 267
- EP-A2- 2 520 773
- WO-A1-2012/038195
- WO-A1-2012/174697
- US-A1- 2010 108 007
- US-B1- 6 293 248
- US-B1- 6 314 926
- US-B1- 7 712 449

## Beschreibung

Die Erfindung betrifft eine Ventilbetätigungseinrichtung mit einem ersten Schaltelement zur Veränderung des Ventilhubs zumindest eines ersten Ventils.

Aufgrund der immer höheren Anforderungen in Bezug auf Leistung, Effizienz und Emissionen gewinnen variable Ventiltriebe bei Verbrennungskraftmaschinen, insbesondere solchen im Vier-Takt-Betrieb, mehr und mehr an Bedeutung.

Mit den variablen Ventiltrieben kann dabei der Notwendigkeit der Motorenkonstrukteure und dem Wunsch der Thermodynamiker entsprochen werden, verschiedene Ventilhubkurven auf ein Motorventil alternativ zu übertragen, wobei sowohl der Ventilhub als auch die Öffnungs- und Schließzeitpunkte angepasst werden können. Dies wird im Allgemeinen durch eine Umschaltung in dem Übertragungsweg des Ventiltriebs erreicht. Hubumschaltungs- und Hubabschaltungssysteme mit schaltbaren Nockenfolgern, wie Tassenstösseln, Rollenstösseln oder Kipphebeln sind in verschiedenen Anwendungen in Serie. Dabei gilt, dass für jeden weiteren Alternativ-Ventilhub auch ein entsprechender Nocken als hubgebendes Element vorhanden sein muss - es sei denn, der Alternativ-Hub ist ein Nullhub.

Dabei gibt es ganz unterschiedliche Anwendungsbereiche für den Einsatz von variablen Ventiltrieben. Einige Beispiele werden im Folgenden aufgezählt:
Hubumschaltung: Die Hubumschaltung ermöglicht die betriebspunktabhängige Nutzung von mindestens zwei verschiedenen Ventilerhebungen. Hierbei kommt ein speziell auf den Teillastbereich abgestimmter kleinerer Ventilhub zum Einsatz, welcher den Drehmomentverlauf verbessert und den Verbrauch und die Emissionen reduziert. Der große Ventilhub kann auf weitere Leistungssteigerungen optimiert werden. Ein kleinerer Ventilhub mit geringerem Maximal-Hub und kürzerer Länge des Ereignisses ermöglicht durch einen deutlichen früheren Einlassschließzeitpunkt und der Entdrosselung im Ansaugtrakt eine Verringerung der Ladungswechsel-Arbeit (Miller-Zyklus). Ähnliche Resultate sind mit dem Atkinson-Zyklus, d.h. extrem späten Einlassschluss möglich. Eine optimale Füllung des Verbrennungsraums bewirkt dabei im Teillastbereich auch eine Drehmoment-Steigerung.

Zylinderabschaltung: Die Zylinderabschaltung wird vorwiegend bei großvolumigen, vielmotorzylindrigen Motoren (z.B. mit vier, acht, zehn oder zwölf Motorzylindern) eingesetzt. Dabei werden ausgewählte Motorzylinder durch Hubabschaltung an den Ein- und Auslassventilen stillgelegt; es findet dabei eine komplette Entkoppelung vom Nockenhub statt. Aufgrund von äquidistanten Zündfolgen lassen sich damit gängige V8- und V12-Triebwerke auf A4- bzw. R6-Motoren umschalten. Der Zweck der MotorzylinderAbschaltung liegt darin, die Ladungswechsel-Verluste zu minimieren und eine Betriebspunkt-Verlagerung hin zu höheren Mitteldrücken und damit höheren thermodynamischen Wirkungsgraden durchzuführen, wodurch erhebliche Kraftstoffeinsparungen erreicht werden können.

Motorbremsbetrieb: Es ist bekannt, in den Motorzylindern einer Verbrennungskraftmaschine zusätzliche Makroventile vorzusehen, mit welchen ein sogenanntes Dekompressionsbremsen durchgeführt werden kann, in dem am Ende des Verdichtungstakts eines Vier-Takt-Motors d.h. am Ende des zweites Taktes eine Dekompression des Zylinders über die zusätzlichen Motorventile durchgeführt wird, wodurch die an dem verdichteten Gas verrichtete Arbeit über das Abgassystem der Verbrennungskraftmaschine entweicht. Weiterhin muss die Verbrennungskraftmaschine wiederum Arbeit aufwenden, um den Zylinder von neuem mit Gas zu befüllen.

Des Weiteren sind Motorbremsen bekannt, welche die Bremswirkung über einen variablen Ventilbetrieb der eigentlichen Auslassventile erreichen.

Motorbremssysteme erlangen in Fahrzeug-Verbrennungskraftmaschinen, insbesondere für Nutzfahrzeuge, zunehmend an Bedeutung, da es sich bei diesen um kostengünstige und platzsparende Zusatzbremssysteme handelt, welche die Radbremsen, insbesondere bei längeren abschüssigen Fahrten, entlasten können. Zusätzlich bedingt die Steigerung der spezifischen Leistung moderner Nutzfahrzeugmotoren auch die Anhebung der zu erreichenden Bremsleistung.

Vor diesem Hintergrund beschreibt die DE 39 36 808 A1 ein Verfahren, um die oft nicht ausreichende unterstützende Bremswirkung von Verbrennungsmotoren durch eine Zusatzeinrichtung zu verbessern. Dies wird ermöglicht, indem die Auslasssteuerung ungefähr einen Arbeitshub, also 180° des Kurbelwellenwinkels (KW) bzw. 90° des Nockenwellenwinkels (NW) vorverstellt wird. Das bedeutet, dass der Auslass schon am Ende des Verdichtungstakts öffnet und das gespannte Gas aus dem Zylinder freigibt und dem anschließenden Abwärtshub des Kolbens erneut Gas durch den Auslass eingesaugt wird. Durch die Vorverlegung der Auslasssteuerzeiten findet im Arbeitsmodus des Motors vorgegebenen Auslass-Hub im Modus Bremsbetrieb eine Verdichtung statt, da die Auslass-Ventile ihren Öffnungshub beendet haben. Das verdichtete Gas entweicht bei Öffnung der Einlass-Ventile, danach erfolgt im Abwärtshub des Kolbens unmittelbar wieder eine Füllung. Jeder Kolbenhub im Modus Bremsbetrieb des Motors bedeutet also eine Verdichtung mit unmittelbar anschließendem Abblasen des gespannten bzw. verdichteten Gases.

Auch die US 6 000 374 betrifft ein Dekompressions-Motorbremssystem. Hierbei wird ein "Zwei-Zyklen-Bremsen" vorgeschlagen, welches die Bremswirkung verstärkt, indem zwei Bremsereignisse, eines pro Kurbelwellen-Umdrehung, für jeden Zylinder der Maschine erzeugt werden. Hierfür ist eine Dual-Nockenwellenanordnung mit einem zusätzlichen Kipphebel vorgesehen, welcher für eine Motorbremsanordnung vom Typ Dekompressionsbremse gewidmet ist.

Die WO 2012/038190 A1 betrifft eine Viertakt-Brennkraftmaschine mit einer Motorbremse, mit zumindest einem über einen Nocken einer Nockenwelle und zumindest eine erste Ventilhebelanordnung betätigten Auslassventil pro Zylinder, wobei die erste Ventilhebelanordnung einen nockenseitigen ersten Hebelarm und einen auslassventilseitigen zweiten Hebelarm aufweist, mit einer Einrichtung zur Vorverstellung der Auslasssteuerung, wobei die erste Ventilhebelanordnung ein Schaltorgan zum Verstellen des nockenseitigen ersten Hebelarmes zwischen einer Arbeitsstellung und einer Bremsstellung aufweist und am ersten Hebelarm der ersten Ventilhebelanordnung eine nockenbetätigte zweite Ventilhebelanordnung angreift.

Die 2012/038191 A1 betrifft eine Viertakt-Brennkraftmaschine mit einer Motorbremse, mit zumindest einem über eine Nockenwelle und zumindest eine Ventilhebelanordnung betätigten Auslassventil pro Zylinder, sowie mit einer Einrichtung zur Vorverstellung der Auslasssteuerung, wobei die Ventilhebelanordnung einen durch einen Auslassnocken betätigten Auslasshebel und einen durch einen Bremsnocken betätigbaren Bremshebel aufweist, wobei der Bremshebel über ein zwischen Bremshebel und Bremsnocken angeordnetes schaltbares erstes Übertragungsglied betätigbar ist, wobei der Bremshebel in einer ersten Stellung des ersten Übertragungsgliedes aktiviert und in einer zweiten Stellung des ersten Übertragungsgliedes deaktiviert ist.

Die WO 2012/038195 A1 betrifft eine Viertakt-Brennkraftmaschine mit einer Motorbremse, mit zumindest einem über eine Nockenwelle und zumindest eine Ventilhebelanordnung betätigten Auslassventil pro Zylinder, sowie mit einer Einrichtung zur Vorverstellung der Auslasssteuerung, wobei die Ventilhebelanordnung einen durch einen Auslassnocken betätigten Auslasshebel und einen durch einen Bremsnocken betätigbaren Bremshebel aufweist, wobei der Bremshebel einen nockenwellenseitigen ersten Bremshebelteil und einen auslassventilseitigen zweiten Bremshebelteil aufweist, wobei die beiden Bremshebelteile unabhängig voneinander drehbar um eine Hebelachse gelagert und durch ein zwischen zwei Stellungen verstellbares Arretierelement im Motorbremsbetrieb miteinander drehverbindbar sind, wobei der Auslasshebel einen nockenwellenseitigen ersten Auslasshebelteil und einen auslassventilseitigen zweiten Auslasshebelteil aufweist, wobei die beiden Auslasshebelteile unabhängig voneinander drehbar um die Hebelachse gelagert und durch das Arretierelement außerhalb des Motorbremsbetriebes miteinander drehverbindbar sind.

Die US 6 341 926 B1 betrifft eine Ventilsteuerungsvorrichtung für eine Brennkraftmaschine mit einem Ventil und einer Nockenwelle. Die Nockenwelle weist eine Rotationsachse, einen ersten Nocken und einen zweiten Nocken auf, welcher zum ersten Nocken benachbart ist. Der zweite Nocken ist von dem ersten Nocken entlang der Achse schräg beabstandet. Die Vorrichtung weist einen Folger auf, welcher mit der Nockenwelle und dem Ventil verbindbar ist. Der Folger weist einen ersten Betriebszustand, in welchem der erste Nocken mit dem Folger bei jeder Umdrehung der Nockenwelle in Eingriff steht, um das Ventil ein erstes Mal bei jeder Umdrehung zu öffnen. Ebenfalls ist ein Mechanismus zum selektiven Stellen des Folgers in einen zweiten Betriebszustand offenbart, in welchem der zweite Nocken mit dem Folger in Eingriff steht, um das Ventil ein zweites Mal bei jeder Umdrehung der Nockenwelle zu öffnen.

Die EP 2 520 773 A2 betrifft eine Brennkraftmaschine mit mindestens einem Brennraum, aus dem mittels mindestens eines Auslassventils Abgas abführbar ist, umfassend eine Motorbremseinrichtung mit einer hydraulischen Ventil-Zusatzsteuereinheit, die in einen das Auslassventil mit einer Nockenwelle verbindenden Verbindungsmechanismus integriert ist und die das Auslassventil bei betätigter Motorbremseinrichtung in einer zwischengeöffneten Stellung hält, und einen hydraulischen Ventilspielausgleichsmechanismus für das Auslassventil, wobei der Verbindungsmechanismus zumindest einen Kipphebel und ein zwischen dem Kipphebel und dem Auslassventil angeordnetes Zwischenelement umfasst und die hydraulische Ventil-Zusatzsteuereinheit der Motorbremseinrichtung eine erste Kolben-Zylinder-Einheit zur temporären Zwischenöffnung eines Auslassventils umfasst und der hydraulische Ventilspielausgleichsmechanismus eine zweite Kolben-Zylinder-Einheit zum Entgegenwirken eines Ventilspiels umfasst, wobei die erste Kolben-Zylinder-Einheit im oder am Zwischenelement und die zweite Kolben-Zylinder-Einheit im oder am Kipphebel angeordnet ist.

Die Systeme des Stands der Technik zur Realisierung variabler Ventiltriebe, unabhängig von den oben genannten Anwendungsbeispielen, weisen eine relativ hohe Anzahl an

Einzelteilen auf, die sich zu der übrigen Mechanik des Motors addieren. Insbesondere bei Motorbremssystemen, bei denen zusätzliche Ventile für die Abgasstauung und/oder die Dekompression vorgesehen sind, müssen alle wesentlichen Komponenten für eine zweite Ventilsteuerung mit zusätzlicher Ventilbetätigungsvorrichtung vorhanden sein. Des Weiteren sind im Regelfall eigene Steuerelektroniken vorgesehen, um die zusätzlichen Komponenten für den gewünschten Anwendungsfall zu steuern. Die zusätzlichen Komponenten und Steuerelemente erhöhen die Komplexität der gesamten Verbrennungskraftmaschine und führen zu einer größeren Störanfälligkeit. Auch der Fertigungsaufwand für Verbrennungskraftmaschinen mit variablem Ventiltrieb ist höher. Dies nicht zuletzt aufgrund der Tatsache, dass Systeme für variablen Ventiltrieb einen hohen Bauaufwand erfordern, was dazu führt, dass sie vergleichsweise viel Raum im Bereich des Zylinderkopfs beanspruchen. Dieser Raum ist gerade im Bereich des Zylinderkopfs sehr begrenzt und steht bei vielen Motoren für bekannte Systeme für variablen Ventiltrieb gar nicht zur Verfügung oder kann nur schwer bereitgestellt werden. Des Weiteren ist häufig ein zusätzliches Hochdruckölsystem mit Hochdruckpumpe vorgesehen, um die zusätzlichen Komponenten hydraulisch anzusteuern. Wie jedes hydraulische System im Fahrzeug unterliegt auch dieses Undichtigkeiten und erhöht dadurch die Störanfälligkeit der Verbrennungskraftmaschine weiter.

Das Dokument WO 1012/038195 A1 betrifft eine Viertakt-Brennkraftmaschine mit einer Motorbremse mit zumindest einem, über eine Nockenwelle und zumindest eine Ventilhebelanordnung, betätigtem Auslassventil pro Zylinder, sowie mit einer Einrichtung zur Vorverstellung der Auslasssteuerung, wobei die Ventilhebelanordnung ein durch einen Auslassnocken betätigten Auslasshebel und einen durch einen Bremsnocken betätigten Bremshebel aufweist, wobei der Bremshebel einen nockwellenseitigen ersten Bremshebelteil und einen auslassventilseitigen zweiten Bremshebelteil aufweist, wobei die beiden Bremshebelteile unabhängig voneinander drehbar um eine Hebelachse gelagert und durch ein zwischen zwei Stellungen verstellbares Arrietierelement im Motorbremsbetrieb miteinander drehverbindbar sind.

Dokument US 6,293,248 B1 betrifft eine Zweitakt-Kompressionsbremsen-Vorrichtung und ein entsprechendes Bremsverfahren. Die Vorrichtung weist eine hydraulische Ventilspieleinstellvorrichtung für positive Leistung auf, welche in einem Arbeitsweg eines Leistungsventilhebels liegt und eingerichtet ist, zumindest ein zugeordnetes Ventil zu öffnen, wenn eine hydraulische Flüssigkeit in der hydraulischen Ventilspieleinstellvorrichtung für positive Leistung gehalten wird, sowie eine hydraulische Ventilspieleinstellvorrichtung für Kompressionsbremsen, welche in einem Ventilhebel zum Kompressionsbremsen angeordnet ist und über dem zugeordneten zumindest einen Maschinenventil angeordnet ist und eingerichtet ist, das zugeordnete zumindest eine Ventil zu öffnen, wenn hydraulische Flüssigkeit in der hydraulischen Ventilspieleinstellvorrichtung für Kompressionsbremsen gehalten wird.

Die US 6 314 926 B1 betrifft eine Ventilsteuerungsvorrichtung für eine Brennkraftmaschine mit einem Ventil und einer Nockenwelle. Die Nockenwelle weist eine Rotationsachse, einen ersten Nocken und einen zweiten Nocken auf, welcher zum ersten Nocken benachbart ist. Der zweite Nocken ist von dem ersten Nocken entlang der Achse schräg beabstandet. Die Vorrichtung weist einen Folger auf, welcher mit der Nockenwelle und dem Ventil verbindbar ist. Der Folger weist einen ersten Betriebszustand, in welchem der erste Nocken mit dem Folger bei jeder Umdrehung der Nockenwelle in Eingriff steht, um das Ventil ein erstes Mal bei jeder Umdrehung zu öffnen, auf. Ferner wird ein Mechanismus zum selektiven Stellen des Folgers in einen zweiten Betriebszustand, in welchem der zweite Nocken mit dem Folger in Eingriff steht, um das Ventil ein zweites Mal bei jeder Umdrehung der Nockenwelle zu öffnen, offenbart.

Es ist die Aufgabe der Erfindung, ein Verfahren mit relativ geringer Komplexität bereit zu stellen, welches einen variablen Ventiltrieb einer Hubkolbenmaschine, insbesondere einer Verbrennungskraftmaschine, ermöglicht und dabei eine optimierte Betätigung der Ventile, insbesondere in Bezug auf Effizienz, Emissions- und Lärmreduzierung und/oder in Bezug auf den Motorbremsbetrieb, ermöglicht.

Diese Aufgabe wird erfindungsgemäß durch ein Verfahren zur Ventilsteuerung nach Anspruch 1 und ein Verfahren zur Ventilbetätigung nach Anspruch 16 gelöst. Vorteilhafte Ausgestaltungen werden in den Unteransprüchen beansprucht.

Eine Motorbremse im Sinne der Erfindung ist jener mechanische Widerstand, den eine Verbrennungskraftmaschine einem von außen aufgezwungenen Drehmoment entgegensetzt.

Ein Kipphebelteil im Sinne der Erfindung ist ein Abschnitt eines Ventilhebels, welcher zur Übertragung einer Bewegung von einer Nockenwelle zu einem Ventil einer Hubkolbenmaschine, insbesondere einer Verbrennungskraftmaschine, dient, wobei der Ventilhebel insbesondere als Schlepphebel oder Kipphebel ausgebildet ist.

Ein Ventil im Sinne der Erfindung ist ein Motorventil.

Ein Schaltventil im Sinne der Erfindung ist eine Steuereinrichtung mit zumindest zwei Zuständen, insbesondere eine hydraulische oder elektrische/elektronische Steuereinrichtung.

Eine Zuleitung im Sinne der Erfindung ist eine Vorrichtung zur Übertragung eines Steuerimpulses von einem Schaltventil zu einem Schaltelement, insbesondere eine hydraulische oder elektrische Leitung.

Eine Ventilsteuerungsbewegung im Sinne der Erfindung ist ein kinematisches Ereignis, welche insbesondere von einer Nocke auf einer Nockenwelle erzeugt wird und zu einem Ventil übertragen wird. Dieses Ereignis ist insbesondere durch die physikalischen Grö-βen, Position, Geschwindigkeit und Beschleunigung beschrieben.

Ein Schaltelement im Sinne der Erfindung ist jede Art von Vorrichtung, mit welcher zwischen zumindest zwei Zuständen eines physikalischen Systems geschaltet werden kann. Insbesondere ist das erfindungsgemäße Schaltelement ein Stellantrieb, ein hydraulisches Element oder ein elektromagnetisches Element.

Ein Sperrelement im Sinne der Erfindung ist ein Schaltelement, welches zur Arretierung eines weiteren Schaltelements einsetzbar ist.

Ein Auslassnocken im Sinne der Erfindung ist ein Nocken einer Nockenwelle, welcher eine Kontur aufweist, um eine Ventilsteuerungsbewegung zu erzeugen, die die Ventile in einem Betriebsmodus Motorbetrieb steuert.

Ein Bremsnocken im Sinne der Erfindung ist ein Nocken einer Nockenwelle, welcher eine solche Kontur aufweist, dass er eine Ventilsteuerungsbewegung erzeugt, die die Ventile im Betriebsmodus Motorbremsbetrieb steuert.

Ein Einlassnocken im Sinne der Erfindung ist ein Nocken einer Nockenwelle, welcher eine solche Kontur aufweist, dass er eine Ventilsteuerungsbewegung erzeugt, die einem Betriebsmodus Motorbetrieb steuert.

Ein AGR-Nocken im Sinne der Erfindung ist ein Nocken einer Nockenwelle, welcher eine solche Kontur aufweist, dass er eine Ventilsteuerungsbewegung im Betriebsmodus Abgasrückführung erzeugt.

Ein Miller-Nocken im Sinne der Erfindung ist ein Nocken einer Nockenwelle, welcher eine solche Kontur aufweist, dass er eine Ventilsteuerungsbewegung im Betriebsmodus Miller-Zyklus-Betrieb erzeugt.

Ein Motorbetrieb im Sinne der Erfindung ist ein Verbrennungsbetrieb einer Verbrennungskraftmaschine, wobei diese eine Antriebsbewegung erzeugt.

Eine Kipphebelachse im Sinne der Erfindung ist jene geometrische Achse, um welche ein Kipphebel bzw. ein Kipphebelteil schwenkbar ist.

Ein Steuerfluid im Sinne der Erfindung ist jede Art von Gas oder Flüssigkeit, das sich zur pneumatischen oder hydraulischen Steuerung eines Ventils eignet.

Ein Schaltventil im Sinne der Erfindung ist jede Art von Schaltung, die sich zu einer kontrollierten Verteilung eines erfindungsgemäßen Steuerfluids eignen, insbesondere ein Hydraulikventil.

Die erfindungsgemäße Ventilbetätigungseinrichtung hat den Vorteil, dass der erste Kipphebelteil und der zweite Kipphebelteil unabhängig voneinander schwenkbar gelagert sind. Hierdurch kann eine Ventilsteuerungsbewegung, welche von dem ersten Kipphebelteil an einer Nocke der ersten Nockenwelle abgegriffen wird, selektiv an den zweiten Kipphebelteil weitergegeben werden. Das erste Schaltelement ermöglicht des Weiteren, den Ventilhub diskret oder kontinuierlich einzustellen. Durch das Vorsehen eines Schaltelements kann des Weiteren ein Ventilspiel dynamisch ausgeglichen werden.

In der erfindungsgemäßen Ausgestaltung der Ventilbetätigungseinrichtung ist das erste Schaltelement zwischen dem ersten Kipphebelteil und dem zweiten Kipphebelteil angeordnet. Durch diese Anordnung des Schaltelements kann die selektive Übertragung der ersten Ventilsteuerungsbewegung vom ersten Kipphebelteil auf den zweiten Kipphebelteil durch das erste Schaltelement gesteuert werden.

In einer weiteren vorteilhaften Ausgestaltung der Ventilbetätigungseinrichtung ist ein erster Winkel zwischen dem ersten Kipphebelteil und dem zweiten Kipphebelteil in Bezug auf eine Kipphebelachse durch das erste Schaltelement diskret oder kontinuierlich einstellbar. Durch diese Veränderlichkeit des ersten Winkels kann ein entriegelter Zustand des ersten Kipphebelteils zum zweiten Kipphebelteil realisiert werden, welcher zu einer "lost-motion"- Bewegung bzw. verlorenen Bewegung des zweiten Kipphebelteils führt, was einen Nullhub des ersten Ventils zur Folge hat. Weiterhin ist ein variabler Ventilhub des ersten Ventils möglich, indem kontinuierliche Schaltstellungen des ersten Schaltelements angewählt werden.

In der erfindungsgemäßen Ausgestaltung der Ventilbetätigungseinrichtung der Erfindung weist die Ventilbetätigungseinrichtung ein zweites Schaltelement auf, dessen Wirkrichtung im Wesentlichen parallel zur Bewegungsrichtung des Ventilhubs des ersten Ventils ist. Durch dieses zweite Schaltelement lässt sich, unabhängig von der Schaltstellung des ersten Schaltelements, eine weitere Veränderung des Ventilhubs und/oder des Ventilöffnungs- oder Schließzeitpunkts erreichen.

In einer weiteren vorteilhaften Ausgestaltung der Ventilbetätigungseinrichtung weist das erste Schaltelement einen ersten Kolben und einen ersten Zylinder und/oder das zweite Schaltelement einen zweiten Kolben und einen zweiten Zylinder zur hydraulischen Ansteuerung auf.

In einer weiteren vorteilhaften Ausgestaltung der Ventilbetätigungseinrichtung weist der erste Zylinder eine erste Rückschlagventilanordnung auf, die mit einer ersten Schließkraft belastet ist. Durch die Rückschlagventilanordnung wird verhindert, dass das erste Schaltelement seinen Zustand verändert, wenn der Druck eines Steuerfluids nachlässt oder wenn die Belastung des ersten Schaltelements die durch den Druck des Steuerfluids bereitgestellte Schaltkraft für das erste Schaltelement übersteigt.

In einer weiteren vorteilhaften Ausgestaltung der Ventilbetätigungseinrichtung ist dem ersten Zylinder ein erster Hilfszylinder mit einem ersten Hilfskolben zugeordnet, welcher mit einer ersten Öffnungskraft, die insbesondere größer als die erste Schließkraft ist, belastet ist und ein Betätigungselement aufweist, wobei die erste Rückschlagventilanordnung mittels des ersten Hilfskolbens und des Betätigungselements in eine Öffnungsposition überführbar ist. Das Vorsehen des Hilfszylinders mit Betätigungselement ermöglicht das kontrollierte Schalten des ersten Schaltelements.

In einer weiteren vorteilhaften Ausgestaltung sind der erste Zylinder und der erste Hilfszylinder fluidkommunizierend verbunden. Durch diese Verbindung lassen sich das erste Schaltelement wie auch das Betätigungselement mit einem einzigen Steuerfluid kontrollieren.

In einer weiteren vorteilhaften Ausgestaltung der Ventilbetätigungseinrichtung sind der erste Zylinder und der erste Hilfszylinder im Wesentlichen achsgleich angeordnet.

In einer weiteren vorteilhaften Ausgestaltung weist die Ventilbetätigungseinrichtung ein erstes Sperrelement auf, wobei das erste Schaltelement in einer definierten Stellung durch das erste Sperrelement fixierbar ist. Durch die Fixierung des ersten Schaltelements in einer Position kann dessen Zustand dauerhaft mechanisch beibehalten werden, auch wenn eine Steuerung über das Steuerfluid ausfällt oder aus Gründen der Energieeffizienz eingestellt wird.

In einer weiteren vorteilhaften Ausgestaltung ist das Sperrelement im Wesentlichen senkrecht zur Achse des ersten Zylinders angeordnet.

In einer weiteren vorteilhaften Ausgestaltung der Ventilbetätigungseinrichtung ist das erste Schaltelement und/oder das zweite Schaltelement an dem zweiten Kipphebelteil angeordnet. Durch die Anordnung der beiden Schaltelemente an dem zweiten Kipphebelteil ist die gesamte Mechanik zur Realisierung des variablen Ventiltriebs an dem zweiten Kipphebelteil zusammengeführt. Hierdurch wird eine gesteigerte Systemintegration erreicht. Beispielsweise bei einer Funktionsstörung, welche auf das erste oder das zweite Schaltelement zurückzuführen ist, braucht bei dieser Anordnung nur der zweite Kipphebelteil ausgetauscht werden. Auch Zuleitungen zur Steuerung der Schaltelemente brauchen nur durch den zweiten Kipphebelteil verlaufen, wodurch der erste Kipphebelteil wesentlich einfacher gefertigt werden kann.

In einer weiteren vorteilhaften Ausgestaltung der Ventilbetätigungseinrichtung sind das erste Schaltelement und das zweite Schaltelement fluidkommunizierend, insbesondere durch eine erste Verbindungsleitung, verbunden. Durch diese fluidkommunizierende Verbindung können das erste und das zweite Schaltelement mit einem einzigen Steuerfluid gesteuert werden.

In einer weiteren vorteilhaften Ausgestaltung der Ventilbetätigungseinrichtung ist die erste Nockenwelle in dem Bereich des Abgriffs der ersten Ventilsteuerungsbewegung durch den ersten Kipphebelteil in der Weise ausgebildet, dass die Ventilhebungskurve des ersten Ventils jener eines Auslassventils im Bremsbetrieb, insbesondere als Bremsnocken, im Motorbetrieb, insbesondere als Auslassnocken, oder im Abgasrückführungsbetrieb, insbesondere als AGR-Nocken, entsprechen, oder jenen eines Einlassventils im Motorbetrieb, insbesondere als Einlassnocken, im Miller-Zyklus-Betrieb, insbesondere als Miller-Nocken, oder im Abgasrückführungsbetrieb, insbesondere als Einlass-AGR-Nocken, entspricht.

In einer weiteren vorteilhaften Ausgestaltung der Ventilbetätigungseinrichtung weist die Ventilbetätigungseinrichtung des Weiteren eine Ventilbrücke auf, die zwischen zumindest zwei ersten Ventilen angeordnet ist und den zweiten Kipphebelteil mit den ersten Ventilen wirkverbindet. Durch diese Wirkverbindung können die beiden ersten Ventile mit einer einzigen Ventilsteuerungsbewegung betätigt werden

In einer weiteren vorteilhaften Ausgestaltung der Ventilbetätigungseinrichtung sind die ersten Ventile über erste Gelenke mit der Ventilbrücke wirkverbunden. Das Vorsehen von Gelenken zwischen den Ventilen und der Ventilbrücke ermöglicht, jeweils eines der ersten Ventile unabhängig von dem anderen der ersten Ventile, trotz des Vorhandenseins der Ventilbrücke, zu betätigen. Das Vorsehen eines Durchgriffs durch die Ventilbrücke, z.B. eines Lochs, ist in dieser Ausgestaltung hierfür nicht notwendig.

In einer weiteren vorteilhaften Ausgestaltung der Ventilbetätigungseinrichtung weist der zweite Kolben des zweiten Schaltelements eine größere Wirkfläche als der erste Kolben des ersten Schaltelements auf. Durch seine größere Wirkfläche kann der zweite Kolben ein größeres Drehmoment verrichten. Erfindungsgemäß wirkt sich dies, wenn beide Kolben mit den entsprechenden Gegenstücken im Anschlag stehen, in der Weise aus, dass zunächst der zweite Kolben, auf Kosten der Ausfahrstellung des ersten Kolbens seine maximale Ausfahrstellung erreicht.

In einer weiteren vorteilhaften Ausgestaltung der Ventilbetätigungseinrichtung weist der zweite Kipphebelteil einen ersten Anschlag und einen zweiten Anschlag zur Betätigung des zumindest einen ersten Ventils auf, wobei der zweite Anschlag durch das zweite Schaltelement betätigbar ist. Durch das Vorsehen von zwei Anschlägen kann an zwei Stellen der Ventilbrücke eine Kraft durch den zweiten Kipphebelteil ausgeübt werden.

In einer weiteren vorteilhaften Ausgestaltung der Ventilbetätigungseinrichtung ist der zweite Anschlag im Wesentlichen mittig an der Ventilbrücke angeordnet und/oder der erste Anschlag ist im Wesentlichen über einem ersten Ventil angeordnet. Durch das Anordnen des ersten Anschlags über zumindest einem ersten Ventil wird erreicht, dass dieses Ventil unabhängig von dem anderen ersten Ventil betätigt werden kann. Weiterhin ermöglicht das mittige Anordnen des zweiten Anschlags an der Ventilbrücke, dass beide ersten Ventile gleichzeitig betätigt werden können. Die Anordnung der beiden Anschläge in dieser Weise hat den Vorteil, dass, wenn zunächst das eine Ventil und danach beide Ventile betätigt werden, durch die Bewegung des ersten Anschlags auch die Mitte der Ventilbrücke in eine Bewegung mit im Wesentlichen halber Geschwindigkeit des ersten Anschlages versetzt wird, so dass die Relativgeschwindigkeit beim Auftreffen des zweiten Anschlags auf der Ventilbrücke reduziert ist.

In einer weiteren vorteilhaften Ausgestaltung der Ventilbetätigungseinrichtung greift der erste Anschlag an der Ventilbrücke und der zweite Anschlag direkt an einem zumindest einem ersten Ventil an. Durch diese verschiedenen Wirkverbindungen kann das eine Ventil unabhängig von der Ventilbrücke betätigt werden.

In einer weiteren vorteilhaften Ausgestaltung der Ventilbetätigungseinrichtung greifen beide Anschläge an der Ventilbrücke an. Die Ventilbrücke kann hierdurch durch beide Anschläge unabhängig voneinander betätigt werden.

In einer weiteren vorteilhaften Ausgestaltung der Ventilbetätigungseinrichtung weist der erste Anschlag und/oder der zweite Anschlag jeweils ein zweites Gelenk auf. Das zweite Gelenk erlaubt, dass der jeweilige Anschlag je nach Stellung der Ventilbrücke formschlüssig an der Ventilbrücke angreifen kann.

In einer weiteren vorteilhaften Ausgestaltung der Ventilbetätigungseinrichtung weist die Ventilbetätigungseinrichtung ein drittes Schaltelement auf, welches an dem zweiten Kipphebelteil angeordnet ist. Das Vorsehen des dritten Schaltelements an dem zweiten Kipphebelteil ermöglicht es, den zweiten Kipphebelteil selektiv und unabhängig von dem ersten Kipphebelteil, über einen weiteren Kipphebelteil oder einer sonstigen Vorrichtung zum Erzeugen oder Übertragen einer Bewegung zu betätigen.

In einer weiteren vorteilhaften Ausgestaltung der Ventilbetätigungseinrichtung weist das dritte Schaltelement einen dritten Kolben und einen dritten Zylinder zur hydraulischen Ansteuerung auf.

In einer weiteren vorteilhaften Ausgestaltung der Ventilbetätigungseinrichtung weist die Wirkrichtung des ersten Schaltelements und/oder des zweiten Schaltelements und/oder des dritten Schaltelements eine senkrechte Komponente zur Kipphebelachse, insbesondere im Wesentlichen tangential zu einem Kreis um die Kipphebelachse, auf. Durch diese Anordnung der Wirkrichtung des Schaltelements kann eine Winkelverschiebung des zweiten Kipphebelteils um die Kipphebelachse in Bezug auf ein feststehendes Objekt, insbesondere den ersten Kipphebelteil, bewirkt werden, indem das Schaltelement in eine ausgefahrene Stellung gebracht wird.

In einer weiteren vorteilhaften Ausgestaltung der Ventilbetätigungseinrichtung weist die Wirkrichtung des ersten Schaltelements und/oder des zweiten Schaltelements und/oder des dritten Schaltelements zumindest eine parallele Komponente zur Bewegungsrichtung des ersten Kipphebelteils und des zweiten Kipphebelteils auf.

In einer weiteren vorteilhaften Ausgestaltung der Ventilbetätigungseinrichtung stehen die Wirkrichtung des ersten Schaltelements und des zweiten Schaltelements (in einem zweiten Winkel etwa von 80° bis 100°, bevorzugt etwa von 85° bis 95° und am bevorzugtesten etwa von 90° zueinander. In einer weiteren vorteilhaften Ausgestaltung der Ventilbetätigungseinrichtung stehen eine Achse des ersten Schaltelements und eine Achse des zweiten Schaltelements in einem zweiten Winkel etwa von 80° bis 100°, bevorzugt etwa von 85° bis 95° und am bevorzugtesten etwa von 90° zueinander. Hierdurch kann eine besonders vorteilhafte Wirkung einer translatorischen Bewegung der beiden Schaltelemente in Bezug aufeinander erreicht werden.

In einer weiteren vorteilhaften Ausgestaltung der Ventilbetätigungseinrichtung weist die Ventilbetätigungseinrichtung des Weiteren einen dritten Kipphebelteil, einen vierten Kipphebelteil und ein drittes Schaltelement zur Veränderung des Ventilhubs des zumindest einen ersten Ventils auf, wobei der dritte Kipphebelteil und der vierte Kipphebelteil schwenkbar gelagert sind und in der Weise angeordnet sind, dass zumindest eine zweite Ventilsteuerungsbewegung von der ersten Nockenwelle oder einer zweiten Nockenwelle über den ersten Kipphebelteil und den zweiten Kipphebelteil und/oder über den dritten Kipphebelteil und den vierten Kipphebelteil zu zumindest einem ersten Ventil übertragbar ist. Diese Ausgestaltung bietet die Möglichkeit, eine zweite Ventilsteuerungsbewegung zu dem zumindest einen ersten Ventil zu übertragen. Durch die jeweiligen Zustände des ersten Schaltelements und des dritten Schaltelements können somit jeweils verschiedene Ventilsteuerungsbewegungen zu dem ersten Ventil übertragen werden. Auf diese Weise können verschiedenste Ventilhebungskurven realisiert werden, die einen normalen Motorbetrieb, einen Motorbremsbetrieb, einen Betrieb im Miller-Zyklus oder auch einen Abgasrückführungsbetrieb, etc. ermöglichen.

In einer weiteren vorteilhaften Ausgestaltung der Ventilbetätigungseinrichtung ist das dritte Schaltelement zwischen dem dritten Kipphebelteil und dem vierten Kipphebelteil angeordnet.

In einer weiteren vorteilhaften Ausgestaltung der Ventilbetätigungseinrichtung sind der zweite Kipphebelteil und der vierte Kipphebelteil einstückig ausgebildet. Durch diese Realisierung der beiden Kipphebelteile in einen Kipphebelteil wird eine weitere Systemintegration erreicht. Alle Schaltelemente, die die Betätigung des zumindest einen ersten Ventils betreffen, können in diesem Kipphebelteil integriert werden. Somit muss auch nur dieser Kipphebelteil hydraulische Zuleitungen und hydraulische Elemente sowie gegebenenfalls elektrische Leitungen und Komponenten aufweisen. Sollte bei einem dieser Steuerelemente eine Fehlfunktion auftreten, so ist gesichert, dass diese auf diesen integrierten Kipphebelteil zurückgeht. Weiterhin kann die Zahl der bewegten Teile an der Ventilbetätigungseinrichtung reduziert werden.

In einer weiteren vorteilhaften Ausgestaltung der Ventilbetätigungseinrichtung ist die erste Nockenwelle oder die zweite Nockenwelle in dem Bereich des Abgriffs der mit der zweiten Ventilsteuerungsbewegung durch den dritten Kipphebelteil in der Weise ausgebildet, dass die Öffnungszeitpunkte des zumindest einen ersten Ventils jenen eines Auslassventils im Motorbetrieb entsprechen, insbesondere als Auslassnocken. Somit können über die jeweiligen Kipphebelteile verschiedene Konturen von Nocken als Ventilsteuerbewegung übertragen werden.

In einer weiteren vorteilhaften Ausgestaltung der Ventilbetätigungseinrichtung weist die Ventilbetätigungseinrichtung des Weiteren einen fünften Kipphebelteil, einen sechsten Kipphebelteil und ein viertes Schaltelement zur Veränderung des Ventilhubs zumindest eines zweiten Ventils auf, wobei der fünfte Kipphebelteil und der sechste Kipphebelteil schwenkbar gelagert sind und in der Weise angeordnet sind, dass zumindest eine dritte Ventilsteuerungsbewegung von einer ersten Nockenwelle oder einer zweiten Nockenwelle über den fünften Kipphebelteil und den sechsten Kipphebelteil zu dem zumindest einen zweiten Ventil übertragbar ist. Mit dem Vorsehen eines fünften und sechsten Kipphebelteils kann nunmehr eine dritte Ventilsteuerungsbewegung zu zumindest einem zweiten Ventil übertragen werden.

In einer weiteren vorteilhaften Ausgestaltung der Ventilbetätigungseinrichtung ist das vierte Schaltelement zwischen dem fünften Kipphebelteil und im sechsten Kipphebelteil angeordnet.

In einer weiteren vorteilhaften Ausgestaltung der Ventilbetätigungseinrichtung ist die erste Nockenwelle oder die zweite Nockenwelle in dem Bereich des Abgriffs der Ventilsteuerungsbewegung durch den fünften Kipphebelteil in der Weise ausgebildet, dass die Öffnungszeitpunkte des zweiten Ventils jenen eines Einlass-Ventils im Motorbetrieb entsprechen, insbesondere als Einlassnocken.

In einer weiteren vorteilhaften Ausgestaltung der Ventilbetätigungseinrichtung weist die Ventilbetätigungseinrichtung des Weiteren einen siebten Kipphebelteil, einen achten Kipphebelteil und ein fünftes Schaltelement zur Veränderung des Ventilhubs des zumindest eines zweiten Ventils auf, wobei der siebte Kipphebelteil und der achte Kipphebelteil schwenkbar gelagert sind und in der Weise angeordnet sind, dass zumindest eine vierte Ventilsteuerungsbewegung von der ersten Nockenwelle oder der zweiten Nockenwelle über den siebten Kipphebelteil und den achten Kipphebelteil zu zumindest einem zweiten Ventil übertragbar ist. Durch das Vorsehen des siebten Kipphebelteils und des achten Kipphebelteils kann eine vierte Ventilsteuerungsbewegung zu dem zumindest einen zweiten Ventil übertragen werden.

In einer weiteren vorteilhaften Ausgestaltung der Ventilbetätigungseinrichtung ist das fünfte Schaltelement zwischen dem siebten Kipphebelteil und dem achten Kipphebelteil angeordnet.

In einer weiteren vorteilhaften Ausgestaltung der Ventilbetätigungseinrichtung ist die erste Nockenwelle oder die zweite Nockenwelle in dem Bereich des Abgriffs der Ventilsteuerungsbewegung durch den siebten Kipphebelteil in der Weise ausgebildet, dass die Öffnungszeitpunkte des zweiten Ventils jenen vom Einlassventil im Miller-Zyklus entsprechen, insbesondere als Miller-Nocken.

In einer weiteren vorteilhaften Ausgestaltung der Ventilbetätigungseinrichtung sind das erste Schaltelement, das dritte Schaltelement, das vierte Schaltelement und/oder das fünfte Schaltelement in der Weise ausgebildet und/oder angeordnet, dass jeweils verschiedene Auslenkungsamplituden, insbesondere Ventilhübe, des zweiten Kipphebelteils, des vierten Kipphebelteils, des sechsten Kipphebelteils und/oder des achten Kipphebelteils realisierbar sind.

In einer weiteren vorteilhaften Ausgestaltung der Ventilbetätigungseinrichtung sind der erste Kipphebelteil, der dritte Kipphebelteil, der fünfte Kipphebelteil und/oder der siebte Kipphebelteil gegenüber dem Zylinderkopf gegen die erste Nockenwelle und/oder die zweite Nockenwelle, insbesondere durch jeweils ein Vorspannungselement, insbesondere eine Rückhaltefeder, vorgespannt. Durch die Vorspannung kann sich ein Anschlag des jeweiligen Kipphebelteils, welcher auf einem Nocken läuft, nicht von diesem Nocken abheben. Auf diese Weise ist ein Abrufen der jeweiligen Stellung entsprechend der Kontur des Nockens stets gewährleistet, auch wenn die jeweiligen Schaltelemente nicht aktiviert sind.

In einer weiteren vorteilhaften Ausgestaltung der Ventilbetätigungseinrichtung sind zumindest zwei der Elemente erster Kipphebelteil, zweiter Kipphebelteil, dritter Kipphebelteil, vierter Kipphebelteil, fünfter Kipphebelteil, sechster Kipphebelteil, siebter Kipphebelteil und/oder achter Kipphebelteil um eine gemeinsame Kipphebelachse schwenkbar. Das Vorsehen einer gemeinsamen Kipphebelachse für verschiedene Kipphebelteile bietet für Kipphebelteile, welche zusammenwirken, die effektivste rotatorische Übertragung einer Ventilsteuerbewegung.

In einer weiteren vorteilhaften Ausgestaltung der Ventilbetätigungseinrichtung weist das erste Schaltelement und/oder das vierte Schaltelement ein Begrenzungselement auf, das die maximale Schaltstellung begrenzt. Durch das Begrenzen der maximalen Schaltstellung kann gewährleistet werden, dass relativ kleine Ventilhebungsbewegungen trotz aktiviertem ersten Schaltelement und/oder vierten Schaltelement nicht von der ersten oder zweiten Nockenwelle zu dem zweiten oder vierten Kipphebelteil übertragen werden. In einer weiteren vorteilhaften Ausgestaltung der Ventilbetätigungseinrichtung werden die Steuerimpulse dem jeweiligen Schaltelement durch ein Steuerfluid, insbesondere ein Schmiermittel, über Schaltventile, insbesondere 4/2-Wege-Solenoid-Ventile, zugeleitet, welche einen ersten Anschluss A und einen zweiten Anschluss B für Steuerleitungen, ein Druckanschluss zur Versorgung mit dem Steuerfluid und ein Rückflussanschluss zur Druckentlastung aufweisen, wobei die beiden Anschlüsse A und B jeweils mit dem Druckanschluss und dem Rückflussanschluss in zwei Schaltstellungen verbindbar sind. Die Verwendung der 4/2-Wege-Solenoid-Ventile gewährleistet eine hydraulische Betätigung der jeweiligen Schaltelemente mit minimaler Reaktionszeit und hoher Funktionssicherheit.

In einer weiteren vorteilhaften Ausgestaltung der Ventilbetätigungseinrichtung sind die zwei ersten Ventile über erste Gelenke mit der Ventilbrücke wirkverbunden.

In einer weiteren vorteilhaften Ausgestaltung der Ventilbetätigungseinrichtung weist der erste Anschlag und/oder der zweite Anschlag jeweils ein zweites Gelenk auf.

In einer weiteren vorteilhaften Ausgestaltung der Ventilbetätigungseinrichtung sind der erste Kipphebelteil und der zweite Kipphebelteil einstückig ausgebildet.

Die im Vorstehenden beschriebenen Aspekte der Erfindung und die dazugehörigen zur Weiterbildung der Ventilbetätigungseinrichtung offenbarten Merkmale gelten auch für die Verbrennungskraftmaschine, das Verfahren zu Ventilsteuerung und das Verfahren zur Ventilbetätigung entsprechend und umgekehrt.

In einer vorteilhaften Ausgestaltung der Verbrennungskraftmaschine verläuft zumindest eine Zuleitung zur Übertragung von Steuerimpulsen zum ersten Schaltelement, dem zweiten Schaltelement, dem dritten Schaltelement, dem vierten Schaltelement und/oder dem fünften Schaltelement und/oder eine Schmiermittelleitung durch die Kipphebelachse. Eine separate Zuleitung zu den Schaltelementen z.B. über flexible Schläuche, ist somit nicht unbedingt notwendig.

In einer weiteren vorteilhaften Ausgestaltung der Verbrennungskraftmaschine ist das Steuerfluid zur Steuerung zumindest des ersten Schaltelements Schmiermittel und die Verbrennungskraftmaschine weist an der zumindest einen Zuleitung eine zusätzliche Ölpumpe auf, um beim Starten der Verbrennungskraftmaschine den Betrieb zumindest des ersten Schaltelements notwendigen Druck aufzubringen, und/oder selbst ohne das Vorsehen eines Rückschlagventils an der Zuführung zu dem/den Schaltelement(en) ein Ablaufen des Schmiermittels aus der zumindest einen Zuleitung der Verbrennungskraftmaschine zu verhindern.

In einer weiteren vorteilhaften Ausgestaltung weist die Verbrennungskraftmaschine zumindest sechs Motorzylinder auf, welche jeder ein erstes Schaltelement, ein zweites Schaltelement, ein drittes Schaltelement und ein viertes Schaltelement aufweisen, und zumindest sechs Schaltventile auf, wobei bei dem sechsten Schaltventil ein Anschluss A mit dem jeweiligen ersten Schaltelement des fünften Motorzylinders und/oder des sechsten Motorzylinders verbunden ist, ein Anschluss B mit dem dritten Schaltelement des fünften Motorzylinders und/oder des sechsten Motorzylinders verbunden ist und ein Anschluss P mit einem Anschluss B des fünften Schaltventils verbunden ist, wobei bei dem fünften Schaltventil ein Anschluss A oder B mit dem jeweiligen vierten Schaltelement des vierten Motorzylinders, des fünften Motorzylinders und/oder des sechsten Motorzylinders verbunden ist, wobei bei dem vierten Schaltventil ein Anschluss A mit dem ersten Schaltelement des vierten Motorzylinders verbunden ist, ein Anschluss B mit dem dritten Schaltelement des vierten Motorzylinders verbunden ist und ein Druckanschluss mit einem Anschluss B des fünften Schaltventils verbunden ist, wobei bei dem dritten Schaltventil ein Anschluss A mit dem ersten Schaltelement des dritten Motorzylinders verbunden ist und ein Anschluss B mit einem dritten Schaltelement des dritten Motorzylinders verbunden ist, wobei bei dem zweiten Schaltventil ein Anschluss A mit dem ersten Schaltelement des zweiten Motorzylinders verbunden ist und ein Anschluss B mit dem dritten Schaltelement des zweiten Motorzylinders verbunden ist, und wobei bei dem ersten Schaltventil ein Anschluss A mit dem ersten Schaltelement des ersten Motorzylinders verbunden ist, ein Anschluss B mit dem dritten Schaltelement des ersten Motorzylinders verbunden ist und ein Druckanschluss mit dem jeweils vierten Schaltelement des ersten Motorzylinders, des zweiten Motorzylinders und/oder des dritten Motorzylinders verbunden ist. Diese Verschaltung der Schaltventile mit den jeweiligen Schaltelementen ermöglicht es, drei verschiedene Betriebsmodi des Motors, nämlich normaler Motorbetrieb, Motorbremsbetrieb und eine teilweise Motorzylinderabschaltung mit nur sechs Schaltventilen zu realisieren, wobei die Bremsleistung in 5 Stufen (schwach bis stark) geregelt werden kann.

In einer weiteren vorteilhaften Ausgestaltung weist die Verbrennungskraftmaschine zumindest sechs Motorzylinder, welche jeder ein erstes Schaltelement, ein zweites Schaltelement, ein drittes Schaltelement, ein viertes Schaltelement und ein fünftes Schaltelement aufweisen, und zumindest sechs Schaltventile auf, wobei bei dem sechsten Schaltventil ein Anschluss A mit einem jeweiligen fünften Schaltelement des vierten Motorzylinders, des fünften Motorzylinders und/oder des sechsten Motorzylinders verbunden ist, ein Anschluss B mit dem vierten Schaltelement des vierten Motorzylinders, des fünften Motorzylinders und/oder des sechsten Motorzylinders verbunden ist und ein Druckanschluss mit einem Anschluss A oder B eines fünften Schaltventils verbunden ist, wobei bei dem vierten Schaltventil ein Anschluss A mit dem jeweiligen ersten Schaltelement des vierten Motorzylinders, des fünften Motorzylinders und/oder des sechsten Motorzylinders verbunden ist, ein Anschluss B mit dem dritten Schaltelement des vierten Motorzylinders, des fünften Motorzylinders und/oder des sechsten Motorzylinders verbunden ist und ein Druckanschluss mit einem Anschluss A oder B des fünften Schaltventils verbunden ist, wobei bei dem dritten Schaltventil ein Anschluss A mit dem ersten Schaltelement des dritten Motorzylinders verbunden ist und ein Anschluss A oder B mit dem dritten Schaltelement des dritten Motorzylinders verbunden ist, und wobei bei dem zweiten Schaltventil ein Anschluss A mit dem jeweiligen fünften Schaltelement des ersten Motorzylinders, des zweiten Motorzylinders und/oder des dritten Motorzylinders verbunden ist, ein Anschluss B mit dem vierten Schaltelement des ersten Motorzylinders, des zweiten Motorzylinders und/oder des dritten Motorzylinders verbunden ist, und wobei bei dem ersten Schaltventil ein Anschluss A mit dem jeweiligen ersten Schaltelement des ersten Motorzylinders und/oder des zweiten Motorzylinders verbunden ist und ein Anschluss B mit dem dritten Schaltelement des ersten Motorzylinders und/oder des zweiten Motorzylinders verbunden ist. Diese Verschaltung der Schaltventile mit den jeweiligen Schaltelemente ermöglicht es, vier verschiedene Betriebsmodi, nämlich den normalen Motorbetrieb, den Motorbremsbetrieb, eine teilweise Motorzylinderabschaltung und einen Miller-Zyklus-Betrieb mit nur sechs Schaltventilen zu realisieren, wobei die Bremsleistung in 5 Stufen (schwach bis stark) geregelt werden kann.

In einer weiteren vorteilhaften Ausgestaltung weist die Verbrennungskraftmaschine zumindest sechs Motorzylinder, welche jeder ein erstes Schaltelement, ein zweites Schaltelement, ein drittes Schaltelement, ein viertes Schaltelement und ein fünftes Schaltelement aufweisen, und zumindest sechs Schaltventile auf, wobei bei dem sechsten Schaltventil ein Anschluss A mit dem jeweiligen fünften Schaltelement des vierten Motorzylinders, des fünften Motorzylinders und/oder des sechsten Motorzylinders verbunden ist, ein Anschluss B mit dem vierten Schaltelement des vierten Motorzylinders, des fünften Motorzylinders und/oder des sechsten Motorzylinders verbunden ist und ein Druckanschluss mit einem Anschluss B eines fünften Schaltventils verbunden ist, wobei bei dem vierten Schaltventil ein Anschluss A mit dem jeweiligen ersten Schaltelement des vierten Motorzylinders, des fünften Motorzylinders und/oder des sechsten Motorzylinders verbunden ist, ein Abschluss B mit dem dritten Schaltelement des vierten Motorzylinders, des fünften Motorzylinders und/oder des sechsten Motorzylinders verbunden ist und ein Druckanschluss mit einem Anschluss A oder B des fünften Schaltventils verbunden ist,wobei bei dem dritten Schaltventil ein Anschluss A mit dem jeweiligen zweiten Schaltelement des ersten Motorzylinders, des zweiten Motorzylinders, des dritten Motorzylinders, des vierten Motorzylinders, des fünften Motorzylinders und/oder des sechsten Motorzylinders verbunden ist, wobei bei dem zweiten Schaltventil ein Anschluss A mit dem jeweiligen fünften Schaltelement des ersten Motorzylinders, des zweiten Motorzylinders und/oder des dritten Motorzylinders verbunden ist und ein Anschluss B mit dem vierten Schaltelement des ersten Motorzylinders, des zweiten Motorzylinders und/oder des dritten Motorzylinders verbunden ist, und wobei bei dem ersten Schaltventil ein Anschluss A mit dem jeweiligen ersten Schaltelement des ersten Motorzylinders, des zweiten Motorzylinders und/oder des dritten Motorzylinders verbunden ist und ein Anschluss B mit dem dritten Schaltelement des ersten Motorzylinders, des zweiten Motorzylinders und/oder des dritten Motorzylinders verbunden ist. Diese Verschaltung von Schaltventilen mit den jeweiligen Schaltelementen ermöglicht es, fünf Betriebsmodi einer Verbrennungskraftmaschine, nämlich den normalen Motorbetrieb, den Motorbremsbetrieb, die teilweise Motorzylinderabschaltung, den Miller-Zyklus-Betrieb, und einen Abgasrückführbetrieb mit nur sechs Schaltventilen zu realisieren, wobei die Bremsleistung in 5 Stufen (schwach bis stark) geregelt werden kann.

In einer weiteren vorteilhaften Ausgestaltung der Verbrennungskraftmaschine weist die Ventilbetätigungseinrichtung des Weiteren ein siebtes Schaltventil auf, und bei dem zweiten Schaltventil ist der Druckanschluss zusätzlich mit einem Anschluss A oder B des siebten Schaltventils verbunden und/oder bei dem ersten Schaltventil ist der Druckanschluss zusätzlich mit einem Anschluss A oder B des siebten Schaltventils verbunden. Durch diese Fortbildung der Verschaltung mit einem zusätzlichen siebten Schaltventil ist des Weiteren eine variable Motorzylinderabschaltung möglich, wobei bei einer geraden Anzahl von Zylindern jeweils eine Hälfte der Zylinder abgeschaltet werden kann. Durch die variable teilweise Motorzylinderabschaltung kann erreicht werden, dass alle Zylinder eine ausgeglichene Anzahl von Betriebsstunden im Motorbetrieb realisiert werden kann.

In einer weiteren vorteilhaften Ausgestaltung der Erfindung sind das erste bis vierte und/oder das sechste Schaltventil 4/2-Wege-Solenoid-Ventile und das fünfte und/oder siebte Schaltventil sind 2/2-Wege-Solenoid-Ventile, 3/2W-Wege-Solenoid-Ventile und/oder 4/2-Wege-Solenoid-Ventile. Durch das Vorsehen dieser Ventilkonfiguration können die verschiedenen Betriebsmodi mit einer geringen Anzahl an Ventilen realisiert werden. Eine weitere Reduzierung der Anzahl an Ventilen wäre möglich, wenn die Bremsleistung in weniger Stufen geregelt wird.

In einer vorteilhaften Ausgestaltung weist das erfindungsgemäße Verfahren zur Ventilsteuerung des Weiteren folgenden Schritt auf: Schließen einer ersten Rückschlagventilanordnung des ersten Schaltelements. Durch das Schließen der ersten Rückschlagventilanordnung wird gewährleistet, dass die Schaltstellung des ersten Schaltelements auch bei einem Absinken des Steuerdrucks oder bei einem Überschreiten der Kraft, welche der Steuerdruck in dem ersten Schaltelement bewirkt, beibehalten wird.

In einer weiteren vorteilhaften Ausgestaltung des erfindungsgemäßen Verfahrens weist die Ventilbetätigungseinrichtung ein zweites Schaltelement auf, und das Verfahren weist des Weiteren folgenden Schritt auf: Zuleiten des Steuerimpulses zu dem zweiten Schaltelement, insbesondere einem zweiten Zylinder, wobei die Schaltstellung des zweiten Schaltelements, insbesondere eines zweiten Kolbens, von dem Druck und der Dauer des Zuleitens des Steuerfluids abhängt. Über die Stärke und/oder Länge des Steuerimpulses kann somit eine permanente Schaltstellung des zweiten Schaltelements erzeugt werden.

In einer weiteren vorteilhaften Ausgestaltung des erfindungsgemäßen Verfahrens wird der Steuerimpuls dem zweiten Schaltelement zeitlich vor dem ersten Schaltelement zugeleitet. Hierdurch kann erreicht werden, dass bei der Ventilbetätigung einer Hubkolbenmaschine mit zwei ersten Ventilen das eine der beiden ersten Ventile vor dem anderen der beiden ersten Ventile geöffnet wird.

In einer weiteren vorteilhaften Ausgestaltung des erfindungsgemäßen Verfahrens wird das Steuerfluid dem zweiten Schaltelement und dem ersten Schaltelement gleichzeitig zugeleitet.

In einer weiteren vorteilhaften Ausgestaltung des erfindungsgemäßen Verfahrens weist die Ventilbetätigungseinrichtung zumindest zwei erste Ventile auf, und das Verfahren weist in einem ersten Betriebsmodus, insbesondere dem Motorbremsbetrieb folgende weitere Schritte auf: Öffnen eines der ersten Ventile; und danach, Öffnen beider erster Ventile. Dadurch, dass zunächst nur eines der ersten Ventile geöffnet wird, wird eine komponentenschonende Öffnung der Ventile erreicht. Dies ist insbesondere im Motorbremsbetrieb von Bedeutung, wenn die beiden ersten Ventile, zumeist Auslassventile, zur Dekompression des gespannten Gases im Zylinder am Ende des zweiten oder vierten Taktes einer Viertakt-Verbrennungskraftmaschine verwendet werden. Durch die hohen Drücke im Motorzylinder besteht, werden beide erste Ventile gleichzeitig geöffnet, für Komponenten, welche eine Ventilsteuerungsbewegung zu den beiden ersten Ventilen übertragen, ein hohes Risiko, zumindest im Laufe der Zeit, Schaden zu nehmen. Dies ist durch die hohe Kraft zur Überwindung des Widerstandes durch die bei zwei Ventilen verdoppelte Ventilfläche und die damit verdoppelte Krafteinwirkung bedingt. Wird dagegen zuerst eines der beiden ersten Ventile geöffnet, so ist die zunächst sehr große Druckbelastung im Motorzylinder durch die Öffnung des einen ersten Ventils schon reduziert, wenn die Öffnung der beiden ersten Ventile beginnt.

In einer weiteren vorteilhaften Ausgestaltung des erfindungsgemäßen Verfahrens weist die Ventilbetätigungseinrichtung zumindest zwei erste Ventile auf, und das Verfahren weist in einem zweiten Betriebsmodus, insbesondere dem Motorbetrieb, folgende weitere Schritte auf: Gleichzeitiges Betätigen beider erster Ventile. Im normalen Motorbetrieb ist es, im Gegensatz zum Motorbremsbetrieb, wesentlich, dass die verbrannten Gase über die zwei ersten Ventile, insbesondere Auslassventile, möglichst rasch ausströmen können bzw. abgeblasen werden können. Die Ventile werden hierbei geöffnet, wenn der Zylinderkolben den Bereich des unteren Totpunkts erreicht hat, die abgebrannten Gase sich mithin in einem entspannten Zustand befinden. Daher ist die Kraft auf die Ventilflächen, welche durch Druck im Motorzylinder ausgeübt wird, wesentlich geringer als im Motorbremsbetrieb.

In einer weiteren vorteilhaften Ausgestaltung des erfindungsgemäßen Verfahrens weist die Ventilbetätigungseinrichtung des Weiteren eine Ventilbrücke auf, die zumindest zwei erste Ventile miteinander verbindet, wobei ein erster Anschlag des zweiten Kipphebelteils im Wesentlichen über einem der zwei ersten Ventile angeordnet ist und/oder ein zweiter Anschlag des vierten Kipphebelteils im Wesentlichen mittig an der Ventilbrücke angeordnet ist, und das Verfahren weist des Weiteren folgenden Schritt auf: Abstoßen eines zweiten Kipphebelteils von der Ventilbrücke mittels des zweiten Schaltelements über den ersten Anschlag in der Weise, dass der zweite Anschlag von der Ventilbrücke beabstandet wird. Durch das Beabstanden des zweiten Anschlags von der Ventilbrücke wird erreicht, dass bei einer Aktivierung des ersten und des zweiten Schaltelements eine Ventilsteuerbewegung bzw. ein Schwenken des zweiten Kipphebelteils zunächst auf das eine der zwei ersten Ventile wirkt, über welchen der erste Anschlag angeordnet ist und sich das andere der zwei ersten Ventile erst bei einem weiteren Schwenken des zweiten Kipphebelteils öffnet.

In einer weiteren vorteilhaften Ausgestaltung des erfindungsgemäßen Verfahrens weist die Ventilbetätigungseinrichtung des Weiteren einen dritten Kipphebelteil, einen vierten Kipphebelteil und ein drittes Schaltelement auf, wobei das Verfahren des Weiteren folgende Schritte aufweist: Abgreifen einer zweiten Bewegung an der Nockenwelle mit dem dritten Kipphebelteil; selektives Zuleiten des Steuerimpulses zu dem dritten Schaltelement, insbesondere einem dritten Zylinder, zum Steuern des Ventilhubs, wobei die Stellung des dritten Schaltelements, insbesondere eines dritten Kolbens, von der Stärke und/oder der Länge des Steuerimpulses, insbesondere dem Druck und der Dauer des Zuleitens des Steuerfluids, abhängt; Übertragen in Abhängigkeit von der Stellung des dritten Schaltelements, der zweiten Bewegung mit dem vierten Hebelteil zu einem ersten Ventil.

In einer weiteren vorteilhaften Ausgestaltung des erfindungsgemäßen Verfahrens weist die Ventilbetätigungseinrichtung des Weiteren einen fünften Kipphebelteil, einen sechsten Kipphebelteil und ein viertes Schaltelement auf. Das Verfahren weist des Weiteren folgende Schritte auf: Abgreifen einer dritten Bewegung an der Nockenwelle mit dem fünften Kipphebelteil; selektives Zuleiten des Steuerimpulses zu dem vierten Schaltelement, insbesondere einem vierten Zylinder zum Steuern des Ventilhubs, wobei die Stellung des vierten Schaltelements, insbesondere eines vierten Kolbens, von der Stärke und/oder Länge des Steuerimpulses abhängt; und Übertragen, in Abhängigkeit von der Stellung des vierten Schaltelements, der Bewegung mit dem sechsten Kipphebelteil zu dem zweiten Ventil.

In einer weiteren vorteilhaften Ausgestaltung des erfindungsgemäßen Verfahrens wird ein Steuerimpuls in einem Betriebsmodus Bremsbetrieb ausschließlich zu dem ersten Schaltelement, dem zweiten Schaltelement und/oder dem vierten Schaltelement zugeleitet.

In einer weiteren vorteilhaften Ausgestaltung des erfindungsgemäßen Verfahrens wird der Steuerimpuls in einem Betriebsmodus Fahrbetrieb oder Zylinderabschaltung ausschließlich zu dem dritten Schaltelement und/oder vierten Schaltelement zugeleitet.

In einer weiteren vorteilhaften Ausgestaltung des erfindungsgemäßen Verfahrens wird der Steuerimpuls in einem Betriebsmodus Abgasrückführung ausschließlich zu dem zweiten Schaltelement, dem dritten Schaltelement, und/oder dem vierten Schaltelement zugeleitet.

In einer weiteren vorteilhaften Ausgestaltung des erfindungsgemäßen Verfahrens weist die Ventilbetätigungseinrichtung des Weiteren einen siebten Kipphebelteil, einen achten Kipphebelteil, und ein fünftes Schaltelement auf. Das Verfahren weist folgende Schritte auf: Abgreifen einer vierten Bewegung an der Nockenwelle mit dem siebten Kipphebelteil; selektives Zuleiten des Steuerimpulses zu dem fünften Schaltelement, insbesondere einem fünften Zylinder, zum Steuern des Ventilhubs, wobei die Stellung des fünften Schaltelements, insbesondere eines ersten Kolbens, von der Stärke und/oder Länge des Steuerimpulses abhängt; und Übertragen, in Abhängigkeit von der Stellung des vierten Schaltelements, der Bewegung mit dem achten Kipphebelteil zu dem zweiten Ventil.

In einer weiteren vorteilhaften Ausgestaltung des erfindungsgemäßen Verfahrens wird der Steuerimpuls in einem Betriebsmodus Miller-Zyklus ausschließlich zu dem dritten Schaltelement und/oder fünften Schaltelement zugeleitet.

In einer vorteilhaften Ausgestaltung weist das erfindungsgemäße Verfahren zur Ventilbetätigung des Weiteren folgende Schritte auf: Erstes Schließen des ersten Ventils (5; 5a, 5b) der Hubkolbenmaschine in einer ersten Phase bei etwa 150° KW bis 240° KW, bevorzugt bei etwa 170° KW bis 220° KW und besonders bevorzugt bei etwa 180°KW bis 210° KW; und Zweites Schließen des ersten Ventils der Hubkolbenmaschine in einer zweiten Phase bei etwa 390°KW bis 450°KW, bevorzugt bei etwa 410°KW bis 430°KW und besonders bevorzugt bei etwa 420°KW.

In einer weiteren vorteilhaften Ausgestaltung des erfindungsgemäßen Verfahrens weist die Hubkolbenmaschine zumindest zwei erste Ventile auf und die beiden ersten Ventile werden gleichzeitig betätigt.

In einer weiteren vorteilhaften Ausgestaltung des erfindungsgemäßen Verfahrens weist die Hubkolbenmaschine zumindest zwei erste Ventile auf und der Schritt des ersten Öffnens weist folgende Unterschritte auf: Öffnen des einen ersten Ventils; und danach, Öffnen des anderen ersten Ventils. Wie schon im Vorhergehenden beschrieben, kann die Belastung der Komponenten der Ventilbetätigungseinrichtung durch das Hintereinander Betätigen der beiden ersten Ventile reduziert werden. Des Weiteren wird beim Betätigen von zwei Ventilen eine doppelte effektive Durchflussfläche gegenüber nur dem Betätigen von nur einem Ventil im Betriebsmodus Motorbremse erreicht.

In einer weiteren vorteilhaften Ausgestaltung des erfindungsgemäßen Verfahrens erfolgt das Öffnen des einen ersten Ventils bei etwa 660°KW bis 720°KW, bevorzugt bei etwa 680°KW bis 700°KW und besonders bevorzugt bei etwa 690°KW erfolgt und/oder das Öffnen des anderen ersten Ventils (5a) bei etwa 690°KW bis 30°KW, bevorzugt bei etwa 710°KW bis 10°KW und besonders bevorzugt bei 0°KW.

In einer weiteren vorteilhaften Ausgestaltung des erfindungsgemäßen Verfahrens wird bei dem Schritt des zweiten Öffnens nur das eine erste Ventil betätigt.

In einer weiteren vorteilhaften Ausgestaltung des erfindungsgemäßen Verfahrens weist der Schritt des ersten Schließens folgende Unterschritte auf: Schließen des anderen ersten Ventils; und danach, Schließen des einen ersten Ventils.

In einer weiteren vorteilhaften Ausgestaltung des erfindungsgemäßen Verfahrens erfolgt das Schließen des einen ersten Ventils bei etwa 180° KW bis 240° KW, bevorzugt bei etwa 200° KW bis 220° KW und besonders bevorzugt bei etwa 210°KW und/oder das Schließen des anderen ersten Ventils bei etwa 150° KW bis 210° KW, bevorzugt bei etwa 170° KW bis 190° KW und besonders bevorzugt bei etwa 180°KW.

In einer weiteren vorteilhaften Ausgestaltung weist das erfindungsgemäße Verfahren im Motorbetrieb des Weiteren den folgenden Schritt auf: Drittes Öffnen zumindest eines ersten Ventils der Hubkolbenmaschine bei etwa 120°KW bis 180°KW, bevorzugt bei etwa 140°KW bis 160°KW und besonders bevorzugt bei etwa 150°KW.

In einer weiteren vorteilhaften Ausgestaltung des erfindungsgemäßen Verfahrens weist die Hubkolbenmaschine zumindest zwei erste Ventile auf und die beiden ersten Ventile werden gleichzeitig betätigt.

Obige Vorteile, sowie weitere Vorteile, Merkmale und Anwendungsmöglichkeiten der vorliegenden Erfindung ergeben sich aus der nachfolgenden Beschreibung der bevorzugten Ausführungsform anhand der Figuren. In diesen ist wie folgt dargestellt:
Figur 1 zeigt eine teilweise schematische Darstellung von Ventilhebungskurven einer Verbrennungskraftmaschine im Motorbetrieb.
Figur 2 zeigt eine teilweise schematische Darstellung von Ventilhebungskurven einer Verbrennungskraftmaschine in einem Zwei-Phasen-Dekompressions-Motorbremsbetrieb gemäß der Erfindung.
Figur 3 zeigt eine teilweise schematische Darstellung der Entwicklung der effektiven Durchflussfläche der Ventile einer Verbrennungskraftmaschine im Zwei-Phasen-Dekompressions-Motorbremsbetrieb.
Figur 4 zeigt teilweise schematisch im P/V-Diagramm eine Entwicklung des Zylinderdrucks während den vier Takten einer Verbrennungskraftmaschine im Zwei-Phasen-Dekompressions-Motorbremsbetrieb.
Figur 5 zeigt teilweise schematisch Ventilhebungskurven für eine Verbrennungskraftmaschine im Motorbetrieb und im Miller-Zyklus-Betrieb.
Figur 6 zeigt teilweise schematisch Ventilhebungskurven einer Verbrennungskraftmaschine im Auslass-Abgasrückführungsbetrieb.
Figur 7 zeigt teilweise schematisch Ventilhebungskurven für eine Verbrennungskraftmaschine im Einlass-Abgasrückführungsbetrieb.
Figur 8 zeigt teilweise schematisch eine erste Ausführungsform der erfindungsgemäßen Ventilbetätigungseinrichtung in perspektivischer Draufsicht.
Figur 9 zeigt teilweise schematisch einen Schnitt durch einen Zylinderkopf einer Verbrennungskraftmaschine mit einer Ventilbetätigungseinrichtung gemäß der ersten Ausführungsform aus Fig. 8.
Figur 10 zeigt teilweise schematisch eine Ventilbetätigungseinrichtung gemäß der ersten Ausführungsform aus Fig. 8 in Explosionsansicht.
Figur 11 zeigt teilweise schematisch einen Querschnitt durch die erfindungsgemäße Ventilbetätigungseinrichtung gemäß der ersten Ausführungsform aus Fig. 8 entlang der Schnittebene III-III.
Figur 12 zeigt teilweise schematisch einen Querschnitt durch die erfindungsgemäße Ventilbetätigungseinrichtung gemäß der ersten Ausführungsform aus Fig. 8 entlang der Schnittebene II-II.
Figur 13 zeigt teilweise schematisch einen Querschnitt durch die erfindungsgemäße Ventilbetätigungseinrichtung gemäß der ersten Ausführungsform aus Fig. 8 entlang der Schnittebene I-I.
Figur 14 zeigt teilweise schematisch einen Querschnitt einer Ventilbetätigungseinrichtung gemäß der ersten Ausführungsform aus Fig. 8 entlang der Schnittebene II-II bei einem ersten Arbeitsschritt eines Verfahrens zur Motorbremsung.
Figur 15 zeigt teilweise schematisch einen Querschnitt durch eine erfindungsgemäße Ventilbetätigungseinrichtung gemäß der ersten Ausführungsform aus Fig. 8 während eines zweiten Arbeitsschrittes eines Verfahrens zum Motorbremsung samt Ventilen.
Figur 16 zeigt teilweise schematisch einen Querschnitt durch eine Ventilbetätigungseinrichtung gemäß einer ersten Ausführungsform der Ventilbetätigungseinrichtung aus Fig. 8 während eines dritten Arbeitsschrittes eines Verfahrens zur Motorbremsung samt Ventilen.
Figur 17a zeigt teilweise schematisch ein drittes Schaltelement im Motorbetrieb.
Figur 17b zeigt teilweise schematisch ein erstes Schaltelement im Motorbetrieb.
Figur 18a zeigt teilweise schematisch ein drittes Schaltelement im Motorbremsbetrieb.
Figur 18b zeigt teilweise schematisch ein erstes Schaltelement im Motorbremsbetrieb.
Figur 19 zeigt teilweise schematisch eine erfindungsgemäße Ventilbetätigungseinrichtung gemäß einer zweiten Ausführungsform der Erfindung.
Figur 20 zeigt teilweise schematisch einen Querschnitt durch die Ventilbetätigungseinrichtung gemäß der zweiten Ausführungsform aus Fig. 19 entlang der Schnittebene IV-IV.
Figur 21 zeigt teilweise schematisch eine erfindungsgemäße Ventilbetätigungseinrichtung gemäß einer dritten Ausführungsform der Erfindung in perspektivischer Draufsicht.
Figur 22 zeigt teilweise schematisch eine erfindungsgemäße Ventilbetätigungseinrichtung gemäß einer vierten Ausführungsform der Erfindung in perspektivischer Draufsicht.
Figur 23 zeigt teilweise schematisch eine Ventilbetätigungseinrichtung gemäß der vierten Ausführungsform aus Fig. 22 in perspektivischer entgegengesetzter Draufsicht.
Figur 24 zeigt teilweise schematisch eine erfindungsgemäße Ventilbetätigungseinrichtung gemäß einer fünften Ausführungsform in teilweiser Explosionsansicht.
Figur 25 zeigt teilweise schematisch eine Ventilbetätigungseinrichtung gemäß der fünften Ausführungsform aus Fig. 24 in perspektivischer Draufsicht.
Figur 26 zeigt teilweise schematisch einen Querschnitt durch eine Ventilbetätigungseinrichtung gemäß der fünften Ausführungsform aus Fig. 25 entlang der Schnittebene V-V mit deaktiviertem Auslesen von kleinen Nockenerhebungen.
Figur 27 zeigt teilweise schematisch einen Querschnitt durch eine Ventilbetätigungseinrichtung gemäß der fünften Ausführungsform aus Fig. 25 entlang der Schnittebene V-V mit aktiviertem Auslesen von kleinen Nockenerhebungen.
Figur 28 zeigt teilweise schematisch einen Querschnitt durch eine Ventilbetätigungseinrichtung gemäß der fünften Ausführungsform aus Fig. 25 entlang einer Schnittebene, in welcher die Achse des zweiten Schaltelements oder des sechsten Schaltelements und der zweiten Rückschlagventilanordnung liegen.
Figur 29 zeigt teilweise schematisch eine perspektivische Draufsicht auf eine Ventilbetätigungseinrichtung gemäß der fünften Ausführungsform aus Fig. 25.
Figur 30 zeigt eine teilweise schematische Darstellung von Ventilhebungskurven einer Verbrennungskraftmaschine in einem Zwei-Phasen-Dekompressions-Motorbremsbetrieb gemäß der Erfindung.
Figur 31 zeigt teilweise schematisch einen Querschnitt durch eine Kipphebelachse in welcher Zuleitungen für drei Betriebsmodi des Ventiltriebs, insbesondere Motorbetrieb, Motorbremsbetrieb und Zylinderdeaktivierung, sowie eine Schmiermittelleitung eingebracht sind.
Figur 32 zeigt teilweise schematisch ein hydraulisches Schaltbild einer Verbrennungskraftmaschine mit erfindungsgemäßer Ventilbetätigungseinrichtung mit drei Betriebsmodi des Ventiltriebs, insbesondere Motorbetrieb, Motorbremsbetrieb und Zylinderdeaktivierung.
Figur 33 zeigt teilweise schematisch einen Querschnitt durch eine Kipphebelachse mit Zuleitungen für vier Betriebsmodi des Ventiltriebs, insbesondere Motorbetrieb, Motorbremsbetrieb, Zylinderdeaktivierung und Miller-Zyklus-Betrieb.
Figur 34 zeigt teilweise schematisch ein hydraulisches Schaltbild einer Verbrennungskraftmaschine mit erfindungsgemäßen Ventilbetätigungseinrichtungen mit vier Betriebsmodi des Ventiltriebs, insbesondere Motorbetrieb, Motorbremsbetrieb, Zylinderdeaktivierung und Miller-Zyklus-Betrieb.
Figur 35 zeigt teilweise schematisch einen Querschnitt durch eine Kipphebelachse mit Zuleitungen für fünf Betriebsmodi des Ventiltriebs, insbesondere Motorbetrieb, Motorbremsbetrieb, Zylinderdeaktivierung, Miller-Zyklus-Betrieb und Abgasrückführungsbetrieb sowie einer Schmiermittelleitung.
Figur 36 zeigt teilweise schematisch ein hydraulisches Schaltbild einer Verbrennungskraftmaschine mit erfindungsgemäßen Ventilbetätigungseinrichtungen mit fünf Betriebsmodi des Ventiltriebs, insbesondere Motorbetrieb, Motorbremsbetrieb, Zylinderdeaktivierung, Miller-Zyklus-Betrieb und Abgasrückführungsbetrieb.
Figur 37 zeigt teilweise schematisch eine Draufsicht auf die Zylinderköpfe einer Verbrennungskraftmaschine mit Ventilbetätigungseinrichtung gemäß der ersten Ausführungsform der Erfindung aus Fig. 8.
Figur 38 zeigt teilweise schematisch eine perspektivische Draufsicht auf die Zylinderköpfe einer Verbrennungskraftmaschine mit erfindungsgemäßer Ventilbetätigungseinrichtung gemäß einer zweiten Ausführungsform der Erfindung aus Fig. 19.
Figur 39 zeigt teilweise schematisch eine perspektivische Draufsicht auf die Zylinderköpfe einer Verbrennungskraftmaschine mit erfindungsgemäßer Ventilbetätigungseinrichtung gemäß der dritten Ausführungsform der Erfindung aus Fig. 21.
Figur 40 zeigt teilweise schematisch eine perspektivische Draufsicht auf die Zylinderköpfe einer Verbrennungskraftmaschine mit erfindungsgemäßen Ventilbetätigungseinrichtungen gemäß der vierten Ausführungsform der Erfindung aus Fig. 22.
Figur 41 zeigt teilweise schematisch eine erfindungsgemäße Ventilbetätigungseinrichtung gemäß einer der Ausführungsformen der Erfindung für Motoren mit zwei oben liegenden Nockenwellen je Zylinderreihe in perspektivischer Draufsicht.
Figur 42 zeigt teilweise schematisch eine erste Ausführungsform zur Anordnung der Einlass- und Auslassventile bei einer erfindungsgemäßen Verbrennungskraftmaschine mit zwei oben liegenden Nockenwellen je Zylinderreihe.
Figur 43 zeigt teilweise schematisch eine zweite Ausführungsform zur Anordnung von Einlass- und Auslassventilen bei einer erfindungsgemäßen Verbrennungskraftmaschine mit zwei oben liegenden Nockenwellen je Zylinderreihe.

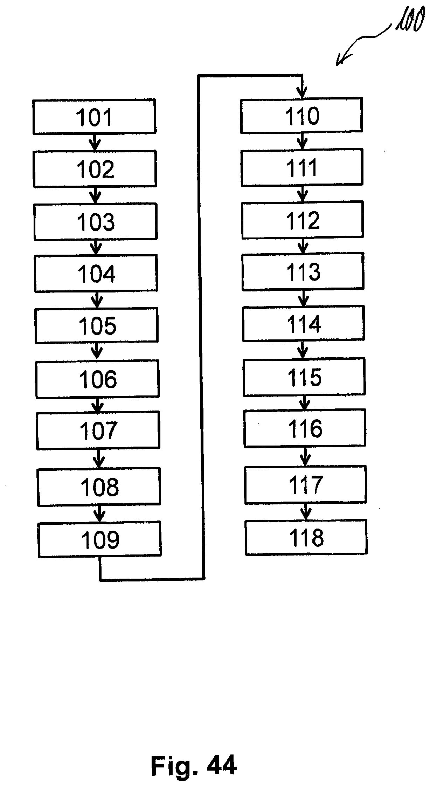

Figur 44 zeigt ein Blockdiagramm eines erfindungsgemäßen Verfahrens zur Ventilsteuerung.

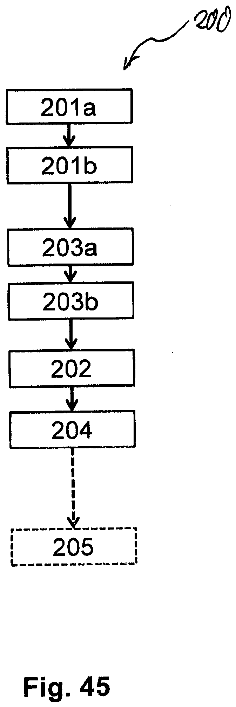

Figur 45 zeigt ein Blockdiagramm eines erfindungsgemäßen Verfahrens zur Ventilbetätigung.

Die Erfindung wird im Folgenden insbesondere anhand einer Anwendung derselbigen für den Motorbremsbetrieb einer Verbrennungskraftmaschine beschrieben, wobei das zumindest eine erste Ventil 5a, 5b rein bespielhaft auch als Auslassventil E bezeichnet wird. Der beschriebene Motorbremsbetrieb ist jedoch nur einer von vielen beispielhaften Anwendungsfällen der Erfindung und schränkt die Erfindung nicht auf diesen ein. Auch kann das zumindest eine erste Ventil 5a, 5b ein anderes Ventil des Motors sein, insbesondere auch zumindest ein Auslassventil. Insbesondere ist die Erfindung auch ganz allgemein für Hubkolbenmaschinen geeignet.

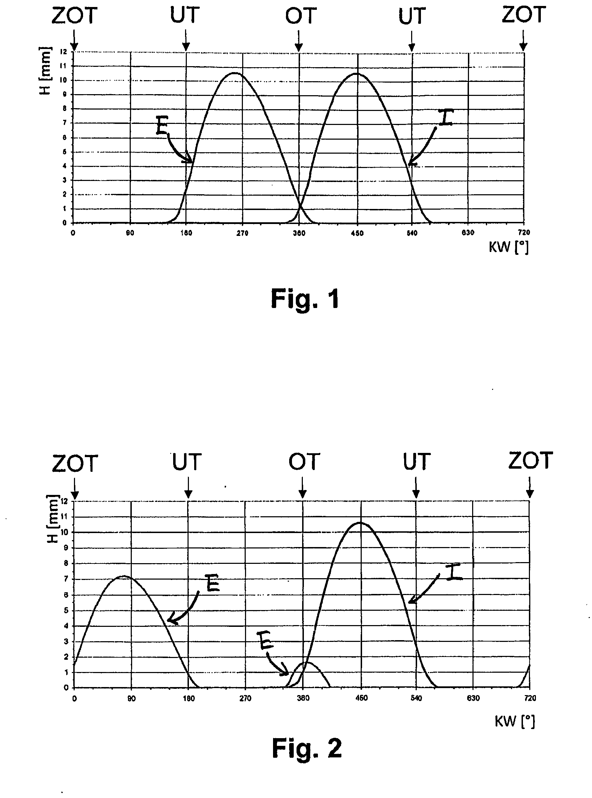

Figur 1 zeigt Ventilhebungskurven einer Verbrennungskraftmaschine im normalen Motorbetrieb, d.h. im Brennerbetrieb. Die Ventilhebungskurve E steht hierbei für das Auslassventil, die Ventilhebungskurve I für das Einlassventil, wobei jeweils der Ventilhub H über dem Kurbelwellenwinkel KW aufgetragen ist. Der erste Takt der Verbrennungskraftmaschine ist erfindungsgemäß vom oberen Totpunkt bei Zündung ZOT (0°KW) bis zum unteren Totpunkt des Motorkolbens UT (180°KW) definiert. Der zweite Takt der Verbrennungskraftmaschine ist vom unteren Totpunkt UT (180°KW) bis zum oberen Totpunkt bei Lastwechsel (360°KW) definiert. Der dritte Takt der Verbrennungskraftmaschine ist dann vom oberen Totpunkt bei Lastwechsel (360°KW) bis zu dem sich daran anschließenden unteren Totpunkt UT (540°KW) definiert. Der vierte Takt der Verbrennungskraftmaschine ist von diesem unteren Totpunkt UT (540°KW) bis wiederum zum oberen Totpunkt bei Zündung ZOT (720°KW = 0°KW) definiert.

Die Figur 2 stellt gegenüber dem Motorbetrieb verschobene Ventilhebungskurven des Auslassventils E im Zwei-Phasen-Dekompressions-Motorbremsbetrieb dar. Dieser Zwei-Phasen-Dekompressions-Motorbremsbetrieb zeichnet sich dadurch aus, dass das Auslassventil E kurz vor Erreichen des ZOT im vierten Takt und kurz vor Erreichen des OT im zweiten Takt geöffnet wird, wobei in diesem Betriebsmodus selbstverständlich keine Zündung durchgeführt wird. Durch die Öffnung des Auslassventils zu diesen Zeitpunkten kann das in dem Motorzylinder verdichtete Gas schlagartig über das Auslassventil durch die Abgasanlage der Verbrennungskraftmaschine entweichen. Mit dem Entweichen des verdichteten Gases geht dem System der Hubkolbenmaschine auch die an diesem verrichtete Arbeit verloren.

Im dritten Takt wird, wie auch im normalen Motorbetrieb, Gas über das Einlassventil I angesaugt. Zusätzlich wird während des ersten Takts über das Auslassventil E Gas in den Motorzylinder eingesaugt. Während jeweils des zweiten Takts und des vierten wird dieses Gas verdichtet.

Somit wird bei dem erfindungsgemäßen Zwei-Phasen-Dekompressions-Motorbremsbetrieb bevorzugt zweimal pro Arbeitszyklus des Motors, jeweils am Ende des vierten Taktes und am Ende des zweiten Taktes, über die Verdichtung des Gases verrichtete Bremsenergie aus der Hubkolbenmaschine über die Auslassventile abgeführt. Des Weiteren muss die Hubkolbenmaschine weitere Arbeit verrichten, um den Motorzylinder nach jeder Dekompression im ersten und dritten Takt wieder mit Gas zu befüllen. Durch das Verändern der Ventilhebungskurve des Auslassventils E kann somit, ohne weitere Ventile für einen Motorbremsbetrieb am Motorzylinder vorzusehen, während zwei Phasen eines Betriebszykluses, d.h. während beiden Umdrehungen der Kurbelwelle, der Verbrennungskraftmaschine jeweils ein mechanischer Widerstand einem der Hubkolbenmaschine von außen aufgezwungenes Drehmoment entgegengesetzt werden.

Durch das zweifache Öffnen des Auslassventils E kann die Dekompression besonders gut über die Abgasanlage erfolgen. Diese ist, entgegen dem Ansaugtrakt einer Verbrennungskraftmaschine auch dazu ausgelegt, hohe Drücke aus den Zylindern zu verarbeiten, insbesondere wenn zusätzlich eine Rückstaumotorbremse vorgesehen ist. Auch kann, obwohl nur die Ventilhebekurve des Auslassventils E verändert wird, eine zweifache Dekompression zu optimierten Zeitpunkten stattfinden.

Überraschenderweise hat sich gezeigt, dass ein Zwei-Phasen-Dekompressions-Motorbremsbetrieb besonders effektiv ist, wenn die Betätigung des zumindest einen ersten Ventils 5a, 5b, insbesondere eines Auslassventils, im Motorbremsbetrieb in der ersten Phase bei etwa 660° KW bis 720° KW, bevorzugt bei etwa 680° KW bis 700° KW und besonders bevorzugt bei etwa 690° KW und/oder mit einem Ventilhub von etwa 50% bis 100%, bevorzugt bei etwa 60% bis 90%, besonders bevorzugt bei etwa 70 % bis 80% und am bevorzugtesten etwa 75% des Ventilhubs im Motorbetrieb und in der zweiten Phase bei etwa 300° KW bis 360° KW, bevorzugt bei etwa 320° KW bis 340° KW, und besonders bevorzugt bei etwa 330° KW und/oder mit einem Ventilhub von etwa 5 % bis 25 %, bevorzugt etwa 10 % bis 20 %, und besonders bevorzugt etwa 15 % des Ventilhubs im Motorbetrieb erfolgt. Das Schließen des zumindest einen ersten Ventils 5a, 5b erfolgt in der ersten Phase bevorzugt bei etwa 180° KW bis 240° KW, bevorzugt bei etwa 200° KW bis 220° KW und besonders bevorzugt bei etwa 210° KW und in der zweiten Phase bei etwa 390°KW bis 450°KW, bevorzugt bei etwa 410°KW bis 430°KW und besonders bevorzugt bei etwa 420°KW.

Durch die Betätigung des ersten Ventils in diesen Kurbelwellenwinkelbereichen erfolgt eine Dekompression des Gases im Motorzylinder jeweils zu einem Zeitpunkt, kurz bevor der Motorkolben seinen oberen Totpunkt der Zündung (ZOT bei 0° KW) oder den oberen Totpunkt des Lastwechsels (OT bei 360° KW) erreicht. Hierdurch wird die an dem verdichteten bzw. komprimierten Gas verrichtete Arbeit besonders effektiv vernichtet, so dass eine sehr gute Motorbremsleistung erzielt wird.

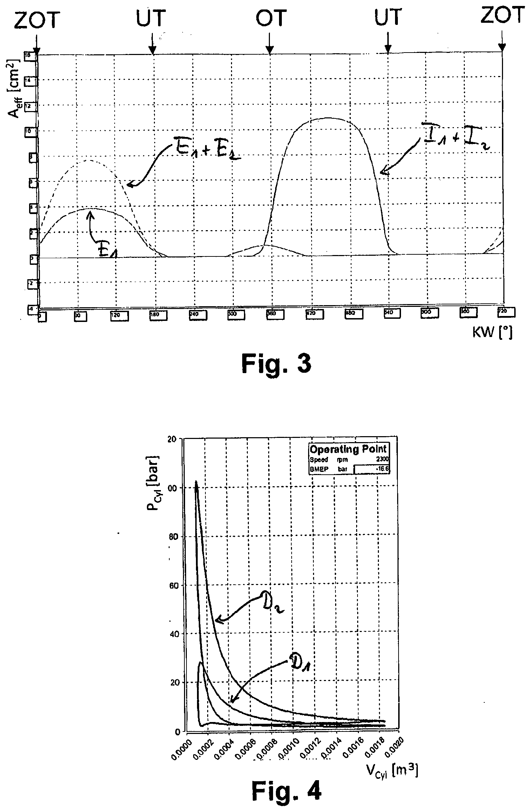

Hierbei ergeben sich P/V-Diagramme, wie sie in Fig. 4 dargestellt sind. Diese Figur veranschaulicht den Zylinderdruckverlauf des Zylinderdrucks mittels einer Druckzunahme während des zweiten Takts D1 mit rapidem Abfall durch die Dekompression beim Öffnen des Auslassventils am Ende des zweiten Taktes und eines rapiden zweiten Anstiegs des Drucks D2 während des vierten Taktes mit abrupter Abnahme des Druckes am Ende des vierten Taktes. Die Fläche unter der Kurve entspricht dabei der verrichteten Bremsarbeit. Mit dem Erfindungsgemäßen Verfahren kann dabei bevorzugt eine zweifache Bremsarbeit einer Verbrennungskraftmaschine erzielt werden. Dies sind wesentliche höhere Werte, insbesondere um 40% bis 90%, bevorzugt von 60% bis 80%, als bei Dekompressions-Motorbremssystemen des Standes der Technik, wo allenfalls eine einmalige Bremsarbeit pro Arbeitszyklus verrichtet werden kann.

Figur 3 zeigt ein Diagramm der effektiven Durchflussfläche in Quadratzentimetern der Einlassventile I und der Auslassventile E eines Zylinders während eines Zwei-Phasen-Dekompressions-Motorbremsbetriebs. Während für die Einlassventile I ausschließlich die Ventilhebungskurve für ein Öffnen von beiden Einlassventilen I₁ und I₂ bzw. zweiten Ventilen jeweils dargestellt ist, sind für die Auslassventile E sowohl die effektive Durchschnittsfläche der Öffnung beider Auslassventile E₁ und E₂ welche in diesem Ausführungsbeispiel die ersten Ventile (gestrichelt) darstellen, wie auch die effektive Durchschnittsfläche bei Öffnung nur eines Auslassventils E₁ dargestellt. Aus dem Diagramm der Fig. 3 ist ersichtlich, dass die effektive Durchflussfläche bei Öffnung beider Auslassventile E₁ und E₂ doppelt so groß ist als bei der Öffnung nur eines Auslassventils E₁.

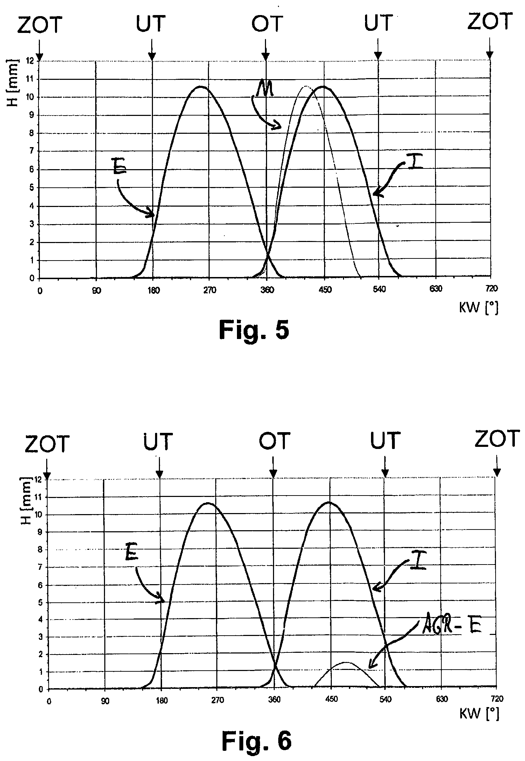

Figur 5 veranschaulicht eine Verschiebung der Ventilhebungskurve des Einlassventils I hin zu einem Miller-Zyklus-Betrieb M, welcher mit der erfindungsgemäßen Ventilbetätigungseinrichtung realisiert werden kann.

Figur 6 zeigt die Ventilhebungskurven eines Einlassventils I und eines Auslassventils E im internen Abgasrückführungs-Betrieb unter Benutzung des Auslassventils, welcher mit der erfindungsgemäßen Ventilbetätigungseinrichtung realisiert werden kann. Das Auslassventil E wird hierbei während des dritten Taktes der Verbrennungskraftmaschine, dem Einlasstakt, geöffnet, sodass auch Abgas aus der Abgasanlage der Verbrennungskraftmaschine zusammen mit dem zu verbrennenden Frischgas in den Motorzylinder strömt (Kurve AGR-E).

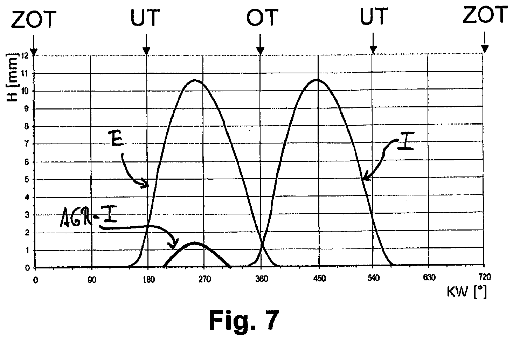

Figur 7 veranschaulicht die Ventilhebungskurven für einen internen Abgasrückführungsbetrieb unter Benutzung des Einlassventils I, welcher mit der erfindungsgemäßen Ventilbetätigungseinrichtung realisiert werden kann. Hierbei wird das Einlassventil während der Abblasphase im zweiten Takt der Verbrennungskraftmaschine zusammen mit dem Auslassventil geöffnet, sodass Abgas nicht nur in die Abgasanlage der Verbrennungskraftmaschine sondern auch in den Ansaugtrakt abgeblasen wird. Dieses Abgas wird im dritten Takt der Verbrennungskraftmaschine, dem Ansaugtakt, wiederum mit in den Motorzylinder zusammen mit dem zu verbrennenden Frischgas angesaugt (Kurve AGR-I).

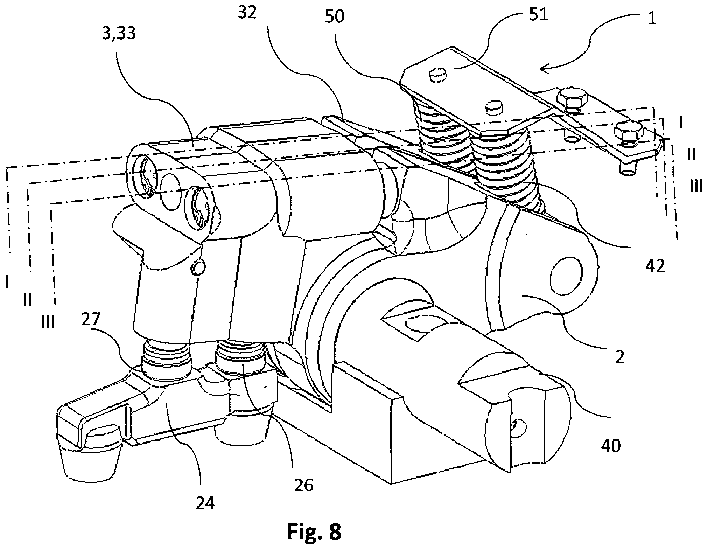

Figur 8 zeigt die erfindungsgemäße Ventilbetätigungseinrichtung 1 in einer ersten Ausführungsform der Erfindung. Diese weist bevorzugt einen ersten Kipphebelteil 2, einen zweiten Kipphebelteil 3 bzw. einen dritten Kipphebelteil 32 und einen vierten Kipphebelteil 33 auf. Der erste Kipphebelteil 2 und der dritte Kipphebelteil 32 liegen bevorzugt an den Nocken 18, 19, 20, 21, 22 einer Nockenwelle 4 an, indem sie bevorzugt von dem ersten Vorspannelement 42 und dem zweiten Vorspannelement 50 jeweils gegen die Kontur der Nocken 18, 19, 20, 21, 22 gedrückt werden. Die Vorspannelemente 42, 50 sind hierbei bevorzugt als Rückhaltefedern ausgebildet. Die von der jeweiligen Nockenkontur abgegriffene Ventilsteuerungsbewegung, insbesondere eine erste Ventilsteuerungsbewegung, wird bevorzugt über eine Schwenkbewegung des ersten Kipphebelteils 2 oder des dritten Kipphebelteils 32 um eine Kipphebelachse 40 auf den zweiten Kipphebelteil 3 bzw. vierten Kipphebelteil 33 übertragen.

Vorliegend werden der zweite Kipphebelteil 3 und der vierte Kipphebelteil 33 als einstückig ausgebildet dargestellt. Bevorzugt ist jedoch auch möglich, dass diese durch jeweils einen Kipphebelteil gebildet werden. Der einstückige Kipphebelteil 3, 33 überträgt die erste oder eine zweite Ventilsteuerungsbewegung durch eine weitere Schwenkbewegung um die Kipphebelachse 40 über den ersten Anschlag 26 und/oder den zweiten Anschlag 27 auf die Ventilbrücke 24, welche die erste oder zweite Ventilsteuerungsbewegung auf bevorzugt ein erstes Ventil 5a oder zwei erste Ventile 5a, 5b überträgt. Bevorzugt werden das erste Vorspannelement 42 und/oder das zweite Vorspannelement 50 dabei über eine Fixierungsvorrichtung 51 am Zylinderkopf einer Verbrennungskraftmaschine fixiert.

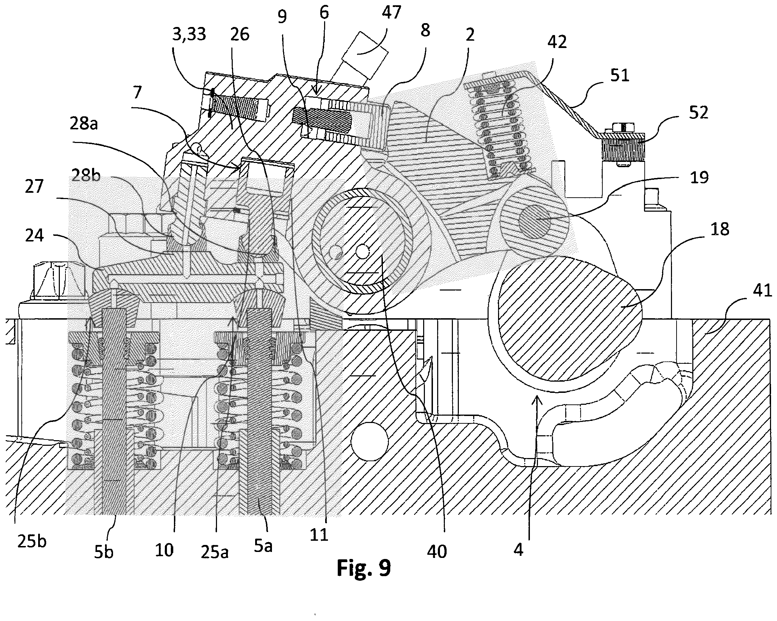

Figur 9 zeigt in einem Querschnitt im Bereich des Zylinderkopfes 41 einer Verbrennungskraftmaschine mit der Ventilbetätigungseinrichtung 1 gemäß der in Fig. 8 dargestellten ersten Ausführungsform. Der Abgriff der ersten Ventilsteuerungsbewegung an dem Nocken 18, insbesondere ein Bremsnocken, erfolgt bevorzugt über eine Rolle 52 an dem ersten Kipphebelteil 2. Genau so wäre es jedoch möglich, einen Abgriff über ein Gleiten des zweiten Kipphebelteils auf der Nocke 18 zu realisieren. Zwischen dem ersten Kipphebelteil 2 und dem zweiten Kipphebelteil 3 ist bevorzugt ein erstes Schaltelement 6 angeordnet, dessen erster Kolben 8 eine formschlüssige Verbindung zwischen dem ersten Kipphebelteil 2 und dem zweiten Kipphebelteil 3 herstellt. Des Weiteren weist der zweite Kipphebelteil 3 bevorzugt ein zweites Schaltelement 7 auf, welches bevorzugt einen zweiten Kolben 10 aufweist. Sowohl der erste Kolben 8 wie auch der zweite Kolben 10 können bevorzugt über ein Steuerfluid aktiviert werden, welches jeweils in den ersten Zylinder 9 und den zweiten Zylinder 11 eingebracht wird.

Die erste Ventilsteuerungsbewegung wird von dem zweiten Kipphebelteil 3 auf die Ventilbrücke 24 bevorzugt über einen ersten Anschlag 26 des zweiten Kolbens 10 oder über einen zweiten Anschlag 27 des zweiten Kipphebelteils 3 formschlüssig übertragen. Von der Ventilbrücke 24 wird die erste Ventilsteuerungsbewegung schließlich bevorzugt auf die Ventile 5a und 5b übertragen, welche in Ausnehmungen der Ventilbrücke 24 aufgenommen sind. Auch diese Übertragung geschieht bevorzugt formschlüssig. Der erste Anschlag 26 und der zweite Anschlag 27 weisen dabei jeweils bevorzugt ein zweites Gelenk 28a, 28b auf, um es den Anschlägen 26, 27 zu ermöglichen, sich an eine Schrägstellung der Ventilbrücke 24 anzupassen. Weiterhin weist die Ventilbrücke bevorzugt jeweils erste Gelenke 25a, 25b zu einem ersten Ventil 5a und zu dem anderen ersten Ventil 5b auf, mit welchem eine Schrägstellung der Ventilbrücke 24 gegenüber den ersten Ventilen ausgeglichen werden kann.

Insgesamt wird die erste Ventilsteuerungsbewegung bevorzugt von der Kontur des Nockens 18 über die Rolle 52, das erste Schaltelement 6, den zweiten Kipphebelteil 3 und das zweite Schaltelement 7 und den ersten Anschlag 26 bzw. über den zweiten Anschlag 27 auf die Ventilbrücke 24 und dann weiter an die ersten Ventile 5a und 5b formschlüssig übertragen. Über eine Aktivierung bzw. Deaktivierung des ersten Schaltelements 6 kann bevorzugt gesteuert werden, ob und in welchem Maße die erste Ventilsteuerungsbewegung des ersten Kipphebelteils 2 auf den zweiten Kipphebelteil 3 übertragen wird. Über eine Aktivierung bzw. Deaktivierung des zweiten Schaltelements 7 kann des Weiteren bevorzugt gesteuert werden, ob nur der erste Anschlag 26, zuerst der erste Anschlag 26 und dann der zweite Anschlag 27, oder der erste Anschlag 26 und der zweite Anschlag 27 gleichzeitig an der Ventilbrücke 24 angreifen.

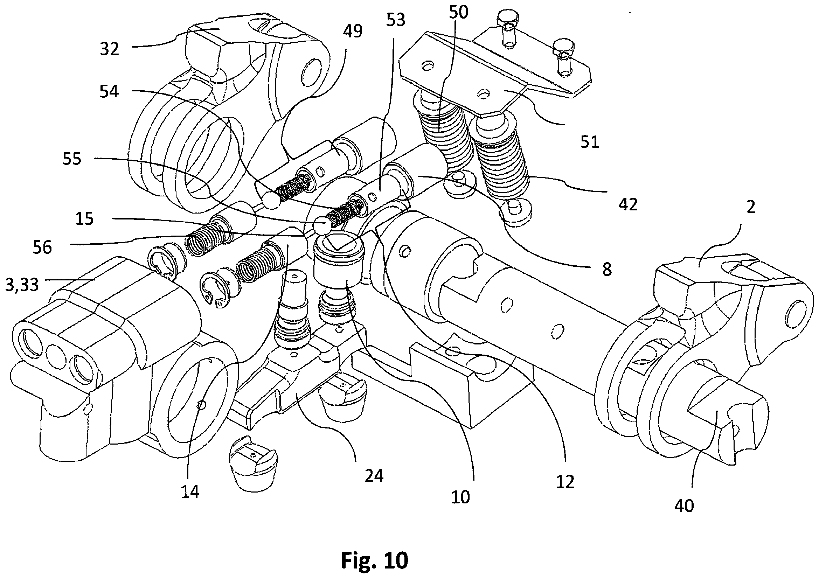

Figur 10 zeigt eine Explosionsansicht der Ventilbetätigungseinrichtung 1 gemäß der ersten Ausführungsform aus Fig. 8. Zusätzlich zu den schon in Bezug auf die Fig. 8 und Fig. 9 beschriebenen Elementen werden durch die Explosionsansicht die einzelnen Elemente des ersten Schaltelements 6 und des dritten Schaltelements 29 sichtbar. Vorliegend wird nur auf die Elemente des ersten Schaltelements 6 eingegangen, da das dritte Schaltelement 29 bevorzugt baugleich zu diesem ist.

Das erste Schaltelement 6 weist bevorzugt den ersten Kolben 8 auf, welcher in einem ersten Zylinder 9 angeordnet ist, der durch den zweiten Kipphebelteil 3 gebildet wird. Des Weiteren weist das erste Schaltelement 6 bevorzugt eine erste Rückschlagventilanordnung 12 auf, welche wiederum bevorzugt aus einem ersten Halteelement 53, insbesondere einem fluiddurchlässigen Zylinder mit kleinerem Durchmesser als der erste Kolben, einem ersten Schließkraftelement 54, insbesondere einer Feder, und einem ersten Schließelement 55, insbesondere einer Kugel, besteht. Des Weiteren weist das erste Schaltelement 6 bevorzugt einen ersten Hilfskolben 14, wobei der dazugehörige erste Hilfszylinder 13 bevorzugt auch durch den zweiten Kipphebelteil 3 gebildet wird sowie ein Öffnungskraftelement, insbesondere auch eine Feder, auf.

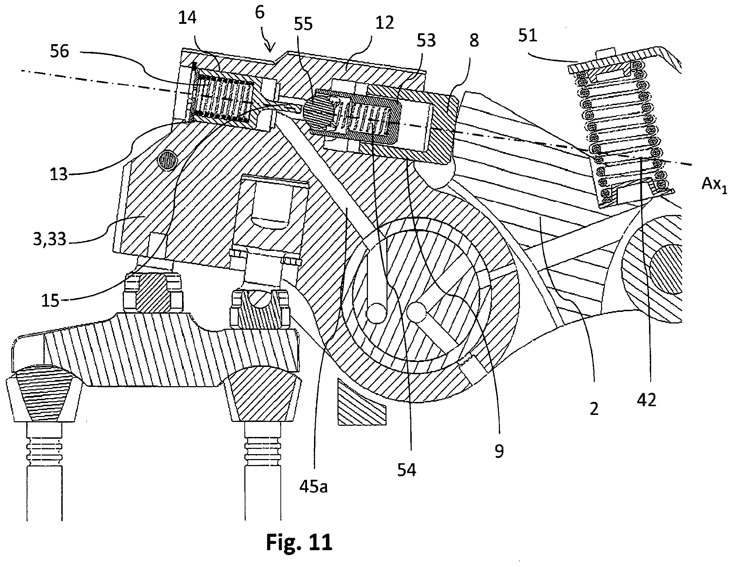

Figur 11 stellt einen Querschnitt der Ventilbetätigungseinrichtung 1 gemäß der ersten Ausführungsform in der Schnittebene III-III aus Fig. 8 dar. In dieser Darstellung ist auch ein Querschnitt durch das erste Schaltelement 6 umfasst. Bevorzugt sind der erste Zylinder 9 und der erste Hilfszylinder 13 achsgleich angeordnet, sodass auch die weiteren Elemente erster Kolben 8, erster Hilfskolben 14 und erstes Halteelement 53 achsgleich angeordnet sind. Auf das erste Schließelement wirkt bevorzugt eine Schließkraft des ersten Schließkraftelements 54. Ist, wie im vorliegenden Fall, ein Steuerfluid in den ersten Zylinder 9 über die Rückschlagventilanordnung 12 eingeströmt, so wirkt auf das erste Schließelement 55 auch eine Druckkraft des Steuerfluids, welche durch den ersten Kolben 8 erzeugt wird, wenn dieser durch den ersten Kipphebelteil 2 betätigt wird. Auf den ersten Hilfskolben 14 wirkt die Kraft des ersten Öffnungskraftelements 56, welches diesen und damit das Betätigungselement 15 in Richtung des ersten Schließelements 55 bewegt. Im vorliegenden Fall ist über eine erste Zuleitung 45a ein Steuerfluiddruck in dem ersten Hilfszylinder 13 aufgebaut, welcher bewirkt, dass der erste Hilfskolben 14 gegen die Öffnungskraft des Öffnungskraftelements 56 in einer zurückgeschobenen Stellung verbleibt.

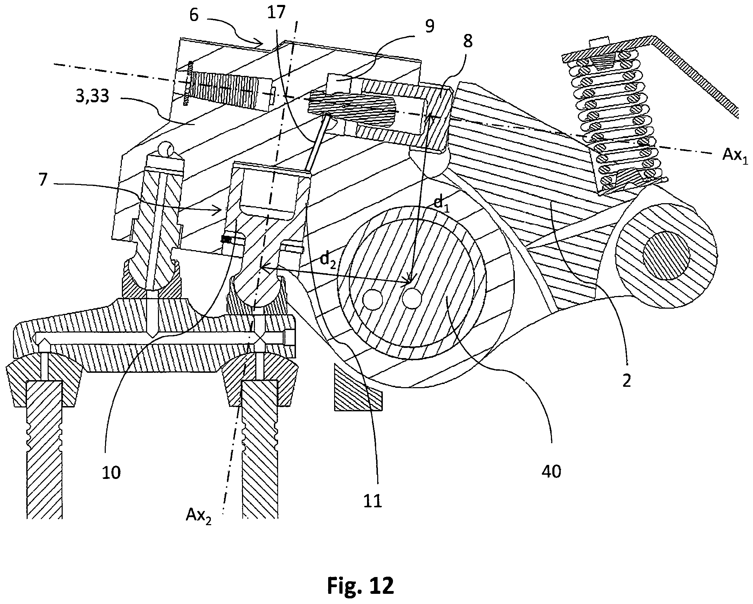

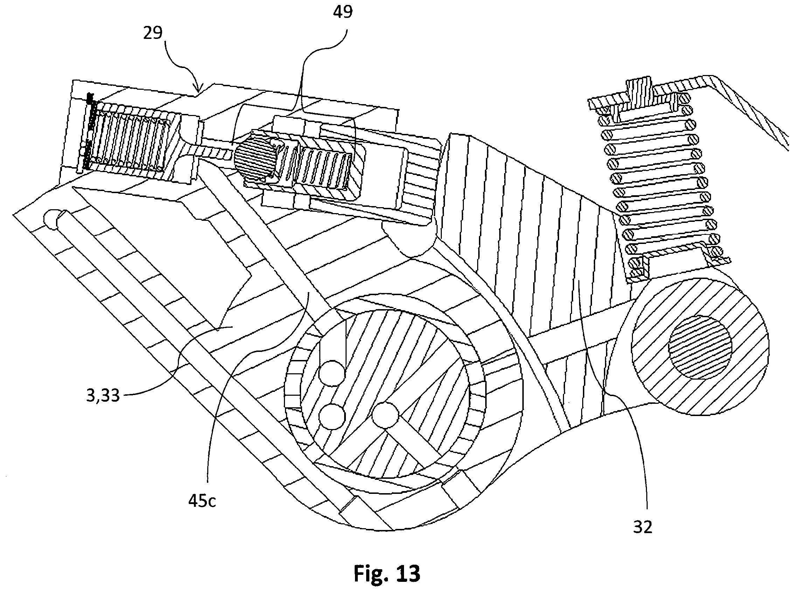

Figuren 12 und 13 stellen weitere Querschnitte entlang der Schnittebenen II-II und I-I der Ventilbetätigungseinrichtung 1 aus Fig. 8 dar. Deutlich ist zu erkennen, dass das dritte Schaltelement 29 mit der dritten Rückschlagventilanordnung 49 baugleich zum ersten Schaltelement 6 ist, wobei das dritte Schaltelement 29 bevorzugt über eine dritte Zuleitung 45c mit Steuerfluid versorgt wird. Weiterhin ist erkennbar, dass der erste Zylinder 9 des ersten Schaltelements 6 mit dem zweiten Zylinder 11 des zweiten Schaltelements 7 bevorzugt über eine erste Verbindungsleitung 17, bevorzugt fluidkommunizierend, verbunden ist. Durch die fluidkommunizierende Verbindung sind der erste Kolben 8 und der zweite Kolben 10 bevorzugt als Master-Slave-Kolbenanordnung verbunden. Über den Abstand d₁ der Achse Ax₁ des ersten Zylinders 9 zum Zentrum der Kipphebelachse 40 und den Abstand d₂ der Achse Ax₂ des zweiten Zylinders 11 zum Zentrum der Kipphebelachse 40 sowie über die Wirkfläche des ersten Kolbens 8 und die Wirkfläche des zweiten Kolbens 10 lässt sich somit kontrollieren, ob zunächst der erste Kolben 8 oder der zweite Kolben 10 aus einer deaktivierten Stellung in eine aktivierte Stellung geschoben wird und/oder in welcher Stellung sich der erste Kolben 8 und der zweite Kolben 10 in ihrem jeweiligen Zylinder befinden. Bevorzugt werden diese Relativstellungen von dem zweiten Kolben 10 bestimmt: ist dieser völlig ausgeschoben hat der erste Kolben 8 seine maximale Stellung noch nicht erreicht, da das durch den zweiten Kolben 10 erzeugte Drehmoment bevorzugt grösser ist als jenes durch den ersten Koben 8 erzeugte.

Wie aus den Fig. 12 und 13 des Weiteren hervorgeht, weist die Wirkrichtung des ersten Schaltelements 6, des zweiten Schaltelements 7 und/oder des dritten Schaltelements 29 zumindest eine senkrechte Komponente zu einer Kipphebelachse 40, insbesondere im Wesentlichen tangential zu einem Kreis um die Kipphebelachse 40 auf. Bevorzugt sind die Wirkrichtungen aller drei Schaltelemente 6, 7, 29 tangential zu einem Kreis um die Kipphebelachse 40. Besonders bevorzugt weist die Wirkrichtung des ersten Schaltelements 6, des zweiten Schaltelements 7 und/oder des dritten Schaltelements 29 zumindest eine parallele Komponente zur Bewegungsrichtung des ersten Kipphebelteils 2 und des zweiten Kipphebelteils 3 auf. Vorteilhafterweise stehen dabei die Wirkrichtung des ersten Schaltelements 6 und die Wirkrichtung des zweiten Schaltelements 7 und/oder die Achse Ax1 des ersten Schaltelements 6 und die Achse Ax2 des zweiten Schaltelements 7 in einem zweiten Winkel β etwa von 80° bis 100°, bevorzugt etwa von 85° bis 95° und am bevorzugtesten etwa von 90° zueinander.

Zusammenfassend lässt sich in Bezug auf die Fig. 12 und Fig. 13 festhalten, dass je nach Schaltzustand des ersten Schaltelements 6 und des dritten Schaltelements 29 eine erste Ventilsteuerungsbewegung über den ersten Kipphebelteil 2 und den zweiten Kipphebelteil 3 auf die ersten Ventile oder eine zweite Ventilsteuerungsbewegung über den dritten Kipphebelteil 32 und den vierten Kipphebelteil 33 auf die ersten Ventile 5a, 5b übertragen werden kann. Hierdurch kann bevorzugt der Ventilhub, der Ventilöffnungszeit-, der Ventilschließzeitpunkt und/oder auch die Ventilhubkurve im Allgemeinen verändert werden. Bevorzugt sind der zweite Kipphebelteil 3 und der vierte Kipphebelteil 33 einstückig ausgebildet. Hierdurch wird eine besonders hohe Systemintegration erreicht. Auch können das erste Schaltelement 6, das zweite Schaltelement 7 und/oder das dritte Schaltelement nicht als hydraulische Schaltelemente ausgebildet sein, sondern auch durch jede sonstige Vorrichtung verwirklicht sein, die sich als Schaltelement eignet. Insbesondere elektrische/elektronische Stellantriebe können als Schaltelemente verwendet werden.

Die Ventilbetätigungseinrichtung gemäß der ersten Ausführungsform der Erfindung bietet den besonderen Vorteil, dass durch das Zusammenwirken vom ersten Schaltelement 6 und zweitem Schaltelement 7 sowie durch die Anordnung des ersten Anschlags 26 über einem ersten Ventil 5a und des zweiten Anschlags 27 mittig zwischen dem einen ersten Ventil 5a und dem anderen ersten Ventil 5b die Möglichkeit besteht, bei Betätigung des zweiten Kipphebelteils 3 durch den ersten Kipphebelteil 2 beide erste Ventile 5a, 5b gleichzeitig, oder zunächst das eine erste Ventil 5a und dann das andere erste Ventil 5b zu öffnen. Selbiges gilt auch für den Schließvorgang.

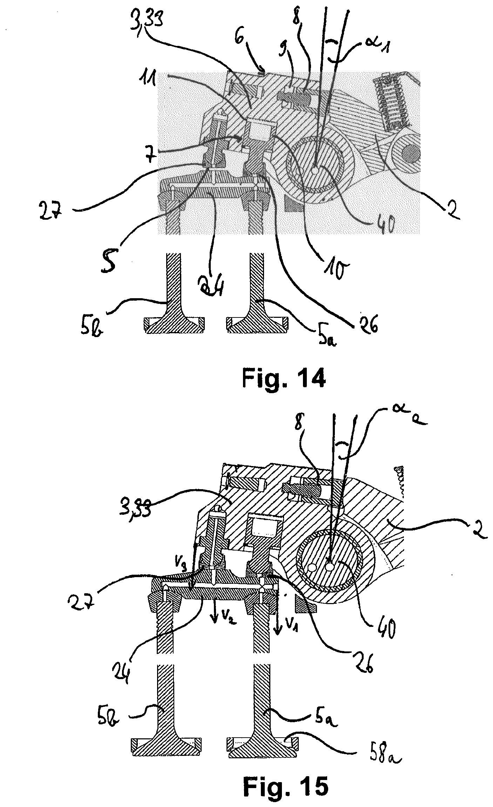

Ein entsprechendes Verfahren zur Ventilsteuerung wird anhand der Fig. 14 bis Fig. 16 erläutert, welche alle drei einen Querschnitt durch die Ventilbetätigungseinrichtung 1 gemäß der ersten Ausführungsform entlang der Schnittebene II-II aus Fig. 8 darstellen.

In einem ersten Arbeitsschritt, welcher in Fig. 14 dargestellt ist, werden der erste Zylinder 9 des ersten Schaltelements 6 und der zweite Zylinder 11 des zweiten Schaltelements 7 mit einem Steuerimpuls beaufschlagt, welcher insbesondere über die erste Zuleitung 45a und/oder die zweite Zuleitung 45b mittels des Steuerfluids übertragen wird. Wie schon in Bezug auf Fig. 12 grundsätzlich erläutert, wird aufgrund des Verhältnisses der Wirkfläche A₁ des ersten Kolbens 8 zu der Wirkfläche A₂ des zweiten Kolbens 10 und des Abstandes d₁ der Achse des ersten Zylinders 9 von der Kipphebelachse zu dem Abstand d₂ des zweiten Zylinders 11 zu der Kipphebelachse 40 (A₂*d₂ > A₁*d₂) zunächst nur der zweite Kolben in seine Endposition aus dem zweiten Zylinder 11 herausgedrückt, wohingegen der erste Kolben 8 noch in seiner Ausgangsstellung verbleibt oder nur in eine mittlere Steuerstellung aus dem ersten Zylinder 9 ausgefahren wird. Bevorzugt wird dieser Vorgang ausgeführt, wenn keine erste Ventilsteuerbewegung von dem ersten Kipphebelteil 2 an dem Nocken 18 abgegriffen wird. Durch das Zuführen des Steuerimpulses drückt der zweite Kipphebelteil 3 mit dem ersten Anschlag 26 auf die Ventilbrücke 24, wobei der erste Anschlag 26 bevorzugt außermittig an der Ventilbrücke 24 angreift und besonders bevorzugt im Bereich über einem ersten Ventil 5a angreift.

Durch den Druck, welchen der erste Anschlag 26 auf das eine erste Ventil 5a ausübt, stellt sich zwischen dem ersten Kipphebelteil 2 und dem zweiten Kipphebelteil 3 in Bezug auf die Kipphebelachse 40 ein Winkel α₁ ein. Gleichzeitig wird der zweite Anschlag 27 von der Ventilbrücke 24 abgehoben, so dass sich ein Spalt S zwischen dem Anschlag 27 und der Ventilbrücke 24 ausbildet.

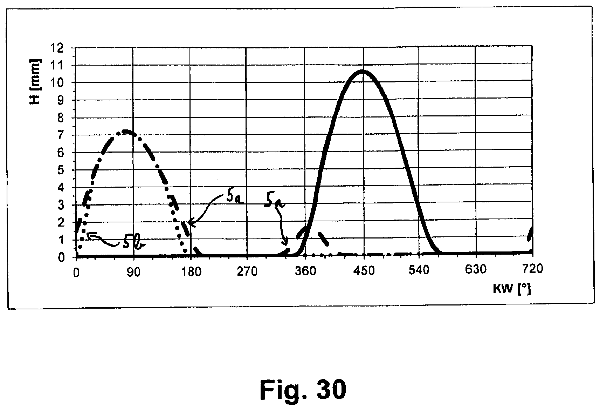

In einem zweiten Arbeitsschritt, welcher in Fig. 15 dargestellt wird, übt ein Nocken 18 bevorzugt über den ersten Kipphebelteil 2 und den ersten Kolben 8 eine Kraft bzw. ein Drehmoment auf den zweiten Kipphebel Teil 3 aus. Hierdurch wird der zweite Kipphebelteil 3 um die Kipphebelachse 40 in Richtung der ersten Ventile 5a, 5b, geschwenkt. Bis der zweite Anschlag 27 den Spalt S geschlossen hat, und an der Ventilbrücke 24 angreift, wird das eine erste Ventil 5a durch die Bewegung des zweiten Kipphebelteils 3 schon betätigt, wodurch dieses sich vom Ventilsitz abhebt und die Ventilöffnung 58a teilweise freigibt. Entsprechende Ventilhebungskurven für das eine erste Ventil 5a (gestrichelt) und das andere erste Ventil 5b (gepunktet) sind in Fig. 30 dargestellt. Die weiter dargestellte durchgezogene Ventilhebungskurve ist jene zumindest eines zweiten Ventils.

Durch das Öffnen des einen ersten Ventils 5a kann im Motorbremsbetrieb ein Großteil des verdichteten Gases im Zylinder entweichen. Da das Gas anfangs, also bei besonders hohem Druck, nur in geringen Mengen und allmählich über das wenig geöffnete eine erste Ventil 5a entweichen kann, wird wesentlich weniger Lärm erzeugt, als wenn sich beide Ventile gleichzeitig öffnen würden und der gesamte Überdruck des verdichteten Gases auf einen Schlag entwiche. Ein weiterer Vorteil der Anordnung liegt darin, dass die mechanische Belastung an der Ventilbetätigungseinrichtung 1 trotz des hohen Drucks beim Öffnen im Bremsbetrieb, insbesondere auf die Kipphebelteile 2, 3, 32, 33, 34, 35, 37, 38, durch das Öffnen nur des einen ersten Ventils 5a gering gehalten wird. Durch die Schwenkbewegung des zweiten Kipphebels Teil 3 wird das Ende der Ventilbrücke 24, an welcher der erste Anschlag 26 angreift, in eine Geschwindigkeit v₁ versetzt, welche in Fig. 15 durch einen Vektor angedeutet ist. Weil das andere Ende der Ventilbrücke 24 ruht, weist die Ventilbrücke in einem mittigen Bereich, in dem der zweite Anschlag 27 angreift, eine ungefähr um die Hälfte reduzierte Geschwindigkeit v₂ auf. In dem Moment, in dem der Spalt S geschlossen ist und der Anschlag 27 mit einer Geschwindigkeit v₃ auf der Ventilbrücke 24 auftrifft, wird die Stärke dieses Aufpralls dadurch verringert, dass die Ventilbrücke sich an der besagten Stelle schon mit einer Geschwindigkeit v₂ in die Richtung bewegt, in welche diese durch den Anschlag 27 ausgelenkt werden soll. Bevorzugt hat nun auch der erste Kolben 8 seine maximale ausgefahrene Schaltstellung erreicht, wodurch sich bevorzugt ein Winkel α₂ zwischen dem ersten Kipphebel 2 und zweiten Kipphebelteil 3 in Bezug auf die Kipphebelachse 40 ausbildet, welcher bevorzugt etwa gleich dem Winkel α₁ nach Fig. 14, bevorzugt jedoch etwas kleiner als der Winkel α₁ ist.

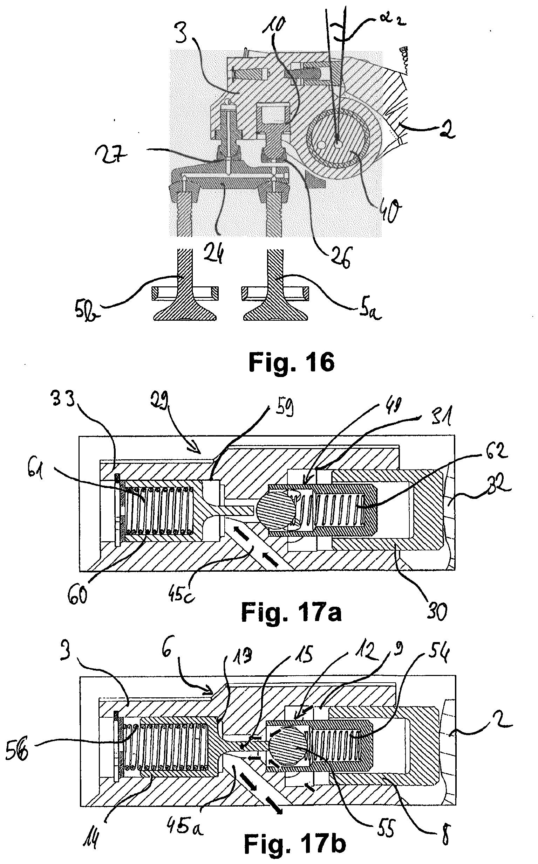

Figur 16 stellt die Stellung einer Ventilbetätigungseinrichtung 1 gemäß der ersten Ausführungsform nach einer Ausführung eines dritten Arbeitsschritts des Verfahrens zur Ventilbetätigung dar. Der zweite Kipphebelteil 2 ist nun durch den Nocken 18 soweit um die Kipphebelachse 40 geschwenkt und damit auch der zweite Kipphebelteil 3, dass bevorzugt nur noch der zweite Anschlag 27 die Ventilbrücke 24 betätigt. Der erste Anschlag 26 ist selbst bei maximal ausgefahrener Steuerstellung des zweiten Kolbens 10 bevorzugt nicht mehr in Kontakt mit der Ventilbrücke 24 oder wirkt zumindest keine Kraft mehr auf diese aus. Die Auslenkung der beiden ersten Ventile 5a, 5b wird nunmehr bevorzugt allein über die Betätigung des zweiten Anschlags 27 bewirkt. Weiter bevorzugt sind diese beiden Ventile 5a, 5b in diesem Zustand durch die bevorzugt mittige Anordnung des zweiten Anschlags 27 auf der Ventilbrücke 24 gleich weit geöffnet. Diese Stellung eignet sich sowohl für die Anwendung der ersten Ventile 5a, 5b als Auslassventile E während einer Ansaugphase im ersten Takt während eines Motorbremsbetriebs, als auch zum Abblasen von verbranntem (Ab-)Gas im zweiten Takt im Motorbetrieb oder auch für eine normale Betätigung der Einlassventile I im Motorbetrieb. Durch das Öffnen beider erster Ventile 5a, 5b, nachdem der maximale Druck aus dem Motorzylinder entwichen ist, kann im darauffolgenden Ansaugtakt ein optimales Befüllen des Motorzylinders erfolgen.

Anhand der Fig. 17a und Fig. 17b wird die Funktion des ersten Schaltelements 6 (Fig. 17b) und des dritten Schaltelements 29 (Fig. 17a) im Motorbetrieb im Folgenden erläutert.

Figur 17a zeigt das dritte Schaltelement 29. Durch die Zuleitung 45c wird diesem bevorzugt über das Steuerfluid ein Steuerimpuls hydraulisch zugeführt, was durch die Pfeile in der dritten Zuleitung 45c angedeutet ist. Durch diesen Steuerimpuls wird in den Hohlräumen des dritten Hilfszylinders 59 ein Druck erzeugt, welcher einen dritten Hilfskolben 60 gegen den Widerstand eines dritten Öffnungskraftelements 61, insbesondere eine Feder, von einer dritten Rückschlagventilanordnung wegbewegt. Gleichzeitig wird der dritte Zylinder 31 über eine fluidkommunizierende Verbindung befüllt, indem die dritte Rückschlagventilanordnung 49 über den Steuerimpuls des Steuerfluids geöffnet wird. Erreicht der Druck in dem dritten Zylinder 31 den Druck des Steuerfluids, so schließt die Rückschlagventilanordnung 49 durch die Kraft eines dritten Schließkraftelements 62, insbesondere einer Feder. Wird der dritte Kolben 30 durch den dritten Kipphebelteil 32 mit einer Kraft bzw. einem Drehmoment einer zweiten Ventilsteuerbewegung beaufschlagt, so verbleibt der dritte Kolben 30 im Wesentlichen in seiner durch den Steuerimpuls eingenommenen äußersten Steuerstellung und die Kraft bzw. das Drehmoment wird auf den vierten Kipphebelteil 33 übertragen.

Umgekehrt wird im Motorbetrieb das Steuerfluid aus dem ersten Schaltelement 6 über die erste Zuleitung 45a abgelassen. Aufgrund des geringen Drucks in dem ersten Hilfszylinder 13 bewegt sich der erste Hilfskolben 14 durch die auf ihn ausgeübte Kraft des ersten Öffnungskraftelements 56, insbesondere einer Feder, in Richtung der ersten Rückschlagventilanordnung 12, wodurch das Betätigungselement 15 das erste Schließelement 55, insbesondere eine Ventilkugel, gegen die Kraft des ersten Schließkraftelements 54 durch die Kraft des ersten Öffnungskraftelements 56 öffnet. Hierdurch öffnet sich eine fluidkommunizierende Verbindung zwischen dem ersten Zylinder 9 und dem ersten Hilfszylinder 13, so dass das Steuerfluid auch aus dem ersten Zylinder 9 ausströmt. Wird nunmehr eine Kraft bzw. ein Drehmoment von dem ersten Kipphebelteil 2 auf den ersten Kolben 8 ausgeübt, so verschiebt sich der erste Kolben 8 in den ersten Zylinder 9 und die Kraft bzw. das Drehmoment der ersten Ventilsteuerbewegung des ersten Kipphebelteils 2 wird nicht an den zweiten Kipphebelteil 3 übertragen, es handelt sich mithin also um eine "verlorene" Bewegung bzw. eine sogenannte "lost-motion".

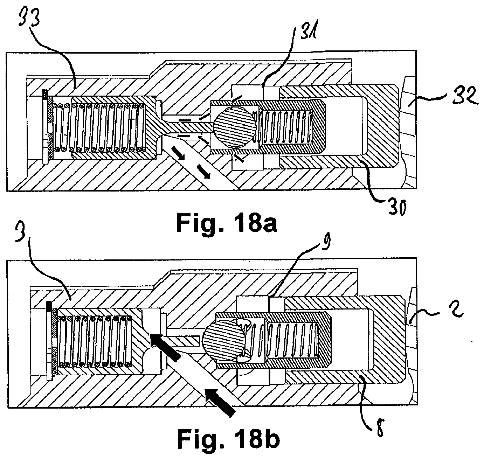

Die Fig. 18a und 18b stellen die Funktion des ersten Schaltelements 6 (Fig. 18b) und des dritten Schaltelements 29 (Fig. 18a) während des Motorbremsbetriebs dar. Die Funktion ist hierbei jeweils identisch zu den Ausführungen zu den Fig. 17a und 17b, wobei die Ausführungen in Bezug auf die Fig. 17a nunmehr auf die Fig. 18b und die Ausführung in Bezug auf die Fig. 17b nunmehr auf die Fig. 18a zutreffen. Letztendlich wird bei diesen vertauschten Schaltstellungen von dem dritten Kipphebelteil 32 keine Kraft bzw. kein Drehmoment einer zweiten Ventilbetätigungsbewegung mehr zu dem Kipphebelteil 33 übertragen, da der dritte Kolben 30 in den dritten Zylinder 31 verschoben werden kann. Andererseits wird nunmehr eine Kraft bzw. ein Drehmoment der ersten Ventilbetätigungsbewegung von dem ersten Kipphebelteil 2 über den ersten Kolben 8 zu dem zweiten Kipphebelteil 3 übertragen, da der erste Kolben 8 in dem ersten Zylinder 9 in einer ausgefahrenen Steuerstellung fixiert ist.

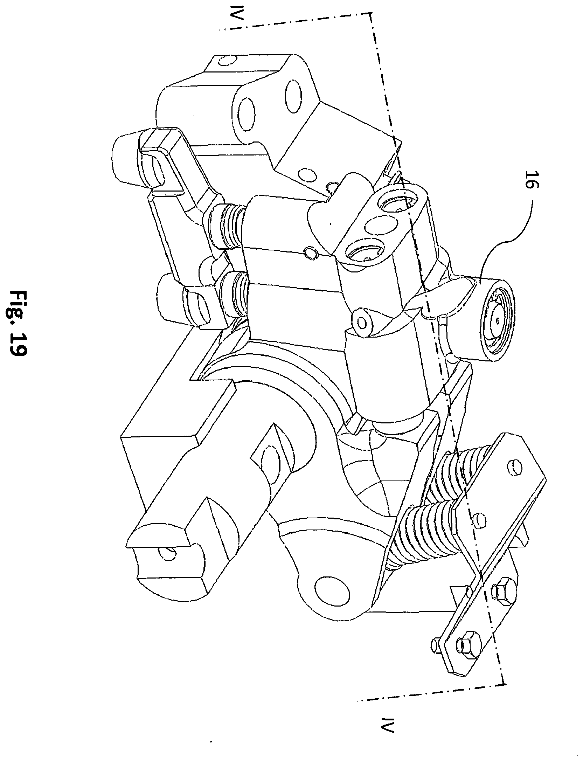

Figur 19 zeigt eine zweite Ausführungsform der erfindungsgemäßen Ventilbetätigungseinrichtung 1. Diese Ausführungsform unterscheidet sich von der ersten Ausführungsform im Wesentlichen dadurch, dass diese zusätzlich ein erstes Sperrelement 16 aufweist. Das erste Sperrelement 16 dient dazu, bei einem Druckabfall in einer Zuleitung 45a, 45b, 45c, 45d, 45e zu gewährleisten, dass ein Zylinder eine definierte Steuerstellung nicht verlässt. Dies ist insbesondere dann von Vorteil, wenn die Verbrennungskraftmaschine über längere Zeit im normalen Motorbetrieb betrieben werden soll und somit dauerhaft die Übertragung einer Ventilsteuerungsbewegung für den Normalbetrieb auf die Auslassventile E oder die Einlassventile I, z.B. kurzzeitig bei einem Abfall des Steuerdrucks für ein Schaltelement im Notbetrieb, gewährleistet werden soll. Weiterhin kann dies von Vorteil sein, wenn in den Zuleitungen 45a, 45b, 45c, 45d, 45e zu den Steuerelementen beim Starten einer Verbrennungskraftmaschine noch kein hydraulischer Steuerdruck aufgebaut ist, so dass die Schaltelemente 6, 7, 29, 36, 39 nicht gesteuert werden können. Sofern keine zusätzliche Steuerfluidpumpe, zum Beispiel eine elektrische Pumpe, vorgesehen ist, die unabhängig von der Funktion der Verbrennungsmaschine ein Steuerdruck in den Zuleitungen 45a, 45b, 45c, 45d, 45e aufbaut, so wäre ohne ein erstes Sperrelement 16 ein Starten der Verbrennungskraftmaschine nicht möglich.

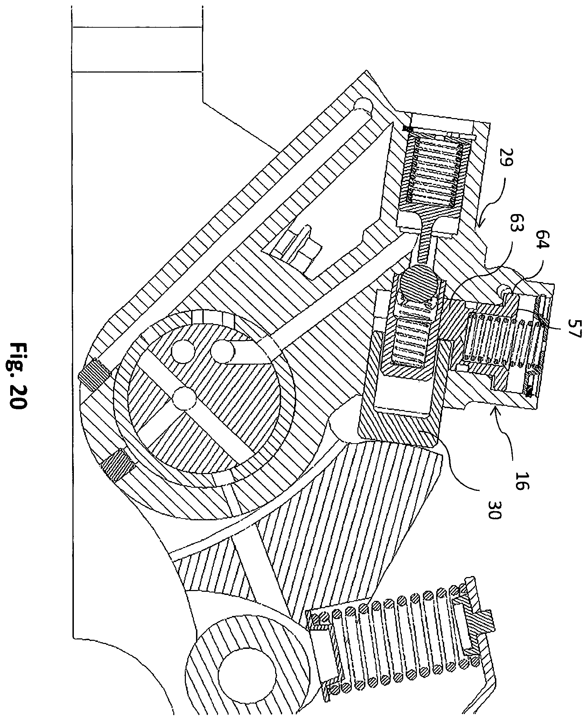

Wie in der Fig. 20 dargestellt, weist das erste Sperrelement 16 einen Sperrkolben 63 auf, welcher beispielsweise den dritten Kolben 30 des dritten Schaltelements 29 in einer ausgefahrenen Schaltstellung blockieren kann. Das Sperrelement 63 rastet dabei in einer Steuerstellung ein, sobald der Kolben 30 eine entsprechende Steuerstellung eingenommen hat. Um ein Blockieren des dritten Kolbens 30 und damit ein Übertragen der zweiten Ventilsteuerungsbewegung auf den vierten Kipphebelteil 33 im Motorbremsbetrieb zu verhindern, kann vorgesehen sein, den Sperrzylinder 64 fluidkommunizierend mit dem ersten Hilfszylinder 13 zu verbinden, sodass, immer wenn in dem ersten Hilfszylinder bzw. ein Steuerdruck bzw. ein Steuerimpuls anliegt, das erste Sperrelement 16 in einer geöffneten Stellung ist, da dieses mit dem gleichen Druck, welcher im ersten Hilfszylinder 13 anliegt, nach oben gedrückt wird. Auf diese Weise wird gewährleistet, dass immer nur die erste Ventilsteuerungsbewegung, nicht jedoch die zweite Ventilsteuerungsbewegung übertragen wird, selbst wenn sich der dritte Kolben 30 in die ausgefahrene Stellung, in welcher dieser im Normalfall durch das erste Sperrelement 16 bzw. den ersten Sperrkolben 63 blockiert wird, verschiebt.

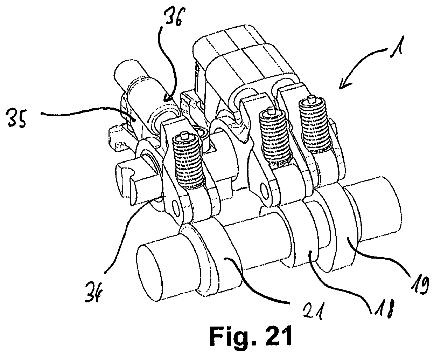

Figur 21 stellt eine dritte Ausführungsform der erfindungsgemäßen Ventilbetätigungseinrichtung 1 dar. Diese Ausführungsform weist zusätzlich einen fünften Kipphebelteil 34 und einen sechsten Kipphebelteil 35 auf sowie ein viertes Schaltelement 36. Mit diesen zusätzlichen Elementen kann eine dritte Ventilsteuerungsbewegung auf zumindest ein zweites Ventil (nicht dargestellt), im hier beschriebenen Ausführungsbeispiel das Einlassventil, übertragen werden, wobei die dritte Ventilsteuerungsbewegung zum Beispiel die durch die Kontur des Einlassnockens 21 vorgegebene Bewegung ausführt. Das Zusammenwirken der gegenüber der ersten Ausführungsform zusätzlichen Elemente ist dabei im Wesentlichen identisch zu den entsprechenden Elementen bei der ersten Ausführungsform. Selbstverständlich kann die dritte Ausführungsform mit der zweiten Ausführungsform kombiniert werden. Das Vorsehen eines Schaltelements 36, z.B. am Einlassventil, ermöglicht es, auch an diesem ein dynamisches Ventilspiel auszugleichen, eine Zylinderabschaltung durchzuführen, oder den Einlasszeitpunkt bzw. die Ventilhubkurve des Einlassventils I zu verändern, zum Beispiel zur Realisierung eines Miller-Zyklus-Betriebs oder Atkinson-Zyklus-Betriebs.

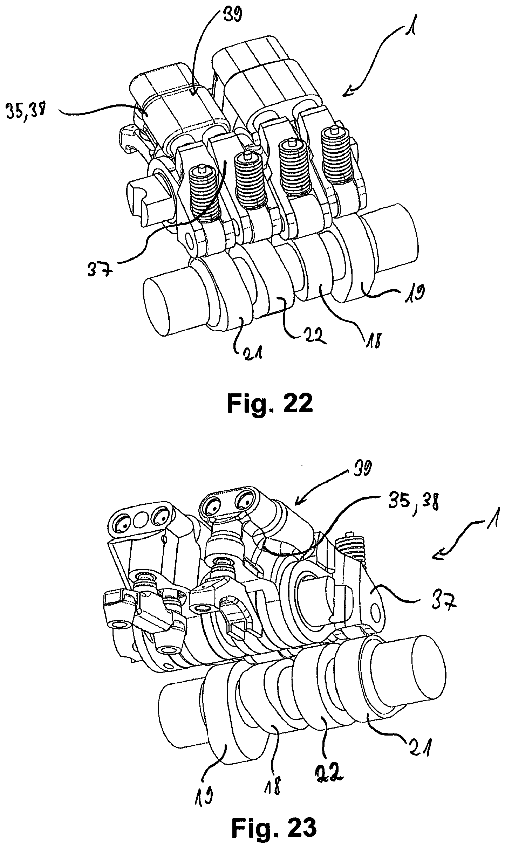

Figur 22 und 23 stellen eine vierte Ausführungsform der erfindungsgemäßen Ventilbetätigungseinrichtung 1 dar. Gegenüber der dritten Ausführungsform weist diese vierte Ausführungsform zusätzlich einen siebten Kipphebelteil 37 und einen achten Kipphebelteil 38 sowie ein fünftes Schaltelement 39 auf. Diese zusätzlichen Elemente ermöglichen es, eine vierte Ventilbetätigungsbewegung zum Beispiel von einem Miller-Nocken 22 auf zumindest ein zweites Ventil (nicht dargestellt), insbesondere ein Einlassventil I, zu übertragen. Das Zusammenwirken der gegenüber der ersten und zweiten Ausführungsform zusätzlichen Elemente ist dabei im Wesentlichen identisch zu den entsprechenden Elementen bei diesen Ausführungsformen. Selbstverständlich kann die dritte Ausführungsform mit der zweiten Ausführungsform kombiniert werden. Durch das Vorsehen der Übertragung einer vierten Ventilsteuerungsbewegung können beispielsweise auch die Einlassventile sowohl im Motorbetrieb als auch in einem anderen Betrieb, definiert durch die vierte Ventilsteuerungsbewegung, gesteuert werden. Bevorzugt sind, wie in Fig. 22 dargestellt, der sechste Kipphebelteil 35 und der achte Kipphebelteil 38 einstückig ausgebildet, wodurch auch hier eine hohe Systemintegration erreicht wird.

Auch das vierte Schaltelement und/oder das fünfte Schaltelement weisen bevorzugt jeweils einen Kolben und einen Zylinder zur hydraulischen Ansteuerung auf. Wie in Bezug auf das erste und das dritte Schaltelement beschrieben, können auch diese Schaltelemente auf andere Weise, bevorzugt als elektrische/elektronische Schaltelemente, realisiert sein.

In Bezug auf weitere Einzelheiten des Aufbaus der Gesamtheit fünfter Kipphebelteil 34, sechster Kipphebelteil 35, viertes Schaltelement 36, siebter Kipphebelteil 37, achter Kipphebelteil 38 und fünftes Schaltelement 39 wird auf die Ausführungen bezüglich der ersten Ausführungsform und der zweiten Ausführungsform in Bezug auf die Fig. 8 bis 20 verwiesen. Insbesondere kann auch diese Gesamtheit ein zweites Sperrelement aufweisen.

Mit allen vorgenannten Ausführungsformen der Ventilbetätigungseinrichtung, insbesondere jedoch mit der dritten oder der vierten Ausführungsform, können variable Ventilsteuerungen bzw. variable Ventiltriebe realisiert werden. In diesem Fall erfolgt das selektive Zuleiten des Steuerimpulses in einem Betriebsmodus erster Motorbetrieb nur zum ersten Schaltelement 6 und/oder zweiten Schaltelement 7 und vierten Schaltelement 36 oder fünftem Schaltelement 39 und in einem Betriebsmodus zweiter Motorbetrieb nur zum dritten Schaltelement 29 und vierten Schaltelement 36 oder fünftem Schaltelement 39. Beide Motorbetriebe können hierbei sowohl für das zumindest eine erste Ventil, insbesondere ein Auslassventil E, als auch für das zumindest eine zweite Ventil, insbesondere ein Einlassventil I, grundsätzlich verschiedene Ventilhebungskurven vorsehen. Durch das Hinzufügen weiterer Kipphebelteile und Nocken auf der Nockenwelle können ferner weitere Betriebsmodi des Motorbetriebs vorgesehen sein.

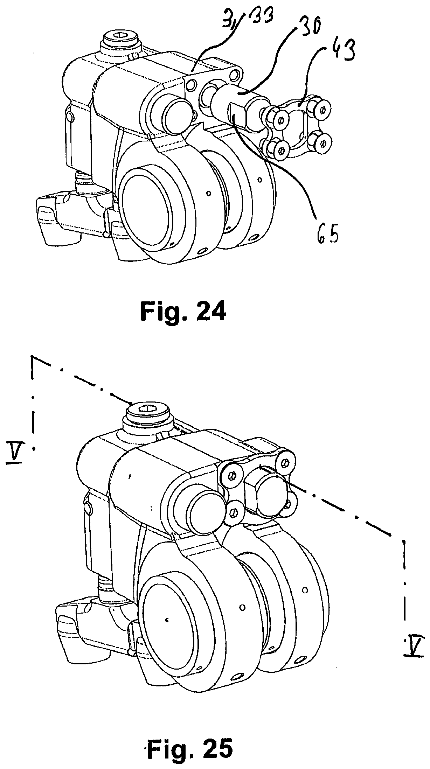

Figur 24 und Fig. 25 stellen eine fünfte Ausführungsform der erfindungsgemäßen Ventilbetätigungseinrichtung 1 dar. Diese unterscheidet sich von der ersten, der dritten und der vierten Ausführungsform dadurch, dass zusätzlich ein Begrenzungselement 43 vorgesehen ist, welches bevorzugt zur Begrenzung der Steuerstellung des dritten Kolbens 30 an dem vierten Kipphebelteil 33 montierbar ist. Das Zusammenwirken der gegenüber der ersten Ausführungsform zusätzlichen Elemente ist dabei im Wesentlichen identisch zu den entsprechenden Elementen bei der ersten, dritten und vierten Ausführungsform.

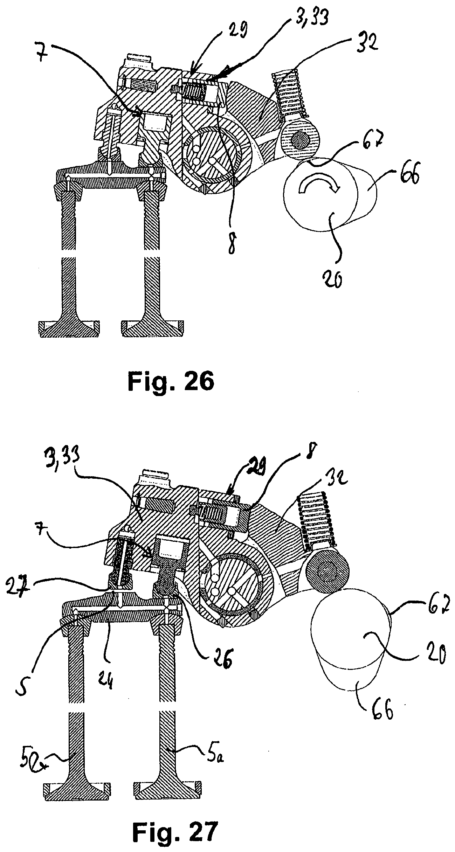

Selbstverständlich kann die fünfte Ausführungsform mit der ersten, dritten und vierten Ausführungsform und/oder mit der zweiten Ausführungsform kombiniert werden. Der dritte Kolben 30 weist hierbei bevorzugt zumindest eine Begrenzungsnut 65 auf, die mit dem Begrenzungselement 43 zusammenwirkt. Die Begrenzungsnut 65 verläuft zumindest über Teile des Umfangs des dritten Kolbens 30. Wie in Fig. 25 dargestellt, wird das Begrenzungselement 43 bevorzugt auf eine den dritten Kolben 30 umgebende Stirnfläche des vierten Kipphebelteils 33 aufgeschraubt. Entsprechend könnte das Begrenzungselement 43 auch an dem achten Kipphebelteil 38 der vierten Ausführungsform nach Figur 22 angeordnet sein, wobei dann die Bewegung des fünften Schaltelements 39 begrenzt würde. Für verschiedene zu realisierende Betriebsarten, z.B. den Abgasrückführungsbetrieb, ist dann bevorzugt ein sechstes Schaltelement vorhanden, welches dem zweiten Schaltelement 7 in der Fig. 26 entspricht.

Anhand der Fig. 26 und Fig. 27 wird im Folgenden die Funktion des Begrenzungselements 43 beschrieben. In diesem Fall kann das zweite Schaltelement 7 unabhängig von dem ersten Schaltelement 6 über eine zweite Zuleitung 45b mit einem Steuerimpuls beaufschlagt werden. Ist das dritte Schaltelement 29 aktiviert und das zweite Schaltelement 7 deaktiviert, so bildet sich zwischen dem einstückigen zweiten / vierten Kipphebelteil 3, 33 und dem dritten Kipphebelteil 32 eine Lücke aus, da das dritte Schaltelement 29 bzw. der dritte Kolben 30 nicht mehr so weit ausfahren können, dass dieser in Kontakt mit dem dritten Kipphebelteil 32 kommen kann. Aufgrund dieser Lücke werden nur große Erhebungen 66 des Nockens 20 vom ersten Kipphebelteil 2 auf den einstückigen zweiten / vierten Kipphebelteil 3, 33 übertragen. Kleine Erhebungen 67 werden dagegen nicht übertragen und führen somit zu einer verlorenen Bewegung des dritten Kipphebelteils 32.

In Fig. 27 sind dagegen sowohl das zweite Schaltelement 7 als auch das dritte Schaltelement 29 aktiviert. Aufgrund der Aktivierung des Schaltelements 7 wird der Anschlag 27 von der Ventilbrücke 24 abgehoben, sodass sich ein Spalt S zwischen dem zweiten Anschlag 27 und der Ventilbrücke 24 ausbildet. Der dritte Kolben 30 ist nunmehr dauerhaft in Kontakt mit dem dritten Kipphebelteil 32, sodass jede Erhebung 66, 67 des Nockens 20 zu einer Öffnung zumindest eines Ventils führt. Im Falle der kleinen Erhebung 67 ist dies nur das eine erste Ventil 5a, da der Spalt S durch eine von dieser Erhebung erzeugte Ventilsteuerbewegung nicht vollständig geschlossen wird. Im Falle der großen Erhebung 66 sind dies beide ersten Ventile 5a und 5b, wobei hierbei, entsprechend zu der in Figur 16 dargestellten Funktion, bevorzugt der erste Anschlag 26 von der Ventilbrücke 24 durch die Betätigung des zweiten Anschlags 27 der Ventilbrücke 24 abgehoben wird. Eine Konfiguration, wie in der Fig. 26 und der Fig. 27 gezeigt, eignet sich insbesondere für die Realisierung eines internen Abgasrückführungsbetriebs, wie dieser auch in der Fig. 6 und der Fig. 7 dargestellt wird. Während die große Erhebung 66 den "normalen" Ventilhub zum Betrieb der Verbrennungskraftmaschine im Motorbetrieb definiert, definiert die kleine Erhebung 67 des Nockens 20, insbesondere ein AGR-Nocken, eine Ventilhebungskurve während der jeweiligen Öffnungsphase des anderen Ventils, d.h. des Auslassventils E oder des Einlassventils I. Hierdurch wird entweder während dem dritten Takt zusätzlich zum Verbrennungsgemisch Abgas aus der Abgasanlage der Verbrennungskraftmaschine angesaugt oder während des zweiten Takts Abgas in den Ansaugtrakt des Motors abgeblasen, sodass dieses wiederum während des dritten Taktes in den jeweiligen Motorzylinder eingesaugt wird.

Wird die Ventilbetätigungseinrichtung gemäß der fünften Ausführungsform beispielsweise für den Abgasrückführungsbetrieb eingesetzt, so ist es vorteilhaft, wenn das zweite Schaltelement 7 bzw. ein entsprechendes sechstes Schaltelement unabhängig von dem ersten Schaltelement 6 betätigt werden kann. Um dennoch zu gewährleisten, dass das zweite Schaltelement 7 oder das sechste Schaltelement auch bei hohen Belastungen nicht seine Steuerstellung verlässt, ist in dieser Ausführungsform bevorzugt eine zweite Rückschlagventilanordnung 68 vorhanden, welche in ihrer Funktionsweise im Wesentlichen identisch zu der anhand der Fig. 17a,17b, 18a und 18b beschriebenen ersten Rückschlagventilanordnung 12 ist.

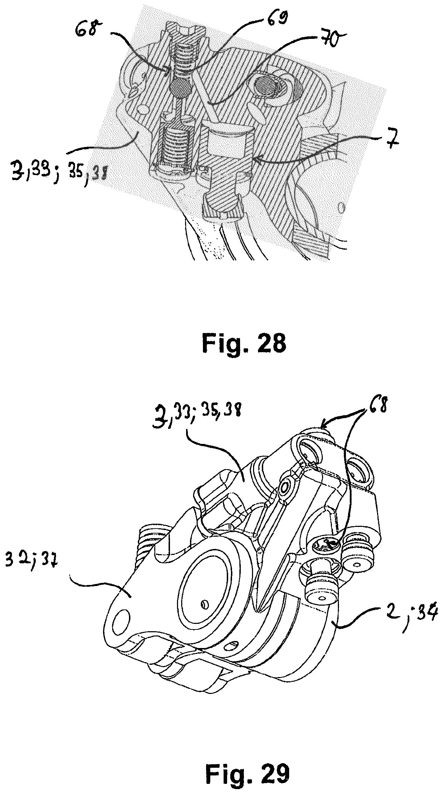

Wie anhand der Fig. 28 und 29 dargestellt, ist diese zweite Rückschlagventilanordnung 68 bevorzugt in dem vierten Kipphebelteil 33 oder in dem achten Kipphebelteil 38, im Wesentlichen parallel zu dem zweiten Schaltelements 7 oder sechsten Schaltelement angeordnet. Die fluidkommunizierende Verbindung zwischen dem zweiten Kolben 10 und dem Hochdruckraum 69 erfolgt hierbei über eine Hochdruckleitung 70.

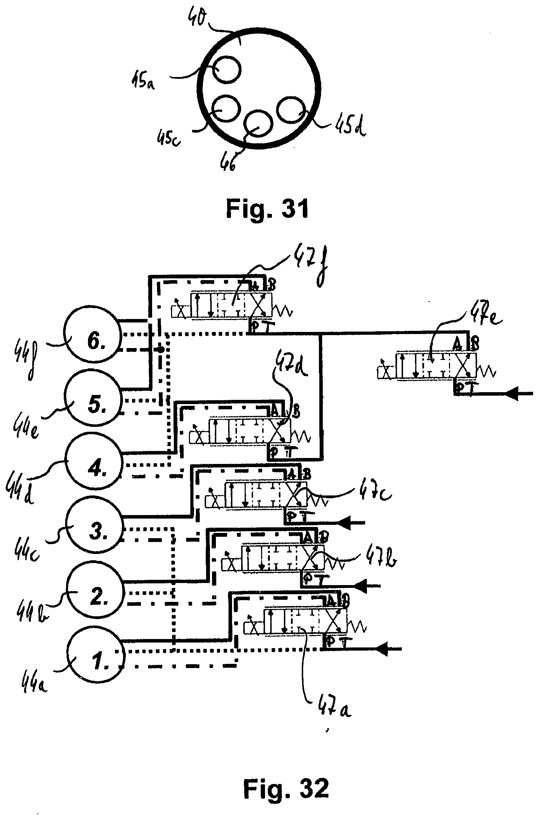

Im Folgenden werden anhand der Fig. 32, Fig. 34 und Fig. 36 verschiedene Verschaltungen von Schaltventilen 47 mit der jeweiligen Ventilbetätigungseinrichtung 1 von sechs Motorzylindern 44a, 44b, 44c, 44d, 44e, 44f einer Verbrennungskraftmaschine mit verschiedener Anzahl an Funktionalitäten dargestellt.

Figuren 31, Fig. 33 und Fig. 35 stellen hierbei die jeweilige dazugehörige Ausgestaltung der Kipphebelachse 40 mit den verschiedenen Zuleitungen dar, welche für die jeweiligen Funktionalitäten der Betriebsmodi der Brennkraftmaschine erforderlich sind. Als Schaltventile sind insbesondere 4/2-Wege-Solenoid-Ventile eingesetzt. Für die Schaltventile 47e und 47g können auch 2/2-Wege-Solenoid-Schaltventile zum Einsatz kommen.

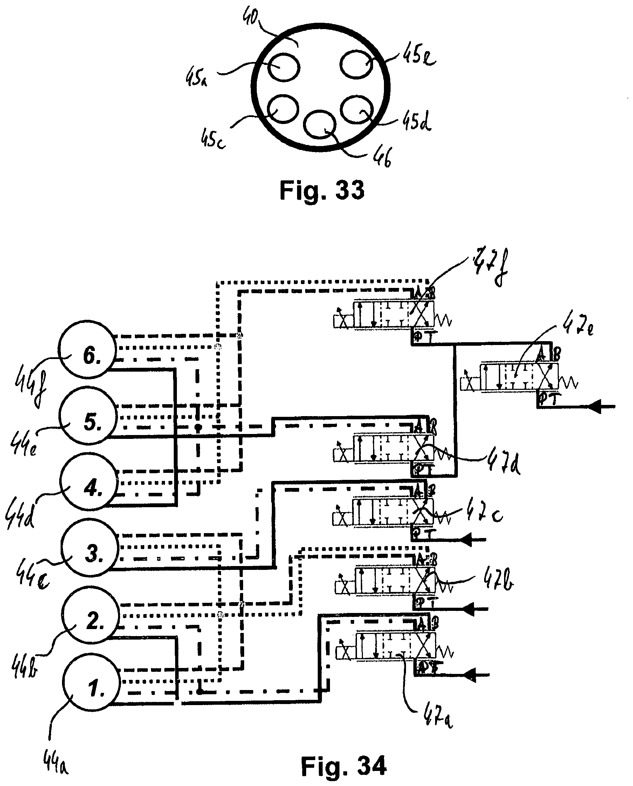

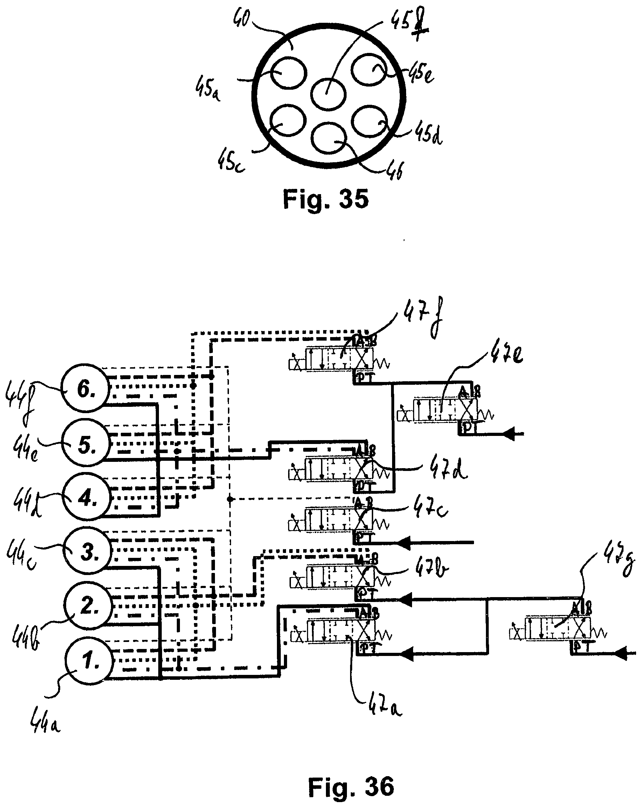

Die Verschaltungen sind nicht auf Verbrennungskraftmaschinen mit sechs Zylindern beschränkt, sondern könnten auch bei vier, acht, zwölf oder einer anderen geraden oder ungeraden Anzahl an Motorzylindern zum Einsatz kommen. Die Verschaltung nach Fig. 32 umfasst dabei die Funktionen Normalbetrieb, Motorbremsbetrieb und Zylinderdeaktivierung der Verbrennungskraftmaschine. Die Verschaltung gemäß der Fig. 34 umfasst dabei die Funktionen Normalbetrieb, Motorbremsbetrieb, Zylinderdeaktivierung und Miller-Zyklus-Betrieb der Verbrennungskraftmaschine. Die Verschaltung gemäß der Fig. 36 umfasst dabei die Funktionen Normalbetrieb, Motorbremsbetrieb, variable Zylinderdeaktivierung, Miller-Zyklus-Betrieb und internen Abgasrückführungsbetrieb.

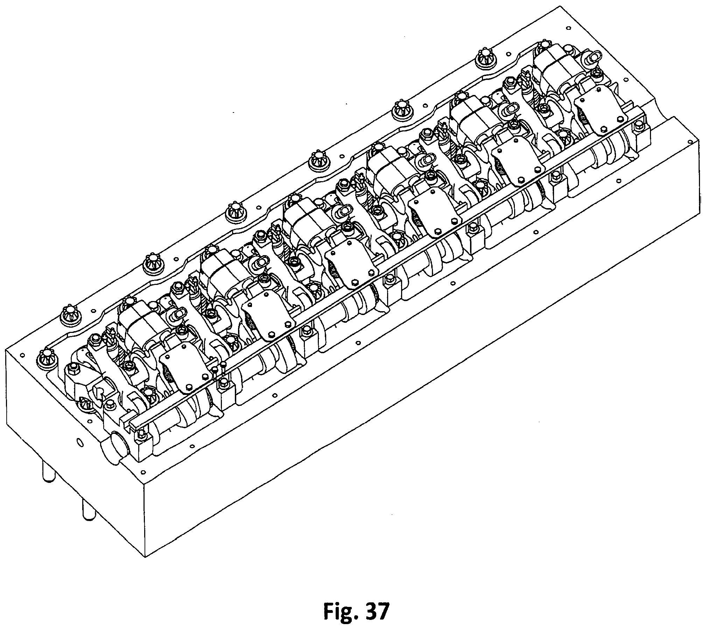

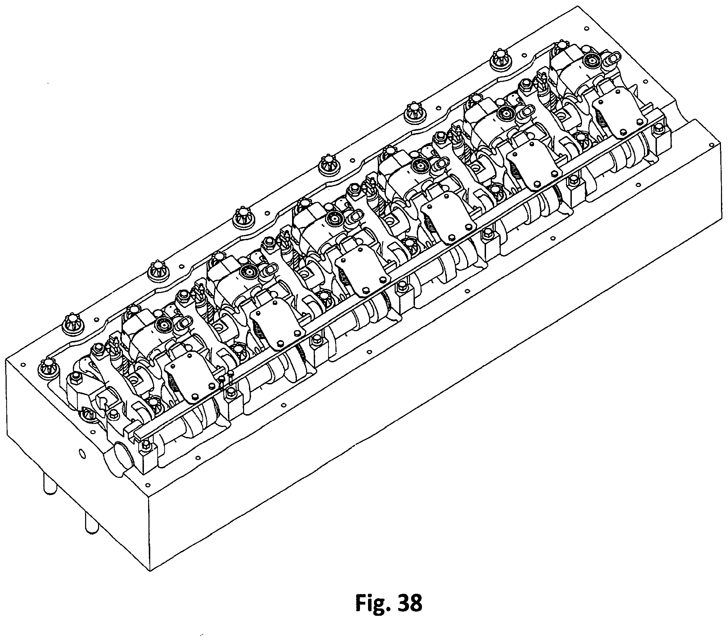

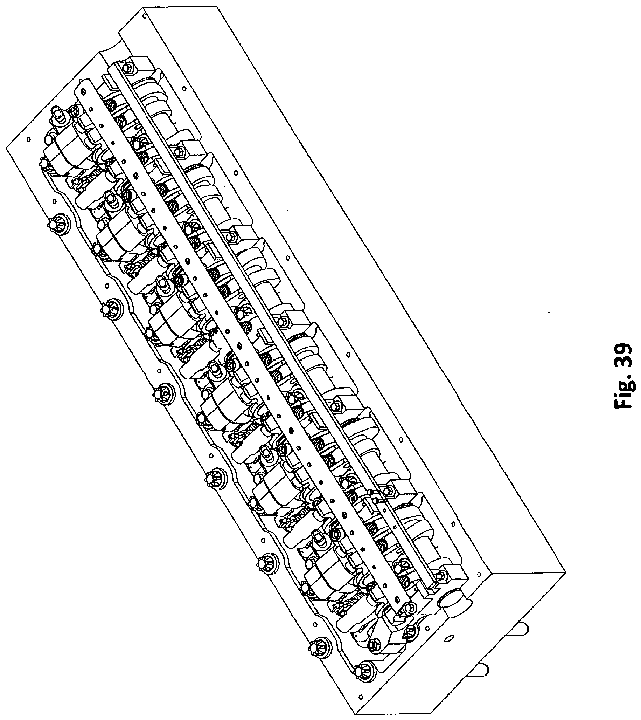

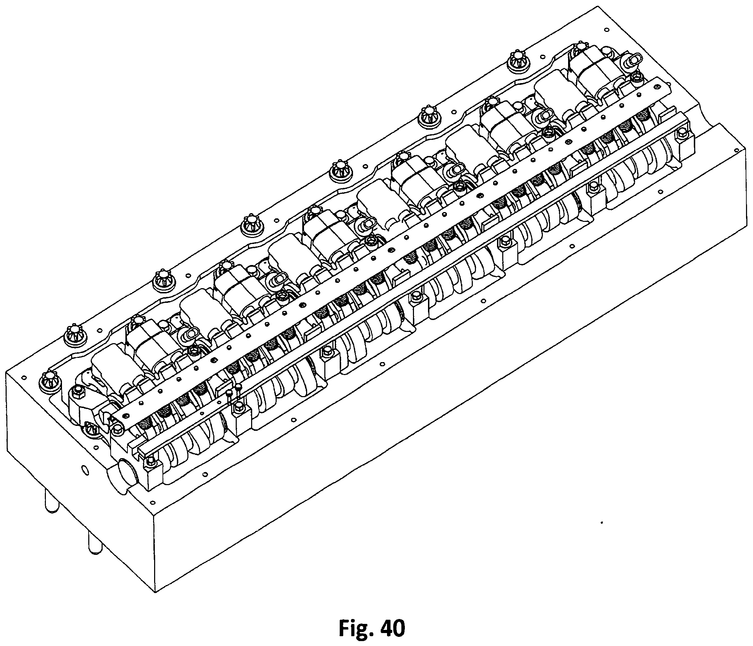

Zur Veranschaulichung der Systemintegration beim Einsatz der Ventilbetätigungseinrichtung gemäß den Ausführungsformen wird die Ventilbetätigungseinrichtungen 1 in den Fig. 37 bis Fig. 40 noch einmal montiert im Bereich der Motorzylinderköpfe 41 einer Verbrennungskraftmaschine mit sechs Motorzylindern dargestellt. Fig. 37 veranschaulicht hierbei eine Anordnung mit Ventilbetätigungseinrichtungen 1 der ersten Ausführungsform, Fig. 38 eine Anordnung mit Ventilbetätigungseinrichtungen 1 der zweiten Ausführungsform, Fig. 39 eine Anordnung mit Ventilbetätigungseinrichtungen 1 der dritten Ausführungsform und Fig. 40 eine Anordnung mit Ventilbetätigungseinrichtungen 1 der vierten Ausführungsform.

In diesen Darstellungen tritt die hohe Systemintegration der erfindungsgemäßen Ventilbetätigungseinrichtung 1 hervor, welche selbst mit zunehmender Systemkomplexität von der ersten bis zur fünften Ausführungsform unwesentlich mehr Komponenten und Bauraum erfordert.

Die erfindungsgemäße Ventilbetätigungseinrichtung kann sowohl bei Hubkolbenmaschinen, insbesondere Verbrennungskraftmaschinen bzw. Motoren, mit einer Nockenwelle 4, insbesondere mit einer oben liegenden Nockenwelle (OHC) als auch bei einem Motor mit zwei Nockenwellen, insbesondere mit zwei oben liegenden Nockenwellen 4, 71 (DOHC) zum Einsatz kommen.

Die im Vorhergehenden beschriebenen Ausführungsformen müssen dementsprechend an die veränderten Geometrien eines solchen Motors mit zwei Nockenwellen 4, 71 angepasst werden.

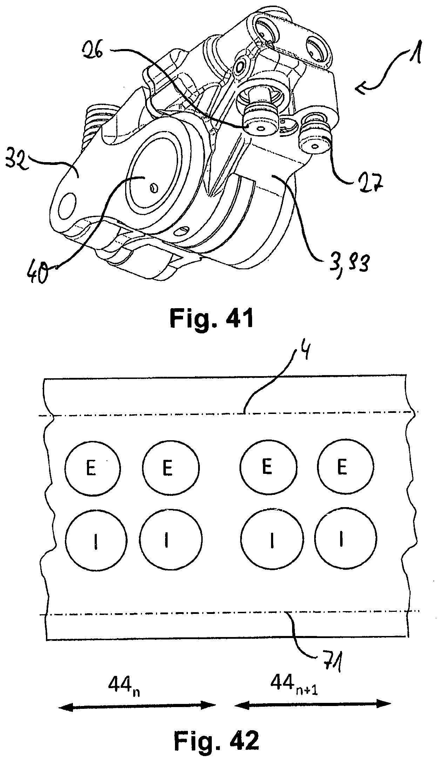

Figur 41 zeigt hierbei rein beispielhaft eine erfindungsgemäße Ventilbetätigungseinrichtung 1, bei welcher die beiden Anschläge 26, 27 im Wesentlichen nebeneinander parallel zur Achse einer ersten Nockenwelle 4 und/oder einer zweiten Nockenwelle 71 angeordnet sind.

Figur 42 stellt eine solche Geometrie der Anordnung der Auslassventile E bzw. der Einlassventile I an einer erfindungsgemäßen Verbrennungskraftmaschine beispielhaft dar.

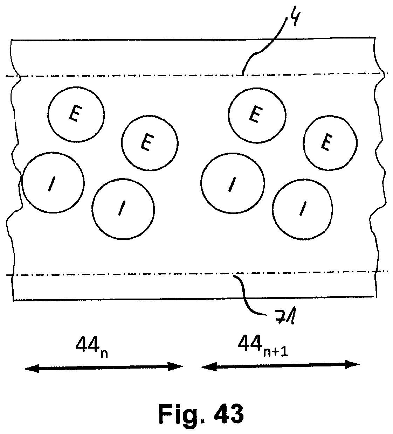

Fig. 43 stellt eine weitere Geometrie der Auslassventile E und der Einlassventile I einer anderen Ausführungsform einer erfindungsgemäßen Verbrennungskraftmaschine dar. Hierbei sind die jeweiligen Ventile, welche mittels einer erfindungsgemäßen Ventilbetätigungseinrichtung 1 betätigt werden in Paaren leicht versetzt angeordnet. Gegenüber der Ausführungsform aus Fig. 42 besteht hierbei der Vorteil, dass weniger Bauraum in Richtung der Achse der ersten Nockenwelle 4 bzw. der zweiten Nockenwelle 71 benötigt wird.

**Bezugszeichenliste**

| | |
|---|---|
| Ventilbetätigungseinrichtung | 1 |
| Erster Kipphebelteil | 2 |
| Zweiter Kipphebelteil | 3 |
| Erste Nockenwelle | 4 |
| Erstes Ventil | 5, 5a, 5b |
| Erstes Schaltelement | 6 |
| Zweites Schaltelement | 7 |
| Erster Kolben | 8 |
| Erster Zylinder | 9 |
| Zweiter Kolben | 10 |
| Zweiter Zylinder | 11 |
| Erste Rückschlagventilanordnung | 12 |
| Erster Hilfszylinder | 13 |
| Erster Hilfskolben | 14 |
| Betätigungselement | 15 |
| Erstes Sperrelement | 16 |
| Erste Verbindungsleitung | 17 |
| Brems-Nocken | 18 |
| Auslass-Nocken | 19 |
| Auslass-AGR-Nocken | 20 |
| Einlass-Nocken | 21 |
| Miller-Nocken | 22 |
| Einlass-AGR-Nocken | 23 |
| Ventilbrücke | 24 |
| Erstes Gelenk | 25a, 25b |
| Erster Anschlag | 26 |
| Zweiter Anschlag | 27 |
| Zweites Gelenk | 28a, 28b |
| Drittes Schaltelement | 29 |
| Dritter Kolben | 30 |
| Dritter Zylinder | 31 |
| Dritter Kipphebelteil | 32 |
| Vierter Kipphebelteil | 33 |
| Fünfter Kipphebelteil | 34 |
| Sechster Kipphebelteil | 35 |
| Viertes Schaltelement | 36 |
| Siebter Kipphebelteil | 37 |
| Achter Kipphebelteil | 38 |
| Fünftes Schaltelement | 39 |
| Kipphebelachse | 40 |
| Zylinderkopf | 41 |
| Erstes Vorspannungselement | 42 |
| Begrenzungselement | 43 |
| Motorzylinder | 44a, 44b, 44c, 44d, 44e, 44f |
| Zuleitung | 45a, 45b, 45c, 45d, 45e |
| Schmiermittelleitung | 46 |
| Schaltventil | 47, 47a, 47b, 47c, 47d, 47e, 47f, 47g |
| Zweites Ventil | 48, 48a, 48b |
| Dritte Rückschlagventilanordnung | 49 |
| Zweites Vorspannungselement | 50 |
| Fixierungsvorrichtung | 51 |
| Rolle | 52 |
| Erstes Halteelement | 53 |
| Erstes Schließkraftelement | 54 |
| Erstes Schließelement | 55 |
| Erstes Öffnungskraftelement | 56 |
| Zweite Verbindungsleitung | 57 |
| Ventilöffnung | 58a |
| Dritter Hilfszylinder | 59 |
| Dritter Hilfskolben | 60 |
| Drittes Öffnungskraftelement | 61 |
| Drittes Schließkraftelement | 62 |
| Erster Sperrkolben | 63 |
| Sperrzylinder | 64 |
| Begrenzungsnut | 65 |
| Große Erhebung | 66 |
| Kleine Erhebung | 67 |
| Zweite Rückschlagventilanordnung | 68 |
| Hochdruckraum | 69 |
| Hochdruckleitung | 70 |
| Zweite Nockenwelle | 71 |
| Verfahren zur Ventilsteuerung | 100 |
| Abgreifen einer ersten Bewegung | 101 |
| Bereitstellen eines Steuerimpulses | 102 |
| Selektives Zuleiten des Steuerimpulses | 103 |
| Übertragen der ersten Bewegung | 104 |
| Schließen einer ersten Rückschlagventilanordnung | 105 |
| Zuleiten des Steuerimpulses | 106 |
| Öffnen eines der ersten Ventile | 107 |
| Öffnen beider erster Ventile | 108 |
| Gleichzeitiges Betätigen | 109 |
| Abstoßen des zweiten Kippehebelteils | 110 |
| Abgreifen einer zweiten Bewegung | 111 |
| Selektives Zuleiten des Steuerimpulses | 112 |
| Übertragen der zweiten Bewegung | 113 |
| Selektives Zuleiten des Steuerimpulses | 115 |
| Abgreifen einer vierten Bewegung | 116 |
| Selektives Zuleiten des Steuerimpulses | 117 |
| Übertragen der Bewegung | 118 |
| Verfahren zur Ventilbetätigung | 200 |
| Erstes Öffnen | 201, 201a, 201b |
| Zweites Öffnen | 202, 202a, 202b |
| Erstes Schließen | 203, 203a, 203b |
| Zweites Schließen | 204, 204a, 204b |
| Drittes Öffnen | 205 |
| Ventilhub | H |
| Erster Winkel | α |
| Zweiter Winkel | β |
| Anschlüsse für Steuerleitungen | A, B |
| Druckanschluss | P |
| Rückflussanschluss | T |
| Einlassventilöffnungskurve | I, I1, I2 |
| Auslassventilöffnungskurve | E, E1, E2 |
| Dekompressionsphase | D1, D2 |
| Miller-Zyklus-Einlassventilöffnungskurve | M |
| AGR- Auslassventilöffnungskurve | AGR-E |
| Achse des ersten Zylinders | Ax1 |
| Achse des zweiten Zylinders | Ax2 |
| Erster Abstand | d1 |
| Zweiter Abstand | d2 |
| Spalt | S |

## Patentansprüche

1. Ventilbetätigungseinrichtung (1) zur Betätigung zumindest zweier erster Ventile einer Hubkolbenmaschine, aufweisend:
einen ersten Kipphebelteil (2),
einen zweiten Kipphebelteil (3), und
ein zwischen dem ersten Kipphebelteil (2) und dem zweiten Kipphebelteil (3) angeordnetes erstes Schaltelement (6) zur Veränderung des Ventilhubs (H) der zumindest zwei ersten Ventile (5; 5a, 5b), wobei der erste Kipphebelteil (2) und der zweite Kipphebelteil (3) schwenkbar gelagert sind und in der Weise angeordnet sind, dass zumindest eine erste Ventilsteuerungsbewegung von einer ersten Nockenwelle (4) über den ersten Kipphebelteil (2) und den zweiten Kipphebelteil (3) zu den zumindest zwei ersten Ventilen (5; 5a, 5b) übertragbar ist, wobei die Ventilbetätigungseinrichtung (1) ein zweites Schaltelement (7) aufweist, und
wobei der zweite Kipphebelteil (3) einen ersten Anschlag (26) und einen zweiten Anschlag (27) zur Betätigung jeweils wenigstens eines Ventils (5; 5a, 5b) der zumindest zwei ersten Ventile (5; 5a, 5b) aufweist, wobei der zweite Anschlag (27) durch das zweite Schaltelement (7) betätigbar ist.

2. Ventilbetätigungseinrichtung (1) nach Anspruch 1, wobei das zweite Schaltelement (7) derart ausgebildet ist, dass dessen Wirkrichtung im Wesentlichen parallel zur Bewegungsrichtung des Ventilhubs (H) des ersten Ventils ist.

3. Ventilbetätigungseinrichtung (1) nach einem der vorhergehenden Ansprüche, wobei das erste Schaltelement (6) einen ersten Kolben (8) und einen ersten Zylinder (9) und/oder das zweite Schaltelement (7) einen zweiten Kolben (10) und zweiten Zylinder (11) zur hydraulischen Ansteuerung aufweisen.

4. Ventilbetätigungseinrichtung (1) nach einem der vorhergehenden Ansprüche, wobei das erste Schaltelement (6) und/oder das zweite Schaltelement (7) an dem zweiten Kipphebelteil (3) angeordnet sind.

5. Ventilbetätigungseinrichtung (1) nach einem der vorhergehenden Ansprüche, wobei das erste Schaltelement (6) und das zweite Schaltelement (7) fluidkommunizierend, insbesondere über eine erste Verbindungsleitung (17), verbunden sind.

6. Ventilbetätigungseinrichtung (1) nach einem der vorhergehenden Ansprüche, wobei die erste Nockenwelle (4) in dem Bereich des Abgriffs der ersten Ventilsteuerungsbewegung durch den ersten Kipphebelteil (2) in der Weise ausgebildet ist, dass die Ventilhebungskurve des ersten Ventils (5) jener eines Auslassventils (E) im Bremsbetrieb, insbesondere als Brems-Nocken (18), im Motorbetrieb, insbesondere als Auslass-Nocken (19), oder im Abgasrückführungs-Betrieb, insbesondere als Auslass-AGR-Nocken (20), oder jener eines Einlassventils (I) im Motorbetrieb, insbesondere als Einlass-Nocken (21), im Miller-Zyklus-Betrieb, insbesondere als Miller-Nocken (22), oder im Abgasrückführungs-Betrieb, insbesondere als Einlass-AGR-Nocken (23), entspricht.

7. Ventilbetätigungseinrichtung (1) nach einem der vorhergehenden Ansprüche, des Weiteren eine Ventilbrücke (24) aufweisend, die zwischen zumindest zwei ersten Ventilen (5a, 5b) angeordnet ist und den zweiten Kipphebelteil (3) mit den ersten Ventilen (5a, 5b) wirkverbindet.

8. Ventilbetätigungseinrichtung (1) nach Anspruch 7, wobei die ersten Ventile (5a, 5b) über erste Gelenke (25a, 25b) mit der Ventilbrücke (24) wirkverbunden sind.

9. Ventilbetätigungseinrichtung (1) nach einem der Ansprüche 3 bis 8, wobei der zweite Kolben (10) des zweiten Schaltelements (7) eine größere Wirkfläche als der erste Kolben (8) des ersten Schaltelements (6) aufweist.

10. Ventilbetätigungseinrichtung (1) nach einem der vorhergehenden Ansprüche, wobei der zweite Anschlag (27) im Wesentlichen mittig an der Ventilbrücke angeordnet ist und/oder der erste Anschlag (26) im Wesentlichen über einem des zumindest einen ersten Ventils (5; 5a, 5b) angeordnet ist.

11. Ventilbetätigungseinrichtung (1) nach einem der vorhergehenden Ansprüche, wobei beide Anschläge (26, 27) an der Ventilbrücke (24) angreifen.

12. Ventilbetätigungseinrichtung nach einem der vorhergehenden Ansprüche, wobei der erste Anschlag (26) und/oder der zweite Anschlag (27) jeweils ein zweites Gelenk (28a, 28b) aufweist.

13. Verbrennungskraftmaschine, insbesondere mit einem Motorbremssystem, welche eine erste Nockenwelle (4) oder eine erste Nockenwelle (4) und eine zweite Nockenwelle (71) und zumindest eine Ventilbetätigungseinrichtung (1) gemäß einem der Ansprüche 1 bis 12 pro Motorzylinder (44a, 44b, 44c, 44d, 44e, 44f) aufweist.

14. Verbrennungskraftmaschine nach Anspruch 13, 44- wobei zumindest eine Zuleitung (45a, 45b, 45c, 45d, 45e) zur Übertragung von Steuerimpulsen zu dem ersten Schaltelement (6), dem zweiten Schaltelement (7), dem dritten Schaltelement (29), dem vierten Schaltelement (36) und/oder dem fünften Schaltelement (39) und/oder eine Schmiermittelleitung (46) durch die Kipphebelachse (40) verläuft.

15. Verbrennungskraftmaschine nach Anspruch 13 oder 14, wobei das Steuerfluid zur Steuerung zumindest des ersten Schaltelements (6) Schmiermittel ist und wobei die Verbrennungskraftmaschine an der zumindest einen Zuleitung (45a, 45b, 45c, 45d, 45e) eine zusätzliche Ölpumpe und/oder ein Rückschlagventil aufweist.

16. Verfahren zur Ventilbetätigung (200), zur Dekompressionsbremsung durch eine Hubkolbenmaschine oder einer Verbrennungskraftmaschine, wobei die Hubkolbenmaschine zumindest zwei erste Ventile (5a, 5b) aufweist, folgenden Schritte im Dekompressionsbremsbetrieb aufweisend:
Erstes Öffnen (201) der zumindest zwei ersten Ventile (5; 5a, 5b) der Hubkolbenmaschine in einer ersten Phase bei etwa 660°KW bis 30°KW, bevorzugt bei etwa 680°KW bis 10°KW und besonders bevorzugt bei etwa 690°KW bis 0°KW und/oder mit einem Ventilhub (H) von etwa 50% bis 100%, bevorzugt bei etwa 60% bis 90%, besonders bevorzugt bei etwa 70% bis 80% und am bevorzugtesten etwa 75% des maximalen Ventilhubs (H), wobei der Schritt des ersten Öffnens (201) folgende Unterschritte aufweist:
- Öffnen des einen ersten Ventils (5a) (201a) der zumindest zwei ersten Ventile (5a, 5b); und danach,
- Öffnen des anderen ersten Ventils (5b) (201b) der zumindest zwei ersten Ventile (5a, 5b); und
- Zweites Öffnen (202) zumindest eines ersten Ventils (5; 5a, 5b) der Hubkolbenmaschine in einer zweiten Phase bei etwa 300°KW bis 360°KW, bevorzugt bei etwa 320°KW bis 340°KW und besonders bevorzugt bei etwa 330°KW und/oder mit einem Ventilhub (H) von etwa 5% bis 25%, bevorzugt etwa 10% bis 20% und besonders bevorzugt etwa 15% des maximalen Ventilhubs (H).

17. Verfahren (200) nach Anspruch 16, wobei die Hubkolbenmaschine zumindest zwei erste Ventile (5a, 5b) aufweist und wobei die beiden ersten Ventile gleichzeitig betätigt werden.

18. Verfahren (200) nach Anspruch 16 oder 17, wobei das Öffnen des einen ersten Ventils (5a) bei etwa 660°KW bis 720°KW, bevorzugt bei etwa 680°KW bis 700°KW und besonders bevorzugt bei etwa 690°KW erfolgt und/oder das Öffnen des anderen ersten Ventils (5b) bei etwa 690°KW bis 30°KW, bevorzugt bei etwa 710°KW bis 10°KW und besonders bevorzugt bei 0°KW erfolgt.

19. Verfahren (200) nach einem der Ansprüche 16 bis 18, wobei der Schritt des ersten Schließens (203) folgende Unterschritte aufweist:
- Schließen des anderen ersten Ventils (5b) (203a); und danach,
- Schließen des einen ersten Ventils (5a) (203b).

20. Verfahren (200) nach Anspruch 19, wobei das Schließen des einen ersten Ventils (5a) bei etwa 180° KW bis 240° KW, bevorzugt bei etwa 200° KW bis 220° KW und besonders bevorzugt bei etwa 210°KW erfolgt und/oder das Schließen des anderen ersten Ventils (5b) bei etwa 150° KW bis 210° KW, bevorzugt bei etwa 170° KW bis 190° KW und besonders bevorzugt bei etwa 180°KW erfolgt.

21. Verfahren (200) nach einem der Ansprüche 16 bis 20, im Motorbetrieb des Weiteren den folgenden Schritt aufweisend:
- Drittes Öffnen (204) zumindest eines ersten Ventils (5; 5a, 5b) der Hubkolbenmaschine bei etwa 120°KW bis 180°KW, bevorzugt bei etwa 140°KW bis 160°KW und besonders bevorzugt bei etwa 150°KW.

## Claims

1. Valve actuating device (1) for actuating at least two first valves of a reciprocating engine, comprising:
a first rocker arm part (2),
a second rocker arm part (3), and
a first switching element (6) arranged between the first rocker arm part (2) and the second rocker arm part (3) for changing the valve lift (H) of the at least two first valves (5; 5a, 5b), the first rocker arm part (2) and the second rocker arm part (3) being pivotally mounted and arranged in such a way that at least a first valve control movement can be transmitted from a first camshaft (4) via the first rocker arm part (2) and the second rocker arm part (3) to the at least two first valves (5; 5a, 5b), the valve actuating device (1) having a second switching element (7), and
wherein the second rocker arm part (3) has a first stop (26) and a second stop (27) for actuating in each case at least one valve (5; 5a, 5b) of the at least two first valves (5; 5a, 5b), wherein the second stop (27) can be actuated by the second switching element (7).

2. Valve actuating device (1) according to claim 1, wherein the second switching element (7) is designed in such a way that its direction of action is substantially parallel to the direction of movement of the valve stroke (H) of the first valve.

3. Valve actuating device (1) according to one of the preceding claims, wherein the first switching element (6) comprises a first piston (8) and a first cylinder (9) and/or the second switching element (7) comprises a second piston (10) and second cylinder (11) for hydraulic actuation.

4. Valve actuating device (1) according to any one of the preceding claims, wherein the first switching element (6) and/or the second switching element (7) are arranged on the second rocker arm part (3).

5. Valve actuating device (1) according to one of the preceding claims, wherein the first switching element (6) and the second switching element (7) are connected in a fluid-communicating manner, in particular via a first connecting line (17).

6. Valve actuating device (1) according to one of the preceding claims, wherein the first camshaft (4) in the region of the tap of the first valve control movement by the first rocker arm part (2) is designed in such a way that the valve lifting curve of the first valve (5) is that of an exhaust valve (E) in braking operation, in particular as a brake cam (18), in engine operation, in particular as an exhaust cam (19), or in exhaust gas recirculation operation, in particular as an exhaust EGR cam (20), or that of an intake valve (I) in engine operation, in particular as an intake cam (21), in Miller cycle operation, in particular as a Miller cam (22), or in exhaust gas recirculation operation, in particular as an intake EGR cam (23).

7. Valve actuating device (1) according to any one of the preceding claims, further comprising a valve bridge (24) arranged between at least two first valves (5a, 5b) and operatively connecting the second rocker arm part (3) to the first valves (5a, 5b).

8. The valve actuating device (1) according to claim 7, wherein the first valves (5a, 5b) are operatively connected to the valve bridge (24) via first joints (25a, 25b).

9. Valve actuating device (1) according to any one of claims 3 to 8, wherein the second piston (10) of the second switching element (7) has a larger effective area than the first piston (8) of the first switching element (6).

10. Valve actuating device (1) according to any one of the preceding claims, wherein the second stop (27) is arranged substantially centrally on the valve bridge and/or the first stop (26) is arranged substantially above one of the at least one first valve (5; 5a, 5b).

11. Valve actuating device (1) according to one of the preceding claims, wherein both stops (26, 27) engage the valve bridge (24).

12. A valve actuator according to any one of the preceding claims, wherein the first stop (26) and/or the second stop (27) each comprises a second joint (28a, 28b).

13. Internal combustion engine, in particular with an engine braking system, which has a first camshaft (4) or a first camshaft (4) and a second camshaft (71) and at least one valve actuating device (1) according to one of claims 1 to 12 per engine cylinder (44a, 44b, 44c, 44d, 44e, 44f).

14. Internal combustion engine according to claim 13, wherein at least one supply line (45a, 45b, 45c, 45d, 45e) for transmitting control pulses to the first switching element (6), the second switching element (7), the third switching element (29), the fourth switching element (36) and/or the fifth switching element (39) and/or a lubricant line (46) runs through the rocker arm shaft (40).

15. Internal combustion engine according to claim 13 or 14 wherein the control fluid for controlling at least the first switching element (6) is lubricant and wherein the internal combustion engine comprises an additional oil pump and/or a check valve at the at least one supply line (45a, 45b, 45c, 45d, 45e).

16. A method of valve actuation (200) for decompression braking by a reciprocating engine or an internal combustion engine, the reciprocating engine having at least two first valves (5a, 5b), comprising the following steps in decompression braking operation:
first opening (201) of the at least two first valves (5; 5a, 5b) of the reciprocating engine in a first phase at about 660°crank angle to 30°crank angle, preferably at about 680°crank angle to 10°crank angle and most preferably at about 690°crank angle to 0°crank angle and/or with a valve lift (H) of about 50% to 100%, preferably at about 60% to 90%,most preferably at about 70% to 80% and most preferably about 75% of the maximum valve lift (H), wherein the step of first opening (201) comprises the following substeps:
- opening the one first valve (5a) (201a) of the at least two first valves (5a, 5b); and thereafter,
- opening the other first valve (5b) (201b) of the at least two first valves (5a, 5b); and
- second opening (202) of at least a first valve (5; 5a, 5b) of the reciprocating engine in a second phase at about 300°crank angle to 360°crank angle, preferably at about 320°crank angle to 340°crank angle and particularly preferably at about 330°crank angle and/or with a valve lift (H) of about 5% to 25%, preferably about 10% to 20% and particularly preferably about 15% of the maximum valve lift (H).

17. The method (200) of claim 16, wherein the reciprocating engine comprises at least two first valves (5a, 5b), and wherein the two first valves are actuated simultaneously.

18. The method (200) of claim 16 or 17, wherein opening of the one first valve (5a) occurs at about 660°crank angle to 720°crank angle, preferably at about 680°crank angle to 700°crank angle, and particularly preferably at about 690°crank angle, and/or opening of the other first valve (5b) occurs at about 690°crank angle to 30°crank angle, preferably at about 710°crank angle to 10°crank angle, and particularly preferably at 0°crank angle.

19. The method (200) of any one of claims 16 to 18, wherein the step of first closing (203) comprises the following substeps:
- closing the other first valve (5b) (203a); and thereafter,
- closing the one first valve (5a) (203b).

20. The method (200) of claim 19, wherein closing of the one first valve (5a) occurs at about 180° crank angle to 240° crank angle, preferably at about 200° crank angle to 220° crank angle and particularly preferably at about 210°crank angle and/or closing of the other first valve (5b) occurs at about 150° crank angle to 210° crank angle, preferably at about 170° crank angle to 190° crank angle and particularly preferably at about 180°crank angle.

21. The method (200) of any one of claims 16 to 20, in engine operation further comprising the step of:
- third opening (204) of at least a first valve (5; 5a, 5b) of the reciprocating engine at about 120°crank angle to 180°crank angle, preferably at about 140°crank angle to 160°crank angle and particularly preferably at about 150°crank angle.

## Revendications

1. Dispositif d'actionnement de soupape (1) destiné à actionner au moins deux premières soupapes d'un moteur à pistons alternatifs, comprenant :
une première partie de culbuteur (2),
une deuxième partie de culbuteur (3), et
un premier élément de commutation (6) disposé entre la première partie de culbuteur (2) et la deuxième partie de culbuteur (3) pour modifier la course de soupape (H) des au moins deux premières soupapes (5 ; 5a, 5b), dans lequel la première partie de culbuteur (2) et la deuxième partie de culbuteur (3) sont montées de manière à pouvoir pivoter et sont disposées de sorte qu'au moins un premier mouvement de commande de soupape peut être transmis d'un premier arbre à cames (4) aux au moins deux premières soupapes (5 ; 5a, 5b) par l'intermédiaire de la première partie de culbuteur (2) et de la deuxième partie de culbuteur (3), dans lequel le dispositif d'actionnement de soupape (1) présente un deuxième élément de commutation (7), et
dans lequel la deuxième partie de culbuteur (3) présente une première butée (26) et une deuxième butée (27) pour actionner respectivement au moins une soupape (5 ; 5a, 5b) des au moins deux premières soupapes (5 ; 5a, 5b), dans lequel la deuxième butée (27) peut être actionnée par le deuxième élément de commutation (7).

2. Dispositif d'actionnement de soupape (1) selon la revendication 1, dans lequel le deuxième élément de commutation (7) est réalisé de telle manière que son sens d'action est sensiblement parallèle au sens de déplacement de la course de soupape (H) de la première soupape.

3. Dispositif de commande de soupape (1) selon l'une quelconque des revendications précédentes, dans lequel le premier élément de commutation (6) présente un premier piston (8) et un premier cylindre (9) et/ou le deuxième élément de commutation (7) présente un deuxième piston (10) et un deuxième cylindre (11) pour le pilotage hydraulique.

4. Dispositif de commande de soupape (1) selon l'une quelconque des revendications précédentes, dans lequel le premier élément de commutation (6) et/ou le deuxième élément de commutation (7) sont disposés sur la deuxième partie de culbuteur (3).

5. Dispositif de commande de soupape (1) selon l'une quelconque des revendications précédentes, dans lequel le premier élément de commutation (6) et le deuxième élément de commutation (7) sont raccordés en communication fluidique, en particulier par l'intermédiaire d'une première conduite de raccordement (17).

6. Dispositif d'actionnement de soupape (1) selon l'une quelconque des revendications précédentes, dans lequel le premier arbre à cames (4) est réalisé dans la zone du prélèvement du premier mouvement de commande de soupape par la première partie de culbuteur (2) de sorte que la courbe de levée de soupape de la première soupape (5) correspond à celle d'une soupape d'échappement (E) en mode de freinage, en particulier en tant que came de frein (18), en mode moteur, en particulier en tant que came d'échappement (19), ou en mode de recyclage des gaz d'échappement, en particulier en tant que came d'échappement RGE (20), ou à celle d'une soupape d'admission (I) en mode moteur, en particulier en tant que came d'admission (21), en mode de fonctionnement par cycles Miller, en particulier en tant que came Miller (22), ou en mode de recyclage des gaz d'échappement, en particulier en tant que came d'admission RGE (23).

7. Dispositif d'actionnement de soupape (1) selon l'une quelconque des revendications précédentes, présentant par ailleurs un pontet de soupapes (24), qui est disposé entre au moins deux premières soupapes (5a, 5b) et qui fait coopérer la deuxième partie de culbuteur (3) aux premières soupapes (5a, 5b).

8. Dispositif d'actionnement de soupape (1) selon la revendication 7, dans lequel les premières soupapes (5a, 5b) coopèrent avec le pontet de soupapes (24) par l'intermédiaire de premières articulations (25a, 25b).

9. Dispositif d'actionnement de soupape (1) selon l'une quelconque des revendications 3 à 8, dans lequel le deuxième piston (10) du deuxième élément de commutation (7) présente une surface active plus grande que le premier piston (8) du premier élément de commutation (6).

10. Dispositif d'actionnement de soupape (1) selon l'une quelconque des revendications précédentes, dans lequel la deuxième butée (27) est disposée sensiblement au centre sur le pontet de soupapes et/ou la première butée (26) est disposée sensiblement au-dessus d'une des premières soupapes (5 ; 5a, 5b).

11. Dispositif d'actionnement de soupape (1) selon l'une quelconque des revendications précédentes, dans lequel les deux butées (26, 27) s'engagent sur le pontet de soupapes (24).

12. Dispositif d'actionnement de soupape selon l'une quelconque des revendications précédentes, dans lequel la première butée (26) et/ou la deuxième butée (27) présentent respectivement une deuxième articulation (28a, 28b).

13. Moteur à combustion interne, en particulier avec un système de frein moteur, lequel présente un premier arbre à cames (4) ou un premier arbre à cames (4) et un deuxième arbre à cames (71) et au moins un dispositif d'actionnement de soupape (1) selon l'une quelconque des revendications 1 à 12 par cylindre moteur (44a, 44b, 44c, 44d, 44e, 44f).

14. Moteur à combustion interne selon la revendication 13, dans lequel au moins une conduite d'arrivée (45a, 45b, 45c, 45d, 45e) de transmission d'impulsions de commande s'étend vers le premier élément de commutation (6), le deuxième élément de commutation (7), le troisième élément de commutation (29), le quatrième élément de commutation (36) et/ou le cinquième élément de commutation (39) et/ou une conduite de lubrifiant (46) s'étend à travers l'axe de culbuteur (40).

15. Moteur à combustion interne selon la revendication 13 ou 14, dans lequel le fluide de commande destiné à commander au moins le premier élément de commutation (6) est du lubrifiant et dans lequel le moteur à combustion interne présente sur l'au moins une conduite d'arrivée (45a, 45b, 45c, 45d, 45e) une pompe à huile supplémentaire et/ou une soupape antiretour.

16. Procédé d'actionnement de soupape (200), pour le freinage par décompression par un moteur à pistons alternatifs ou un moteur à combustion interne, dans lequel le moteur à pistons alternatifs présente au moins deux premières soupapes (5a, 5b), lequel procédé présente les étapes suivantes en mode de freinage par décompression :
la première ouverture (201) des au moins deux premières soupapes (5 ; 5a, 5b) du moteur à pistons alternatifs lors d'une première phase à environ 660 °angle du vilebrequin à 30 °angle du vilebrequin, de manière préférée à environ 680 °angle du vilebrequin à 10 °angle du vilebrequin et de manière particulièrement préférée à environ 690 °angle du vilebrequin à 0 °angle du vilebrequin et/ou avec une levée de soupape (H) d'environ 50 % à 100 %, de manière préférée de l'ordre d'environ 60 % à 90 %, de manière particulièrement préférée de l'ordre d'environ 70 % à 80 % et idéalement d'environ 75 % de la levée de soupape maximale (H), dans lequel l'étape de la première ouverture (201) présentant les sous-étapes suivantes :
- l'ouverture d'une première soupape (5a) (201a) des au moins deux premières soupapes (5a, 5b), puis
- l'ouverture de l'autre première soupape (5b) (201b) des au moins deux premières soupapes (5a, 5b), et
la deuxième ouverture (202) d'au moins une première soupape (5 ; 5a, 5b) du moteur à pistons alternatifs lors d'une deuxième phase de l'ordre d'environ 300 °angle du vilebrequin à 360 °angle du vilebrequin, de manière préférée de l'ordre d'environ 320 °angle du vilebrequin à 340 °angle du vilebrequin et de manière particulièrement préférée de l'ordre d'environ 330 °angle du vilebrequin et/ou avec une levée de soupape (H) d'environ 5 % à 25 %, de manière préférée d'environ 10 % à 20 % et de manière particulièrement préférée d'environ 15 % de la levée de soupape maximale (H).

17. Procédé (200) selon la revendication 16, dans lequel le moteur à pistons alternatifs présente au moins deux premières soupapes (5a, 5b) et dans lequel les deux premières soupapes sont actionnées simultanément.

18. Procédé (200) selon la revendication 16 ou 17, dans lequel l'ouverture d'une première soupape (5a) s'effectue à environ 660 °angle du vilebrequin à 720 °angle du vilebrequin, de manière préférée à environ 680 °angle du vilebrequin à 700 °angle du vilebrequin et de manière particulièrement préférée à environ 690 °angle du vilebrequin et/ou l'ouverture de l'autre première soupape (5b) s'effectue à environ 690 °angle du vilebrequin à 30 °angle du vilebrequin, de manière préférée à environ 710 °angle du vilebrequin à 10 °angle du vilebrequin et de manière particulièrement préférée à 0 °angle du vilebrequin.

19. Procédé (200) selon l'une quelconque des revendications 16 à 18, dans lequel l'étape de la première fermeture (203) présente les sous-étapes suivantes :
- la fermeture de l'autre première soupape (5b) (203a), puis
- la fermeture d'une première soupape (5a) (203b).

20. Procédé (200) selon la revendication 19, dans lequel la fermeture d'une première soupape (5a) s'effectue à environ 180° angle du vilebrequin à 240° angle du vilebrequin, de manière préférée à environ 200° angle du vilebrequin à 220° angle du vilebrequin et de manière particulièrement préférée à environ 210° angle du vilebrequin et/ou la fermeture de l'autre première soupape (5b) s'effectue à environ 150° angle du vilebrequin à 210° angle du vilebrequin, de manière préférée à environ 170° angle du vilebrequin à 190° angle du vilebrequin et de manière particulièrement préférée à environ 180° angle du vilebrequin.

21. Procédé (200) selon l'une quelconque des revendications 16 à 20, présentant en outre en mode moteur l'étape suivante :
- troisième ouverture (204) d'au moins une première soupape (5 ; 5a, 5b) du moteur à pistons alternatifs à environ 120° angle du vilebrequin à 180 °angle du vilebrequin, de manière préférée à environ 140° angle du vilebrequin à 160° angle du vilebrequin et de manière particulièrement préférée à environ 150° angle du vilebrequin.
